# EUROPEAN PATENT APPLICATION

(11) **EP 1 679 896 A1**
(43) Date of publication of application: **12.07.2006**
(21) Application number: 04792273.7
(22) Date of filing: 12.10.2004
(51) Int. Cl.: H04N 7/173

(54) **META DATA ACCESS CONTROL SYSTEM, METHOD THEREOF, RECEPTION DEVICE, AND TRANSMISSION DEVICE**

(30) Priority: 09.10.2003 JP 2003351401; 11.11.2003 JP 2003381831; 21.11.2003 JP 2003393077
(71) Applicant: MATSUSHITA ELECTRIC INDUSTRIAL CO., LTD., Kadoma-shi, Osaka 571-8501 (JP)
(72) Inventor: TOMIOKA, Yoshiaki Matsushita Electric Ind.Co.Ltd., Chuo-ku Osaka-shi Osaka 540-6319 (JP); TAKEUCHI, Yoshiyasu Matsushita Elect. Ind.Co.Ltd., Chuo-ku Osaka-shi Osaka 540-6319 (JP); KAWAGUCHI, Toru Matsushita Electric Ind.Co.Ltd., Chuo-ku Osaka-shi Osaka 540-6319 (JP); SAITO, Yutaka Matsushita Electric Ind.Co.Ltd., Chuo-ku Osaka-shi Osaka 540-6319 (JP); KASAHARA, Hiroshi Matsushita Electric Ind.Co.Ltd., Chuo-ku Osaka-shi Osaka 540-6319 (JP)
(74) Representative: Pautex Schneider, Nicole Véronique
(86) International application number: PCT/JP2004/015029
(87) International publication number: WO 2005/046238

(57) **Abstract**

A system and method is provided to prevent a content from being used by meta data unauthorized by a source of the content. In the system, a meta data verifier verifies meta data. A content verifier verifies a content and a source of the content. A meta data access control information verifier verifies meta data access control information that indicates a relationship between a content and meta data that is permitted to access the content and also verifies a publisher of the meta data access control information. A meta data determinator determines whether or not the publisher of the meta data access control information is trusted by the source of the content and determines whether or not the meta data is reliable. When it is determined that the meta data is reliable, meta data using means allows use of the meta data.

## Description

### BACKGROUND OF THE INVENTION

### Field of the Invention

The present invention relates to a meta data access control system and method thereof, which performs access or storage control of content using meta data for controlling the content, and a reception device and transmission device using the same.

### Description of the Related Art

Recently, along with the introduction of digital broadcasting, multi-channel broadcasting has been performed to allow viewers to receive content containing lots of programs. As high speed Internet environments such as ADSL or FTTH have come into widespread use, not only services for distributing audio content such as music but also services for distributing moving image content through streaming or downloading have been increasingly used.

Thus, the range of content selectable by users has been increased. Meta data can be assigned and transmitted as attribute information of content in environments in which server-based broadcasting or TV anytime specifications can be realized. Using the meta data allows users not only to easily select desired content through navigation to the content or through searching Electronic Content Guide (ECG) for the content but also to enjoy the entirety of content in a short time through watching highlights of the content or through navigation to specific scenes of the content. Use of meta data such as one for watching highlights in addition to simple use of the content has created a new usage of the content and has increased the worth of the meta data. Service providers other than content providers can also create and provide meta data. This leads to the introduction of a new business of "providing meta data for use with content".

One example of the technology for assigning and transmitting meta data as attribute information of content is described in Japanese Patent Application Publication No. 2003-204308 (hereinafter, referred to as a first patent document).

Content sources (or providers) can increase the value of content by assigning meta data to the content. Anybody can create and distribute content or meta data in environments in which broadcasting or communication such as server-based broadcasting or TV Anytime broadcasting can be used. As a result, persons other than the source (or provider) of content can create meta data of the content and distribute the meta data at a different time and via a different route from those of the content.

In such situations, meta data may be freely assigned to content provided by the source (or provider) of the content. However, this may cause misuse of the content. That is, the content may be used for purposes contrary to the content provider. For example, one may create and distribute meta data for watching highlights of content to freely skip commercials of the content. This makes it difficult to accomplish a new business of obtaining benefits from a meta data publisher, which provides services using content provided by a content source, rather than giving the meta data publisher permission to use the content.

To overcome these problems, the technology described in the first patent document determines whether or not a reception device is permitted to use meta data, based on the level of reliability associated with the meta data.

A content storage control service system, in which content is automatically stored in a reception device of a user according to a storage control command from a center, is described, for example, in Japanese Patent Application Publication No. 2000-278618 (hereinafter, referred to as a second patent document). A system, in which a service provider sets personal attributes of a viewer to a reception device and a service suitable for the user is automatically selected and provided to the user based on the attributes, is described, for example, in Japanese Patent Application Publication No. H10 (or 1999)-75219 (hereinafter, referred to as a third patent document). A method for restricting watching of stored content is described, for example, in Japanese Patent Application Publication No. 2001-128130 (hereinafter, referred to as a fourth patent document). In this method, the center transmits watching control information, together with content, to the reception device so that playback of the content is controlled according to the watching control information.

As is known in the art, a data broadcast technology can be used to display information of a link to the Internet in conjunction with broadcast data (i.e., content). One example of this method is described in the fourth patent document. In this method, the transmitting side broadcasts content (i.e., broadcast data) after incorporating commercial links (i.e., link information) into the broadcast data and the receiving side extracts commercial links from the broadcast data and downloads commercial data specified by the commercial links over the network.

However, the method described in the first patent document is based only on the reliability of the meta data, so that the reception device can use any meta data once it has determined that the meta data is reliable. This reliability is not associated with the content provider. Thus, even when a third party not associated with the provider of content has created and distributed reliable meta data trusted by a certificate authority, the reception device can use the meta data for the content. Accordingly, this method cannot prevent unauthorized use of the content through the meta data created by the third party.

The methods described in the second to fourth patent documents also have the following problems. The user can store most content due to both the introduction of a recording control service such as automatic user-adaptive recording and the increased capacity of a hard disk drive (HDD). Thus, the user may view most content by recording and reproducing it rather than viewing it in real time. That is, the user can watch the content any number of times and can almost permanently store the content and can also skip commercials. This makes it difficult to maintain a commercials business and a licensing agreement with a content holder (i.e., content owner) in the current real time broadcasting.

Thus, it is necessary for the service provider to specify a playback condition of broadcast content applied when the user reproduces the content so as to protect the commercial business and the agreement with the content holder.

However, the existing rights of users to freely reproduce and view broadcast content for their personal purposes must also be taken into consideration. Users will not accept the demand for limiting all their existing rights.

On the other hand, information specifying any address on the Internet can be used as the link information. However, not only link information offensive to public order and morals but also link information that causes damage to the user may be displayed. Link information unfit for the content from the viewpoint of the broadcast provider may also be displayed. For example, when content for introducing products is reproduced, link information for introducing relevant products of a rival company may be displayed. This decreases the value of the content and damages the business model.

Thus, there is a need to implement a mechanism which allows only link information authorized by the broadcast provider to be displayed in conjunction with playback of content through the Internet. Also, there is a need to provide a mechanism that protects link information authorized by the broadcast provider against unauthorized alteration or falsification. However, the prior art cannot accomplish these mechanisms.

Also, the prior art cannot ensure that the reception device uses content according to content use conditions intended by the content source.

### SUMMARY OF THE INVENTION

Therefore, the present invention has been made in view of the above problems, and it is an object of the present invention to provide a meta data access control system and method and a reception device and transmission device using the same, which can accomplish a mechanism in which a method for the reception device to use content is controlled according to access control information in which a content use condition intended by the provider of the content is written.

In accordance with one aspect of the present invention, the above and other objects can be accomplished by the provision of a content receiver (or receiving device) that performs meta data access control, the content receiver including a meta data verifier that verifies meta data, a meta data access control information verifier that verifies meta data access control information, a content verifier that verifies content, and a meta data determinator that determines whether or not the meta data can be used.

In accordance with another aspect of the present invention, there is provided a meta data access control system including a meta data transmission device including a meta data verification information adder that adds meta data verification information to meta data; a content transmission device including a content verification information adder that adds content verification information to content; a meta data access control information transmission device including a meta data access control information verification information adder that adds meta data access control information verification information to meta data access control information; and a content receiver including a meta data verifier that verifies meta data, a meta data access control information verifier that verifies meta data access control information, a content verifier that verifies content, and a meta data determinator that determines whether or not meta data can be used.

In accordance with another aspect of the present invention, there is provided a meta data access control service system including a content provision device, a storage control service providing device, and a content acquirer, wherein the content provision device provides content and authorizes storage control information received from the storage control service providing device, the storage control service providing device transmits storage control information used to store content in the content acquirer to the content acquirer, and the content acquirer stores the content provided by the content provision device according to the storage control information acquired from the storage control service providing device only when the storage control information has been authorized by the content provision device. This maintains the rights of a service provider that provides a service such as a content providing service.

In accordance with another aspect of the present invention, there is provided a meta data access control service system applied when content is stored according to storage control information, the system including a content provision device, a content acquirer, and a content player, wherein the content provision device authorizes storage control information after adding playback control information to the storage control information, the content acquirer stores content together with playback control information when the playback control information has been added to storage control information acquired from the storage control service providing device, and the content player reproduces content according to playback control information when the content has been stored together with the playback control information. This maintains the right of a broadcast provider that provides content.

In accordance with another aspect of the present invention, there is provided a meta data access control service system including a content provision device and a content acquirer, wherein the content provision device authorizes storage control information received from a storage control service providing device after adding playback control information ID to the storage control information and provides playback control information to the content acquirer, and the content acquirer acquires playback control information corresponding to playback control information ID added to storage control information acquired from the storage control service providing device and stores content together with the acquired playback control information. This allows efficient use of a band for communication between the service provider and the receiving device.

In accordance with another aspect of the present invention, there is provided a meta data access control service system applied when content suited to personal attributes or preferences of the user is recorded and stored, the system including a content provision device that stores content together with playback control information corresponding to the content if it has received the playback control information corresponding to the content. This maintains the right of the broadcast provider and also makes it possible to store content suited to the preferences of the user.

In accordance with another aspect of the present invention, there is provided a link information authentication system including a content provision device that broadcasts content via a broadcast network, a content receiving device (also referred to as a "content receiver" for short) that receives and reproduces the content from the content provision device, and a link information providing device that provides the content receiving device with link information to be displayed at the same time as when the content is reproduced in the content receiving device. The link information providing device includes a link information generator that generates link information specifying a specific link destination, a link information communicator that transmits the link information to the content provision device and receives signed link information, to which a digital signature has been applied (or assigned), from the content provision device, and a signed link information provider that provides the signed link information to the content receiving device. The content provision device includes a link information communicator, a content manager, a certificate generator, a signature means, a broadcaster, and a certificate transmission device. The link information communicator receives the link information from the link information providing device and transmits the signed link information to the link information providing device. The content manager manages the content that is broadcast to the content receiving device. The certificate generator generates a certificate corresponding to the content that is managed in the content manager. The signature means applies a digital signature to the link information received from the link information providing device using the certificate generated by the certificate generator, thereby generating signed link information. The broadcaster broadcasts the content managed in the content manager to the content receiving device via the broadcast network. The certificate transmission device transmits the certificate corresponding to the content generated by the certificate generator to the content receiving device. The content receiving device includes a broadcast receiver, a certificate reception device, a link information reception device, a link information manager, a link information searcher, a signature authenticator, a content player, and a link information displayer. The broadcast receiver receives the content from the content provision device via the broadcast network. The link information reception device receives the signed link information from the link information providing device. The link information manager manages the signed link information received through the link information reception device. The link information searcher searches the link information manager for signed link information including the link information that is associated with the content received through the broadcast receiver. The signature authenticator verifies a digital signature of the signed link information found by the link information searcher using the certificate received through the certificate reception device. When the digital signature of the signed link information has been authenticated, the signature authenticator determines that the link information of the signed link information is valid. The content player reproduces the content received through the broadcast receiver. The link information displayer displays the link information, which has been determined to be valid by the signature authenticator, at the same time as when the content player reproduces the content. That is, if it is determined that link information associated with content to be reproduced is valid, the content receiving device displays the link information at the same time as when the content is reproduced.

In this link information authentication system, the content receiving device verifies link information authorized by the broadcast provider, and, only when the link information has been authenticated as valid link information, the content receiving device allows the valid link information to be displayed at the same time as when the content is reproduced.

The present invention provides a system and method which ensures that a method for the receiving device (or receiving terminal) to use content is controlled according to access control information in which a content use condition intended by the content provider is written. That is, the present invention ensures that content is used according to its use condition intended by the content provider, thereby maintaining the right of the content provider.

### BRIEF DESCRIPTION OF THE DRAWINGS

FIG. 1 is a block diagram of a meta data access control system according to the present invention, which illustrates the overview of the present invention;
FIG. 2 illustrates an example of meta data used for playback control in the system of FIG. 1;
FIG. 3 illustrates an example of meta data (written in XML) used for playback control in the system of FIG. 1;
FIG. 4 is a block diagram of a meta data access control system according to a first embodiment of the present invention;
FIG. 5 illustrates meta data, to which a digital signature has been applied, in the first embodiment;
FIG. 6 illustrates an example of meta data access control information in the first embodiment;
FIG. 7 illustrates the contents of associated content information that is an element of the meta data access control information in the first embodiment;
FIG. 8 illustrates the contents of associated meta data information that is another element of the meta data access control information in the first embodiment;
FIG. 9 illustrates the overview of a license in the first embodiment;
FIG. 10 is a process diagram illustrating how a reception device operates in the first embodiment;
FIG. 11 illustrates an example of the meta data access control information in the first embodiment;
FIG. 12 illustrates the contents of multipart content and a content header in the first embodiment;
FIG. 13 illustrates how a content source is confirmed based on SDT and BIT of PSI/SI in the first embodiment.
FIG. 14 is a block diagram of a meta data access control system according to a second embodiment of the present invention;
FIG. 15 illustrates an example of the meta data access control information in the second embodiment;
FIG. 16 is a block diagram of a meta data access control system according to a third embodiment of the present invention;
FIG. 17 illustrates an example of the meta data access control information in the third embodiment;
FIG. 18 illustrates the entire configuration of a content recording control service system according to a fourth embodiment of the present invention;
FIG. 19 is a block diagram of a content provision device in a broadcast provider according to the fourth and fifth embodiments of the present invention;
FIG. 20 is a block diagram of a recording control service provision device in a recording control service provider according to the fourth and eighth embodiments of the present invention;
FIG. 21 is a block diagram of a receiving terminal in the fourth embodiment of the present invention;
FIG. 22 illustrates an example of personal attribute data in the fourth to eighth embodiments of the present invention;
FIG. 23 illustrates an example of recording control information in the fourth to eighth embodiments of the present invention;
FIG. 24 illustrates an example of a playback condition of each recording control service provider in the fourth, fifth and eighth embodiments of the present invention;
FIG. 25 illustrates an example of a playback condition list in the fourth to eighth embodiments of the present invention;
FIG. 26 illustrates an example of a playback condition of each content item in the fourth to eighth embodiments of the present invention;
FIG. 27 illustrates an example of a playback condition acquired by a recording terminal in the fourth to eighth embodiments of the present invention;
FIG. 28 illustrates an example data format of the recording control service information in the fourth, fifth, and eighth embodiments of the present invention;
FIG. 29 is a flowchart illustrating how content is selected in the fourth to eighth embodiments of the present invention;
FIG. 30 illustrates an example of a recording schedule management list in the fourth to eighth embodiments of the present invention;
FIG. 31 illustrates an example of a stored content management list in the fourth to eighth embodiments of the present invention;
FIG. 32 illustrates the entire configuration of a content recording control service system according to the fifth embodiment of the present invention;
FIG. 33 is a block diagram of a recording control service provision device in the recording control service provider in the fifth embodiment of the present invention;
FIG. 34 is a block diagram of a receiving terminal in the fifth embodiment of the present invention;
FIG. 35 is a block diagram of a dealer in the fifth embodiment of the present invention;
FIG. 36 is the entire configuration of a content recording control service system in the sixth embodiment of the present invention;
FIG. 37 is a block diagram of a content provision device in the broadcast provider in the sixth and seventh embodiments of the present invention;
FIG. 38 is a block diagram of a recording control service provision device in the recording control service provider in the sixth embodiment of the present invention;
FIG. 39 is a block diagram of a receiving terminal in the sixth embodiment of the present invention;
FIG. 40 illustrates an example data format of receiving control information in the sixth embodiment of the present invention;
FIG. 41 illustrates an example data format of a playback condition in the sixth embodiment of the present invention;
FIG. 42 illustrates the entire configuration of a content storage control service system in the seventh embodiment of the present invention;
FIG. 43 is a block diagram of a receiving terminal in the seventh embodiment of the present invention;
FIG. 44 illustrates the entire configuration of a content recording control service system in the eighth embodiment of the present invention;
FIG. 45 is a block diagram of a content provision device in the content provider in the eighth embodiment of the present invention;
FIG. 46 is a block diagram of a receiving terminal in the eighth embodiment of the present invention;
FIG. 47 is a block diagram of a license issuing device in a license provider in the eighth embodiment of the present invention;
FIG. 48 illustrates an example data format of recording control service information in the eighth embodiment of the present invention;
FIG. 49 illustrates an example data format of a license ticket in the eighth embodiment of the present invention;
FIG. 50 illustrates the entire configuration of a link information authentication system according to a ninth embodiment of the present invention;
FIG. 51 is a block diagram of a content provision device included in a broadcast provider in the link information authentication system in the ninth embodiment of the present invention;
FIG. 52 is a block diagram of a link information providing device included in an ISP in the link information authentication system in the ninth embodiment of the present invention;
FIG. 53 is a block diagram of a link information authentication device included in a reception device in the link information authentication system in the ninth embodiment of the present invention;
FIG. 54 is a sequence diagram illustrating how the content provision device and the link information providing device in the link information authentication system in the ninth embodiment of the present invention operate until the broadcast provider applies a signature to link information generated by the ISP;
FIG. 55 is a sequence diagram illustrating how the content provision device, the link information providing device, and the link information authentication device in the link information authentication system in the ninth embodiment of the present invention operate until the link information authentication device searches for link information that can be displayed at the same time as when content is reproduced after the link information authentication device receives the content and a public key certificate from the broadcast provider;
FIG. 56 is a sequence diagram illustrating how the link information providing device and the link information authentication device in the link information authentication system in the ninth embodiment of the present invention operate until the link information authentication device displays link information authenticated by verifying a signature of the link information at the same time as when the content is reproduced and then accesses the destination of a link corresponding to the link information;
FIG. 57 illustrates example data written in link information in the link information authentication system in the ninth embodiment of the present invention;
FIG. 58 illustrates an example of the relationship between content, and SI, link information, and a public key certificate of the content in the link information authentication system in the ninth embodiment of the present invention;
FIG. 59 illustrates another example of the relationship between content, and SI, link information, and a public key certificate of the content in the link information authentication system in the ninth embodiment of the present invention; and
FIG. 60 illustrates the entire configuration of a link information authentication system according to the ninth embodiment of the present invention where a certificate authority is employed.

### DESCRIPTION OF THE PREFERRED EMBODIMENTS

Preferred embodiments of the present invention will now be described in detail with reference to the accompanying drawings. The present invention is not limited to the embodiments and can be implemented in various other forms without departing from the spirit of the present invention.

### (Overview of the Invention)

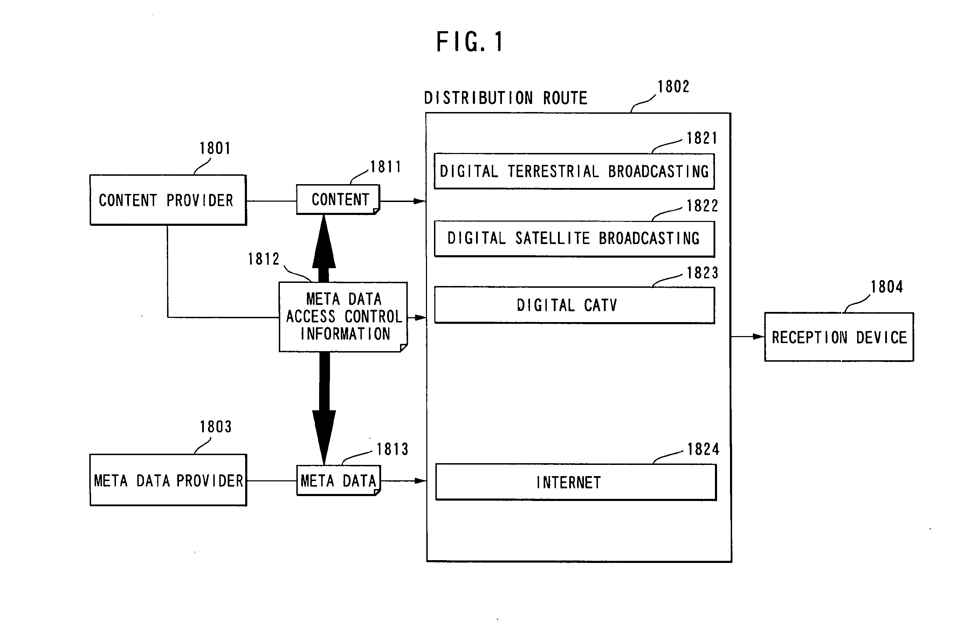

FIG. 1 is a block diagram of a system according to the present invention, which illustrates the overview of the present invention. A broadcast station or a content provider 1801, which provides VOD services, distributes content 1811 to a reception device (or receiving device) 1804 of a user via a distribution route 1802.

A meta data provider 1803 creates meta data 1813 for control of the content 1811 such as access control, digest watching or storage control, or assignment of a link to the content 1811, and distributes the meta data 1813 to the reception device 1804 of the user via the distribution route 1802. Meta data access control information 1812, which represents association between content 1811 and meta data 1813 that is allowed to control the content 1811, is also distributed from the content provider 1801 to the reception device 1804 of the user. The reception device 1811 confirms that the meta data 1813 is authorized (or permitted) by the meta data access control information 1812, and confirms whether or not the meta data 1813 is associated with the content 1811 in the meta data access control information 1812, and controls the content 1811 using the meta data 1813. The distribution route 1804 includes not only a broadcast network for terrestrial digital broadcasting 1821, digital satellite broadcasting 1822 such as Broadcasting Satellite (BS) or Communications Satellite (CS) broadcasting, digital CATV broadcasting 1823, and the like, but also the Internet 1824 that is a bidirectional network. One or more distribution routes 1804, via which the content 1811 is to be distributed, meta data 1813, and meta data access control information 1812 can be optionally selected according to service providers' equipment and operation varying depending on their circumstances.

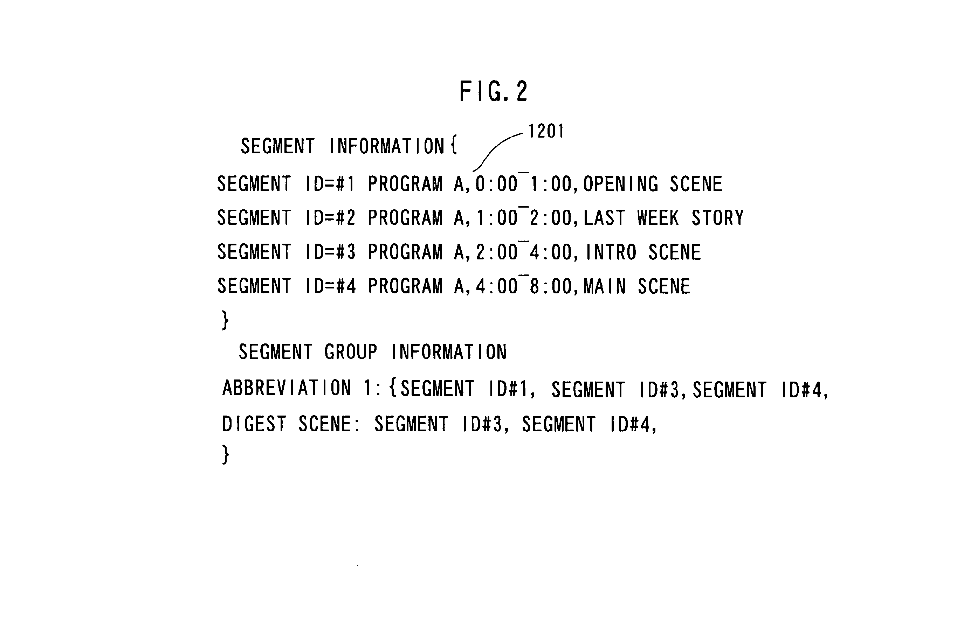

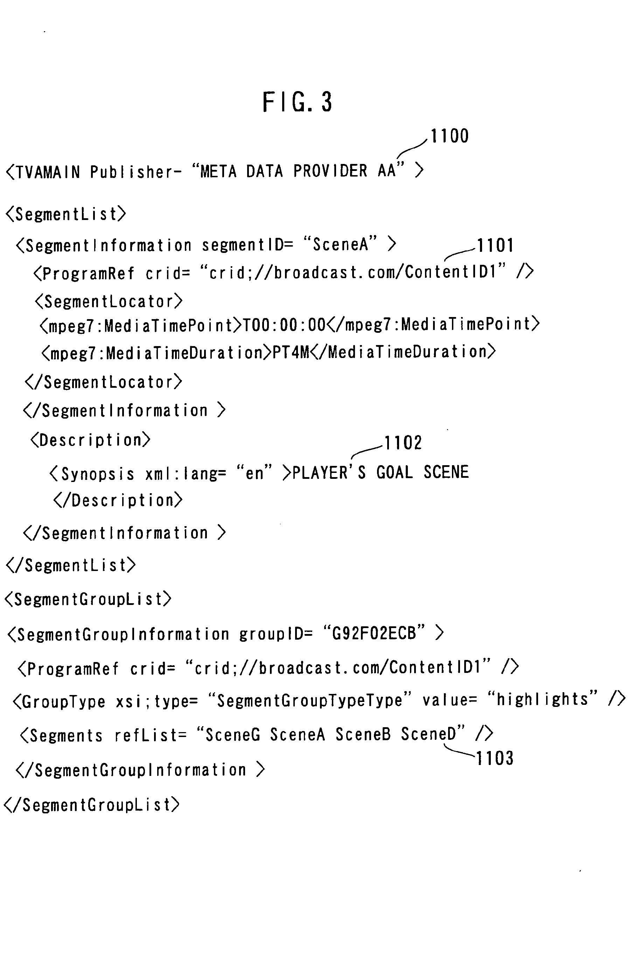

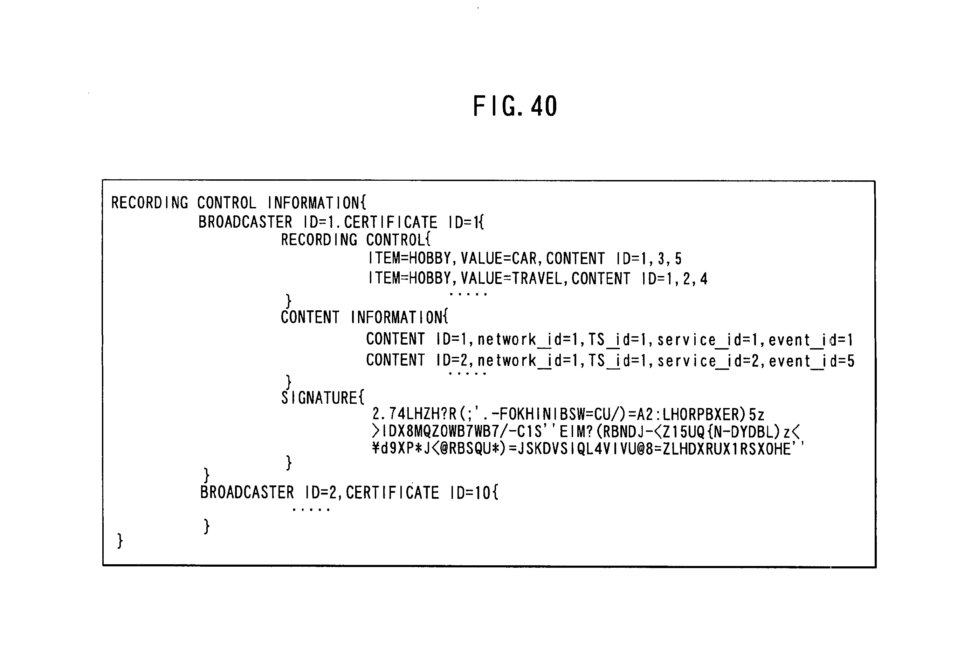

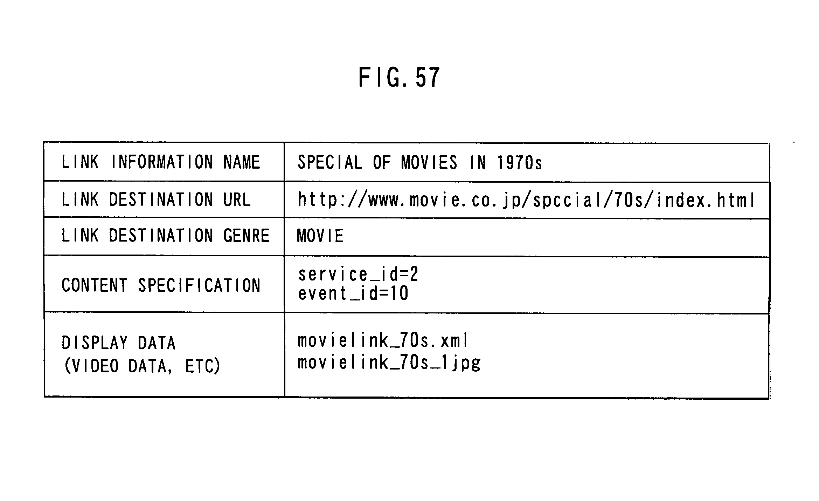

The meta data 1831, which is attribute information of the content 1811 such as television programs, is used for various control purposes such as playback control for digest watching to allow the user to view only specific scenes of the content 1811, storage control for storing specific content 1811 in the reception device 1804, or link control to display link information of web pages or the like that is allowed to be displayed with the content. FIG. 2 illustrates an example of the meta data used for performing digest watching. More specifically, FIG. 2 illustrates a schematic structure of the meta data representing the playback control in the present invention. FIG. 3 illustrates an example of meta data (written in XML) defined in the TV Anytime Forum. More specifically, FIG. 3 illustrates an XML description of the meta data representing the playback control in the present invention. An example of the meta data for storing the content 1811 in the reception device 1804 is shown in FIG. 40, which will be described later in detail. An example of the link information of a web page desired to be displayed on the content is shown in FIG. 57, which will be described later in detail.

### (Embodiment 1)

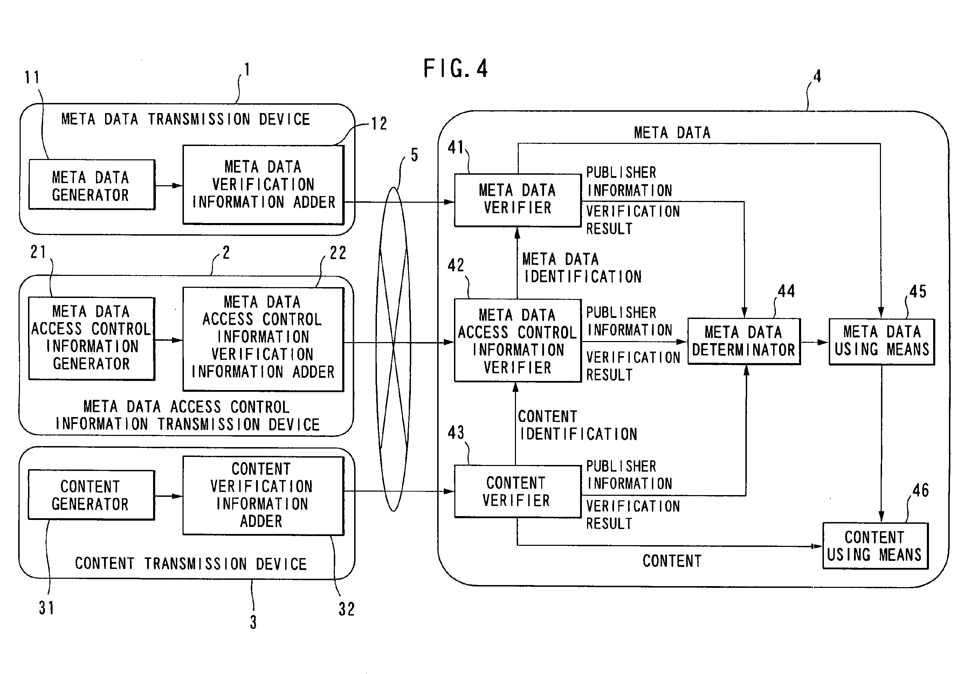

FIG. 4 is a block diagram of a meta data access control system that includes a reception device and transmission devices for performing a meta data access control method according to a first embodiment of the present invention. The meta data access control system shown in FIG. 4 includes a meta data transmission device 1, a content transmission device 3, a meta data access control information transmission device 2, a distribution route 5, and a content receiver (or receiving device) 4. The content transmission device 3 is a device included in the content provider 1801 shown in FIG. 1 and the meta data transmission device 1 is a device included in the meta data provider 1803 shown in FIG. 1. The meta data access control information transmission device 2 is generally included in the content provider 1801 and may also be included in a third party that is considered as being trusted by the content provider 1801 through a certificate authority or the like. The distribution route 5 corresponds to the distribution route 1802 in FIG. 1 and the reception device 4 corresponds to the reception device 1804 in FIG. 1. The meta data publisher corresponds to the meta data provider 1803.

The meta data transmission device 1, which is a device for distributing meta data to the reception device 4, includes a meta data generator 11 and a meta data verification information adder 12. The meta data access control information transmission device 2, which is a device for distributing meta data access control information to the reception device 4, includes a meta data access control information generator 21 and a meta data access control information verification information adder 22. Here, the meta data access control information is information specifying association between "meta data" and "content", which indicates whether or not the content is allowed to be controlled using the meta data.

The content transmission device 3 is a device for transmitting AV content such as television programs or content such as HTML documents, BML documents, and computer programs. The content transmission device 3 includes a content generator 31 and a content verification information adder 32. The distribution route 5 is a route through which content, meta data, and meta data access control information is transferred from the transmission devices to the reception device 4. Detailed examples of the distribution route 5 include a digital broadcast network such as a BS or terrestrial broadcast network and a communication network such as the Internet. In this embodiment, content, meta data, and meta data access control information is obtained (or received) through the distribution route each time it is needed. However, content, meta data, and meta data access control information may also be used after being stored in a storage such as a memory or a hard disk of the reception device and may also be provided to the reception device through a portable medium such as an optical disc or a memory card. Content, meta data, and meta data access control information may be distributed through the same distribution route and may also be distributed through different distribution routes.

The reception device 4 is a device for receiving and using content, meta data, and meta data access control information. The reception device 4 includes a meta data verifier 41 for verifying meta data, a meta data access control information verifier 42 for verifying meta data access control information, a content verifier 43 for verifying a content, a meta data determinator 44 for determining whether or not the meta data is authorized (or permitted) by a content source, meta data using means 45 for allowing the use of meta data based on the determination, and content using means 46 for allowing the content to be reproduced based on the meta data.

A description will now be given of how the meta data access control system of FIG. 4 operates.

Meta data transmitted by the meta data transmission device 1, meta data access control information transmitted by the meta data access control transmission device 2, and content transmitted by the content transmission device 3 are distributed to the reception device 4 through the distribution route 5. First, a description will be given of the transmission devices, the meta data transmission device 1, the meta data access control information transmission device 2, and the content transmission device 3.

The meta data transmission device 1 generates meta data for content through the meta data generator 11. As shown in FIG. 3, meta data identification information 1100 identifying the meta data and a meta data body are written in the meta data. The meta data body includes content identification information 1101 (crid://broadcast.com/ContentID1), which is to be controlled using the meta data, navigation information 1103 used for navigation to a content overview or the like, and scenario information 1102 that defines a playback method of the content "crid://broadcast.com/ContentID1" and includes information used for watching highlights or for navigation to a desired scene. For the generated meta data, the meta data verification information adder 12 extracts information of a publisher of the meta data, and adds (or assigns) verification information, which allows the reception device 4 to verify the publisher of the meta data and the identification information of the meta data, to the meta data. Examples of the method of adding the verification information to the meta data include a method of applying a digital signature to the meta data using a secret key of the publisher of the meta data and a method of writing meta data identification information or publisher information in the meta data using a digital watermark. The meta data verification information may not be added, for example, when information, which is a substitute for the meta data verification information, can be verified using information provided when transmitting the meta data.

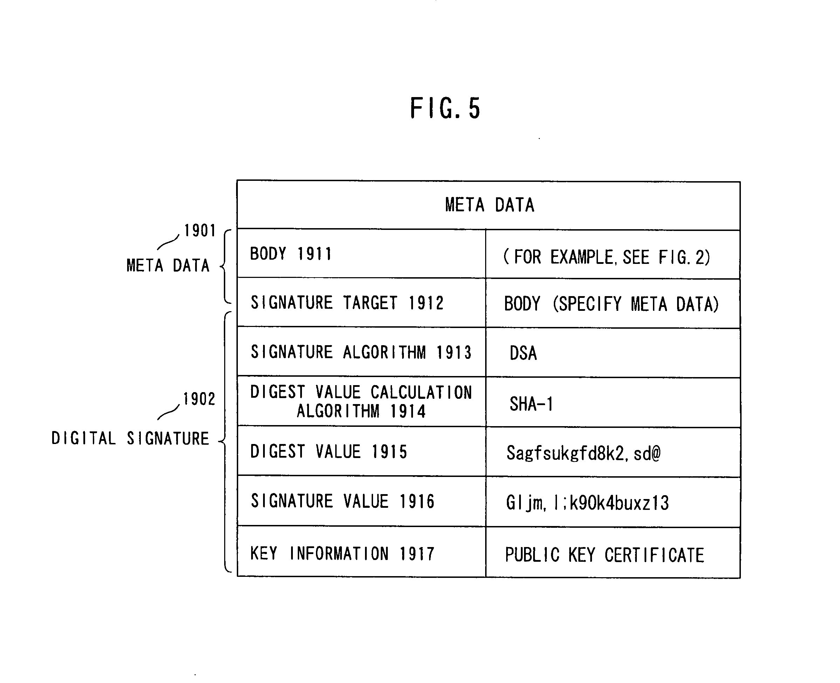

An example of the meta data verification information using a digital signature will now be described with reference to FIG. 5. A digital signature 1902, which is meta data verification information, is applied (or assigned) to a meta data body 1901 and 1911. An example of the digital signature method is a digital signature method specified in X.509. The digital signature 1902 includes a signature target 1912, a signature algorithm 1913, a digest value calculation algorithm 1914, a digest value 1915, a signature value 1916, and key information 1917. The signature target 1912 represents a range where the digital signature is effective. In this example, the signature target 1912 specifies the meta data body 1911. Without specifying this signature target, the entirety of the meta data may be set as a signature target. The signature algorithm 1913 specifies an algorithm that has been used to encrypt a signature value, which will be described later. In this example, the signature algorithm 1913 specifies a public key encryption system which is referred to as a Digital Signature Algorithm (DSA). The digest value calculation algorithm 1914 specifies an algorithm "SHA-1" for generating a digest value through a hash function from data which is a signature target. The digest value 1915 is a value (Sagfsukgfd8k2,sd@ in this example) calculated from the data of the signature target 1912 using the digest value calculation algorithm (SHA-1) 1914. The signature value 1916 is a value into which the digest value 1915 has been encrypted using the signature algorithm 1913. In the example of FIG. 5, the signature value is a value "Gljm,1;k90k4buxzI3" into which the DSA has encrypted the digest value "Sagfsukgfd8k2,sd@" using the secret key of the publisher of the meta data. The key information 1917 specifies key information necessary for the reception device 4 to decrypt the signature value 1916. in this example, the key information 1917 specifies "004587" as a public key certificate ID. Examples of the method of specifying the public key certificate include not only the method of specifying the public key certificate ID but also a method of specifying a holder (or owner) of the public key certificate. Another method is to incorporate body data of the public key certificate. The meta data including the meta data verification information added thereto is transmitted to the distribution route 5 so as to be distributed to the reception device 4.

A description will now be given of how the meta data access control information transmission device 2 operates.

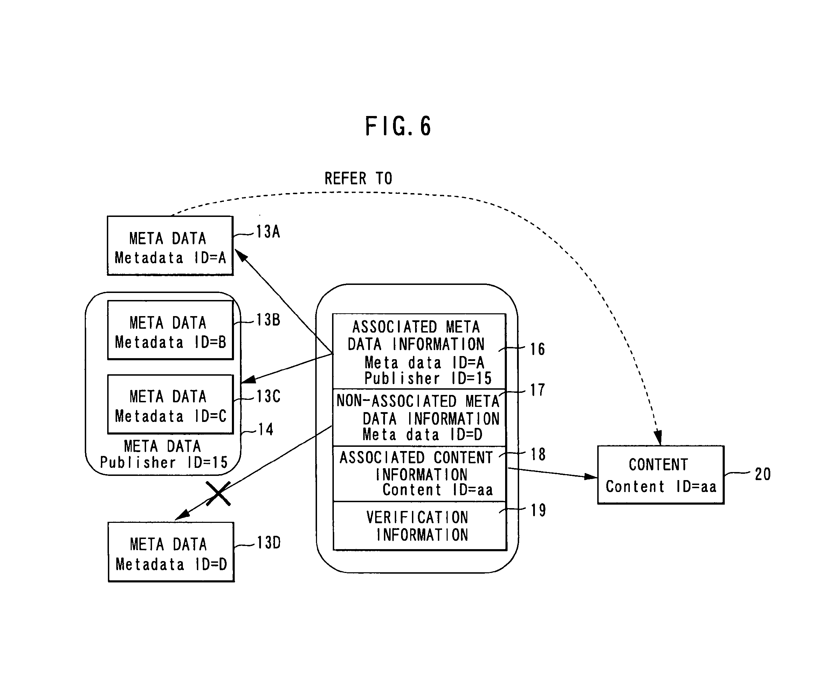

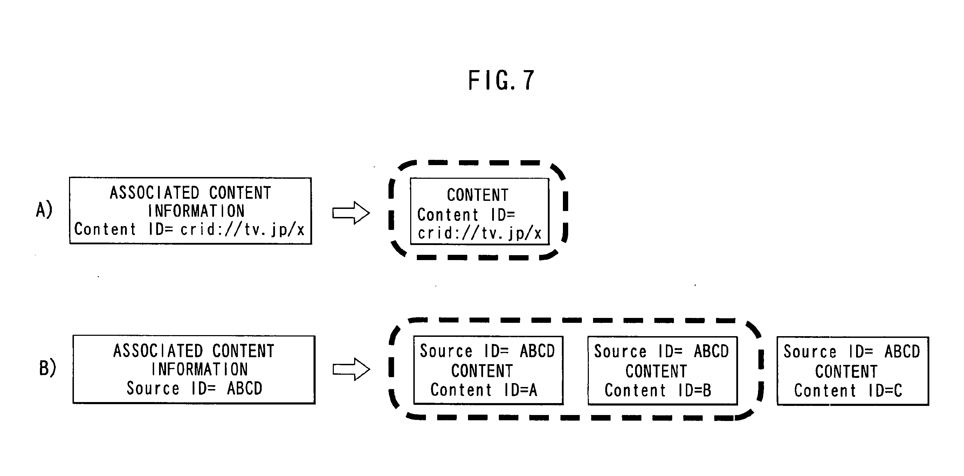

The meta data access control information transmission device 2 generates meta data access control information through the meta data access control information generator 21. An example of the meta data access control information is described below with reference to FIG. 6. The meta data access control information includes associated content information 18 and associated meta data information 16 or non-associated meta data information 17. The associated content information 18 is information that specifies content 20 to be accessed by the meta data. The associated content information 18 represents, for example, identification information or source information of the content 20. Detailed examples of the associated content information 18 are shown in FIGS. 7A and 7B. In the example of FIG. 7A, the associated content information includes information identifying the content. That is, the associated content information directly specifies a content identifier. The content identifier may include a content reference identifier (CRID) which is written in meta data used in the specifications of the TV Anytime Forum and which is used to indicate the content. In the case of digital broadcasts, the content identifier may include a network ID, a service ID, and an event ID included in Program Specific Information/Service Information (PSI/SI) defined in Association of Radio Industries and Businesses (ARIB) STD-B10. In this example, the content is specified by the content identifier written in the associated content information.

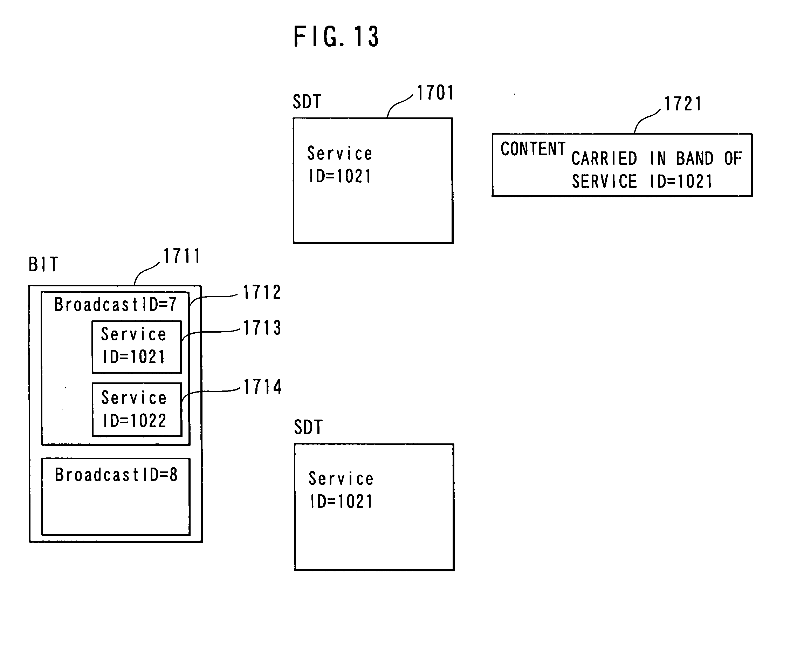

In the example of FIG. 7B, the associated content information includes a source identifier of the content. That is, the associated content information specifies a source of the content. A Unique Resource Locator (URL) used in the Internet, a service provider ID ("ABCD" in FIG. 7B), a Unique Resource Name (URN), or a domain name in the DNS may be used as the source ID. A route, through which the content is transmitted, may be considered to be the source of the content and a broadcast provider ID, a service ID, or the like in PSI/SI used in digital broadcasting may be used as the source identifier. Details of the PSI/SI will be described later with reference to FIG. 13.

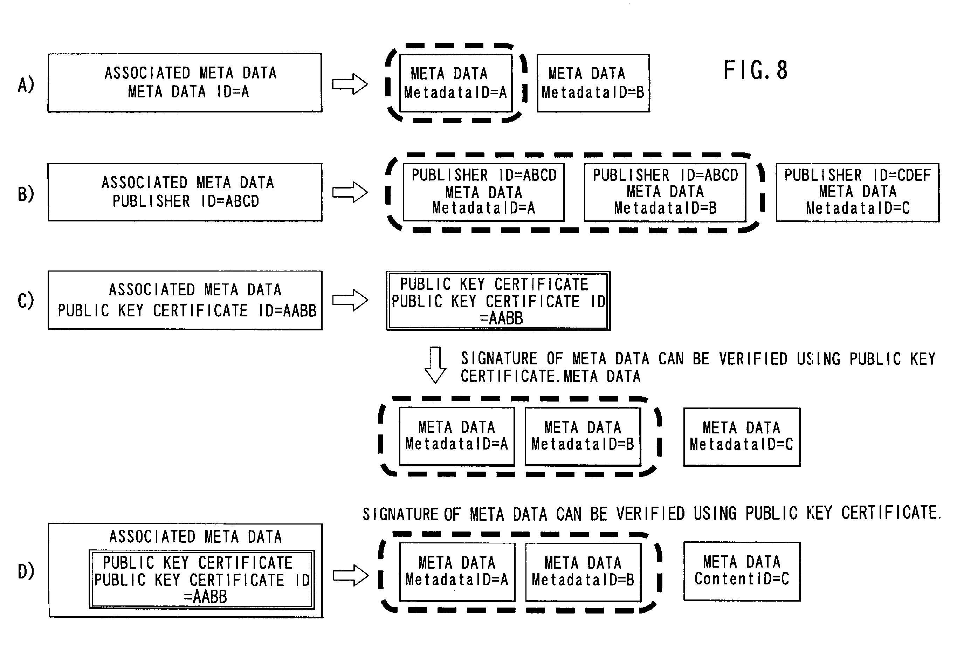

The associated meta data information 16 represents meta data 13A-13C that is allowed to access the content 20. The associated meta data information 16 includes information 14 specifying a meta data publisher or identification information of the meta data. Examples of the information 14 specifying the meta data publisher include a public key certificate for identifying the publisher of a digital signature applied to the meta data or an identifier specifying the public key certificate, a holder ID, which is identification information specifying the meta data publisher, a broadcast provider ID, a terrestrial broadcast ID, or an affiliation ID included in the PSI/SI of digital broadcasting, or a service ID indicating a corresponding service. Detailed examples of the associated meta data information 16 are shown in FIGS. 8A-8D. In the example of FIG. 8A, the associated meta data information 16 (denoted by "associated meta data" in FIGS. 8A-8D) includes information identifying the meta data. That is, the associated meta data directly specifies an identifier of the meta data. In this example, the associated meta data specifies only meta data to which a meta data ID equal to that written in the associated meta data is assigned. In the example of FIG. 8B, the associated meta data includes a publisher ID to identify a publisher of the meta data. In this example, the associated meta data specifies only meta data in which a publisher ID of the meta data equal to that written in the associated meta data is written.

In the example of FIG. 8C, the associated meta data specifies a public key certificate using an ID of the public key certificate. In this example, the associated meta data specifies only meta data to which a digital signature that can be verified using the public key certificate specified in the associated meta data is applied. Examples of the method of specifying the public key certificate include not only the method of specifying the public key certificate ID but also a method of specifying a holder of the public key certificate. In the example of FIG. 8D, the associated meta data includes a public key certificate. In this example, the associated meta data specifies only meta data to which a digital signature that can be verified using the public key certificate included in the associated meta data is applied.

In FIG. 6, the non-associated meta data information 17 represents meta data 13D that cannot access the content, contrary to the associated meta data information 16. Information 14 specifying a meta data publisher or identification information of the meta data 13D is written in the non-associated meta data information 17 as with the associated meta data information 16. Although the meta data access control information described above includes both the associated meta data information 16 and the non-associated meta data information 17 as information of meta data referred to by the meta data access control information, the meta data access control information functions properly if at least one of the associated meta data information 16 and the non-associated meta data information 17 is written in the meta data access control information. Specific publisher IDs may be assigned to meta data items independently created by the user on the reception device and then the IDs may be written in associated meta data information or non-associated meta data information. This allows the meta data access control information to control access of the meta data, independently created by the user, to the content.

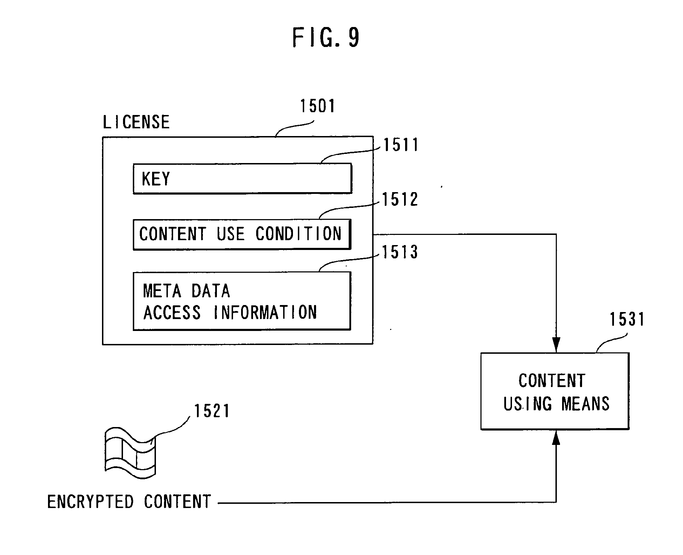

There are a variety of methods of incorporating the meta data access control information, examples of which include a method of incorporating the meta data access control information into meta data, a method of incorporating it into content, and a method of incorporating it into a license. The example where the meta data access control information is incorporated into meta data will be described later in Embodiment 2 and the example where the meta data access control information is incorporated into content will be described later in Embodiment 3. The example where the meta data access control information is incorporated into a license will now be described with reference to FIG. 9. A license 1501 includes a key 1511 for decrypting encrypted content or a content use condition 1512 for using the content. If content has been encrypted using a Digital Rights Management (DRM) system to protect the content, the license 1501 is used as content using means 1531 when the encrypted content 1521 is reproduced. In the example where meta data access control information 1513 is included in a license, content corresponding to the license is associated with a combination of encrypted content and a key for decrypting the encrypted content through the DRM system, and thus the license is associated with the content. This makes it possible to omit the associated content information 18 in the meta data access control information 1513.

Through the meta data access control information verification information adder 22, verification information 19, which allows the reception device 4 to verify the publisher of the meta data access control information or the like, is assigned (or added) to the meta data access control information. Examples of the method of adding the meta data access control information verification information to the meta data access control information include a method of applying a digital signature to the meta data access control information using a secret key of the publisher of the meta data access control information and a method of incorporating information for verification of the publisher of the meta data access control information into the meta data access control information using a digital watermark. The meta data access control information including the verification information added thereto is transmitted to the distribution route 5 so as to be distributed to the reception device 4.

When the use of content is restricted as described above, the meta data access control information may be distributed together with information permitting the use of the content. Detailed examples of this distribution method include a method in which meta data access control information for content protected by the DRM system is written as part of a content use condition for using the content and a license including the content use condition is distributed only to terminals that are permitted to use the content. In this method, the meta data access control information is incorporated into the license as described above.

The content transmission device 3 will now be described. The content transmission device 3 generates content using the content generator 31. The content verification information adder 32 assigns verification information to the generated content. The verification information is information which allows the reception device 4 to verify identification information assigned to the content or source information of the content. Examples of the verification information include a digital signature which the source of content applies to the content, content source information or content identification information that is embedded into the content using a digital watermark, content source information or content identification information inserted into a content data header of the content, and content source information or content identification information written in either a resource or a file of content (hereinafter referred to as multipart content) that includes a plurality of files or resources. The content including the verification information added thereto is transmitted to the distribution route 5 so as to be distributed to the reception device 4. The meta data, the meta data access control information, and the content may be encrypted and transmitted in order not only to protect the content but also to certainly implement the rule of controlling access of the meta data to the content. Specifically, a restriction that only the reception devices 4 which can meet a requirement that they certainly activate the meta data access control information for controlling access of the meta data to the content are permitted to obtain a description key of the encrypted meta data, meta data access control information, and content is set and the set restriction is enforced when the content is decrypted to be used.

### (Reception device)

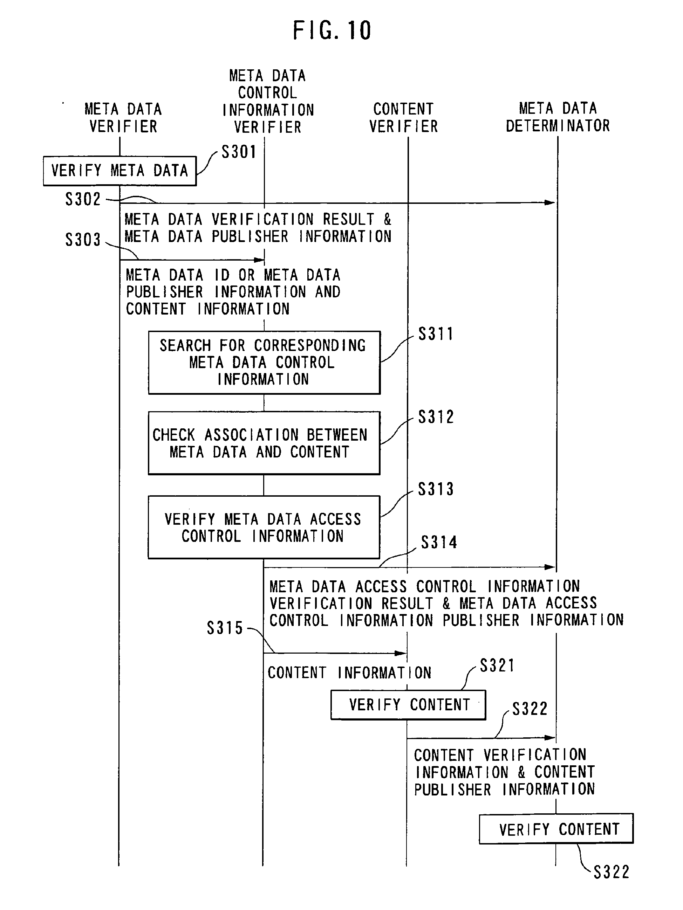

With reference to FIGS. 4 and 10, a description will now be given how the reception device 4 operates.

### (Verification of Meta data)

The reception device 4 verifies received meta data through the meta data verifier 41 (S301). The verification of the meta data is to check publisher information of the meta data using verification information added to the meta data in order to prevent disguise of a malicious publisher. When meta data is obtained through a broadcast route, the meta data can be verified using any one of a method using a digital signature, a method using an identifier included in the meta data, a method using a Conditional Access System (CAS), and a method using information of a broadcast route through which the meta data is obtained. When the meta data is obtained through a communication route, the meta data can be verified using any one of a method using a digital signature, a method using a public key certificate obtained from a meta data server, and a method of trusting information written in meta data using DRM. The following is a detailed description of the verification methods.

### (Method using Digital Signature)

With reference to FIG. 5, a description will now be given of an example of the method for verifying publisher information of meta data, which uses a digital signature applied to meta data verification information. The meta data verifier 141 obtains a public key certificate necessary to verify the digital signature of the meta data in the following manner. A public key certificate having the same ID as a public key certificate ID written in the key information 1917 included in the digital signature is searched for in a certificate management unit (not shown). If the public key certificate having the same ID is found, the signature value 1916 is decrypted using a public key included in the found public key certificate. The decrypted value is compared with the digest value 1915. If it is possible to confirm that the decrypted value is equal to the digest value 1915, it is possible to confirm the digital signature. Then, the verification of the digital signature of the meta data is performed. Once the verification of the digital signature is completed, the publisher of the meta data is verified by confirming holder information of the public key certificate for signature verification used when the meta data verification information is verified. Alternatively, provider information (denoted by "1100" in FIG. 3) written in the meta data may be used since it can be determined, via the confirmation of the digital signature, that the meta data has not been falsified. A public key certificate issued by a reliable Certificate Authority (CA) or a public key certificate signed using an intermediate certificate issued by a reliable CA is used as the above public key certificate. Accordingly, it can be determined that contents of the certificate are reliable. Since the signature can be verified only by a single public key corresponding to the secret key used for the signature, it can be determined that the service provider, which has applied the signature to the meta data, is the holder of the certificate used for the verification.

### (Method using Meta data Information from Broadcast Route)

In another example of the method of verifying the publisher information of the meta data, when the meta data is obtained from a broadcast route specified by the service provider, identification information or publisher information (for example, "1100" in FIG. 3) written in the obtained meta data or embedded into the meta data using a digital watermark may be considered reliable.

### (Method using Identifier of Broadcast Route)

In another example of the method of verifying the publisher information of the meta data, publisher information of the meta data is specified using information of a broadcast route, through which the meta data is obtained, i.e., using PSI/SI information such as a broadcast provider ID that specifies a digital broadcast route (for example, a broadcast provider ID in the case of BS digital broadcasting or a terrestrial broadcast provider ID or an affiliation ID in the case of terrestrial digital broadcasting) or a service ID.

### (Method using CAS)

Another example of the method of verifying the publisher information of the meta data uses a Conditional Access System (CAS). The CAS is an access control method used in digital broadcasting. In this example, meta data is protected using the CAS. When meta data is encrypted and transmitted, the meta data can be decrypted only by a unique key stored in the reception device. Therefore, one method may be employed in which, when meta data is encrypted and transmitted, meta data publisher information (for example, "1100" in FIG. 3) or meta data identification information or a broadcast provider ID written in the meta data is reliable. In the case of the CAS, a work key for decrypting an Entitlement Control Message (ECM) is extracted from an Entitlement Management Message (EMM) packet that can be decrypted only by a unique key stored in the reception device. Then, a scramble key for decrypting a stream including meta data can be obtained by decrypting the ECM. The meta data can be obtained by decrypting the stream including the meta data using the obtained scramble key. The above process allows meta data to be protected and transmitted to the reception device. Thus, it can be determined that the contents of the meta data are reliable, so that the publisher can be confirmed using service provider information written in the meta data or using service provider identification information of a route through which the meta data is transmitted.

### (Method using Public Key Certificate of Server)

Another example of the method of verifying the publisher information of the meta data uses a public key certificate. In this example, the reception device can authenticate a public key certificate received from a meta data server, from which it has obtained meta data, using reliable service provider information stored in the reception device. Thus, the reception device can determine that it has obtained the meta data from a reliable meta data server. Accordingly, the reception device can determine that the contents of the meta data are correct and thus can confirm a publisher of the meta data using meta data publisher information written in the meta data. Alternatively, the reception device can confirm the publisher of the meta data using holder information written in the public key certificate obtained from the server. Examples of the reliable service provider information stored in the reception device include a public key certificate, an ID uniquely identifying the public key certificate, and holder information of the public key certificate.

### (Method using DRM System)

Another example of the method of verifying the publisher information of the meta data uses a Digital Rights Management (DRM) system. In this example, meta data is encrypted through the DRM system so that the meta data is protected in the same manner as when using the CAS system. Since the reception device securely obtains a license for decrypting the meta data from the DRM system, the reception device can determine that the contents of publisher identification information written in the meta data are reliable. This allows the reception device to confirm a publisher of the meta data. Although any one of the variety of methods can be used to verify meta data publisher information and the contents thereof, the method to be used can be determined based both on a meta data transmission method selectable by each service provider and on trade-off between ease of operation and installation required for the method and difficulty in falsifying the meta data publisher information and the contents of the meta data publisher information when the method is used.

If the meta data can be verified, the meta data verifier 41 transmits at least one of the meta data identification information and the meta data publisher information of the meta data (for example, "crid://broadcast.com/ContentID1" written as a ProgramRef crid denoted by "1101" in FIG. 3) as a verification result to the meta data determinator 44 (S302). Then, the meta data verifier 41 transmits at least one of the meta data identification information, the meta data publisher information (for example, meta data publisher ID = ABCD), and the identification information of the public key certificate used for the meta data verification and identification information of the content referred to by the meta data (for example, "crid://broadcast.com/ContentID1" written as a ProgramRef crid denoted by "1101" in FIG. 3 when the meta data is SegmentInformation in FIG. 3) to the meta data access control information verifier 42 (S303).

### (Meta data Access Control Information Verification 1)

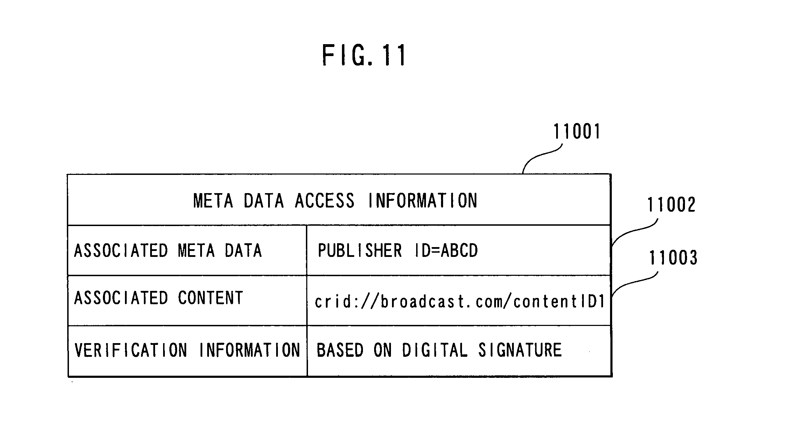

The meta data access control information verifier 42 searches for meta data access control information having the same meta data identification or publisher information as that received from the meta data verifier 41 (S311). FIG. 11 illustrates an example of the meta data access control information. This meta data access control information 11001 contains data of associated meta data 11002, data of associated content 11003, and data of verification information. When the meta data publisher is "ABCD", the meta data access control information verifier 42 searches for corresponding meta data access control information 11001 including associated meta data 11002 representing the publisher "ABCD" in a management unit (not shown) that manages meta data access control information of the reception device. In another method, the meta data access control information verifier 42 searches for the corresponding meta data access control information using the above-mentioned identifier or holder information of the public key certificate used for verifying the digital signature of the meta data. The information used when searching for the corresponding meta data access control information varies depending on the formats (see FIGS. 8A-8D) of the associated meta data information of the meta data access control information. Here, it does not matter whether the meta data access control information has already been transmitted to the reception device or the meta data access control information has not been distributed and is thus obtained through the network.

If the corresponding meta data access control information is found, it is checked whether or not the content referred to by the meta data is associated with the meta data, using the found meta data access control information (S312). In other words, it is checked whether or not the meta data and the content referred to by the meta data are associated with each other, using the associated meta data information 16 and the associated content information 18 of the meta data access control information. In addition, it is checked whether or not the meta data is specified in the non-associated meta data information 17. The associated meta data 11002 and the non-associated meta data information 17 are not necessarily provided together. In the case of the meta data access control information shown in FIG. 11, a content identifier "crid://broadcast.com/ContentID1" written in the associated content 11003 is compared with the content identifier ("crid://broadcast.com/ContentID1" in the example of FIG. 3) corresponding to the meta data transmitted from the meta data verifier in order to check whether or not both the content identifiers are identical. In the above description, the content identifier and the meta data publisher are used to check whether or not the meta data is associated with the content. However, a content source or a content decryption key rather than the content identifier may be used as the associated content and a meta data identifier rather than the meta data publisher may be used as the associated meta data to check whether or not the meta data is associated with the content.

### (Meta data Access Control Information Verification 2)

If the association between the meta data and the content is confirmed using the meta data access control information, the publisher of the meta data access control information is verified using the verification information of the meta data access control information (S313). When the meta data access control information is transmitted through broadcasting, the publisher can be verified using, for example, a digital signature, publisher information embedded into the meta data access control information through a digital watermark, information of a broadcast route through which the meta data is obtained, or publisher information written in the meta data access control information. When the meta data access control information is transmitted through communication, the publisher can be verified using, for example, a digital signature, publisher information embedded into the meta data access control information through a digital watermark, or publisher information obtained from a server that the reception device trusts based on a public key certificate.

A variety of methods of verifying meta data access control information will now be described in detail.

### (Method using Digital Signature)

One example of the method of verifying meta data access control information is to verify a digital signature applied as verification information to the meta data access control information in the same manner as when verifying meta data and then to specify a holder of a public key certificate used for the verification.

### (Method using Broadcast Route ID)

In another example of the method of verifying a publisher of the meta data access control information, the publisher is verified by specifying the publisher of the meta data access control information using information characterizing a broadcast route through which the meta data access control information is transmitted and obtained together with the information characterizing the broadcast route, for example, using a service ID, a broadcast provider ID, a terrestrial broadcast provider ID (terrestrial_broadcaster_id) or an affiliation ID (affiliation_id) in the case of terrestrial broadcasting included in PSI/SI that is broadcast together with the meta data access control information.

### (Method using Meta data Access Control Information Received through Broadcasting)

In another example of the method of verifying the meta data access control information, when the meta data access control information is obtained from a broadcast route for which a service provider is specified, service provider identification information ("1100" in FIG. 3) written in the obtained meta data access control information is considered reliable.

### (Method using CAS)

In another example of the method of verifying the publisher of the meta data access control information, when the meta data access control information is received through broadcasting using the CAS, publisher information, publisher identification information, or a broadcast provider Identifier written in the meta data access control information is considered reliable. This verification method is performed in the same manner as the method of verifying meta data using the CAS.

### (Method using Public Key Certificate from Server)

In another example of the method of verifying the publisher of the meta data access control information, when the meta data access control information is obtained through a communication route such as the Internet, the reception device authenticates a public key certificate received from a server, from which it has obtained meta data access control information, using service provider information such as a public key certificate that has been stored therein as information of a service provider trusted by the reception device in the reception device. Thus, the reception device can determine that it has obtained the meta data access control information from a reliable meta data access control information server. Accordingly, the reception device can determine that it has obtained the meta data access control information from a reliable route. Thus, the reception device can verify the publisher of the meta data access control information by specifying the provider of the meta data access control information using holder (i.e., owner) information of the public key certificate obtained from the server or using publisher identification information written in the meta data access control information.

### (Method using DRM System)

Another example of the method of verifying the meta data access control information uses a Digital Rights Management (DRM) system. In this example, since meta data access control information is encrypted through the DRM system and the reception device securely obtains a license for decrypting the meta data access control information from the DRM system, the reception device can determine that the contents of publisher identification information written in the meta data access control information are reliable. This allows the reception device to confirm a publisher of the meta data access control information.

### (Method using License)

Another example of the method of verifying the meta data access control information is applied when the meta data access control information is included in a license that contains a key for decrypting content. The license is securely provided from a content source to terminals of users who are allowed to use content. This allows the reception device to confirm that the source of the meta data access control information is identical to the source of the content.

After the meta data access control information verifier 42 verifies the publisher of the meta data access control information, the meta data access control information verifier 42 notifies the meta data determinator 44 of both the publisher of the meta data access control information and the result of the confirmation of the association between the meta data and the content (S314). The meta data access control information verifier 42 also transmits at least one of the identification information of the content to be used and the publisher information of the content to the content verifier 43 (S315).

### (Content Verification)

The content verifier 43 verifies identification information of content or a source of the content (S321).

### (Method using Digital Signature)

One method of verifying content is to verify the content by confirming a digital signature, assigned as content verification information to the content, using holder information or a holder ID of a public key certificate trusted by a certificate authority or the like in the same manner as when verifying meta data.

### (Method using Data Embedded in Content)

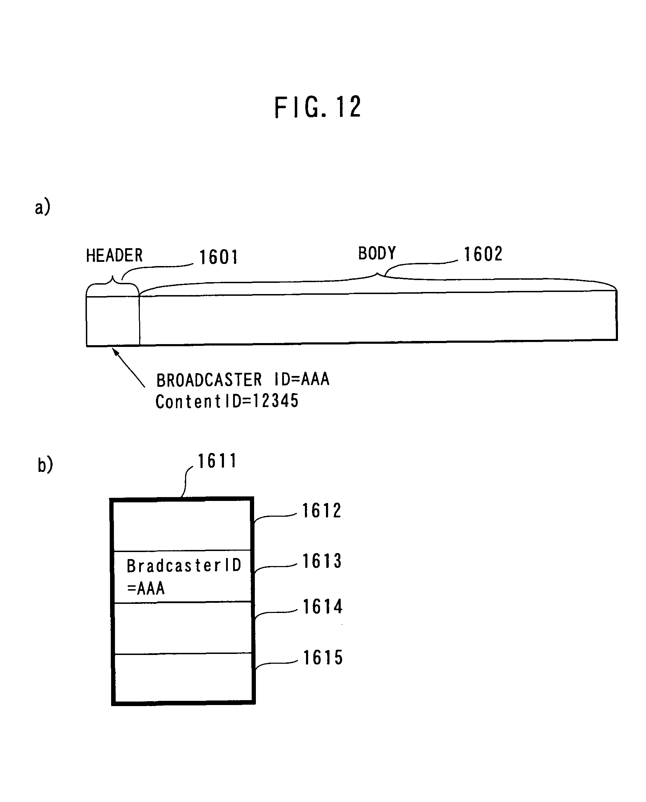

Another method of verifying content is to confirm (or check) identification information of the content or a source of the content written in a header of the content or in a file or resource of the content (when it is multipart content including a plurality of files or resources), or written in the content using a digital watermark if the content is obtained through a broadcast route. FIG. 12A illustrates one example of this method when identification information is present in a header of the content. In this example, the content is divided into a header 1601 and a body 1602, and the header 1602 includes attribute information, coding information, etc., of the content, which is information required to reproduce the content. In the example of FIG. 12A, a broadcast provider Identifier (ID) is written as content source information in the header 1601. However, at least one of a content source ID, a broadcast provider ID, and content identification information may be inserted as content source information in the header 1601. The body 1602, which is actual content data, includes video or audio data encoded using the MPEG-2 or MPEG-4 standard.

FIG. 12B illustrates another example of the content verification method when identification information is present in a resource or file of multipart content. In this example, the multipart content 1611, which is content integrating multiple parts, includes resources or files 1612 to 1615. Each of the resources includes HTML or BML data or image, video, or audio data encoded using the MPEG-2, MPEG-4, or JPEG standard. In the example of FIG. 12B, a broadcast provider Identifier (ID) is written as content source information in one 1613 of the resources 1612 to 1615. However, at least one of a content source ID, a broadcast provider ID, and content identification information may be inserted as content source information in one of the resources 1612 to 1615. Alternatively, identification information of the content or source identification information of the content is embedded into the content using a digital watermark. In this example, the content is obtained through a distribution route for which a broadcast provider is specified and the content information is written in a header combined with the content or in multipart information or written in the content using a digital watermark, so that the content can be verified by confirming the written content identification information or content source information.

### (Method using Broadcast Route ID)

Another method of verifying content is to store a broadcast provider ID included in PSI/SI used in digital broadcasting in the reception device and then to confirm a source of the content using the stored broadcast provider ID. FIG. 13 illustrates how the content source is confirmed in this example. When content 1721 is broadcast, the content verifier 43 checks a service ID tuned to receive the content 1721 using a Service Description Table (SDT) 1701. In this example, the service ID is "1021". Next, the content verifier 43 checks a broadcast ID corresponding to the service ID 1021 using a Broadcast Information Table (BIT) 1711. The broadcast ID is determined to be "7" with reference to information of the BIT 1712 and 1713. This value "7" is used as a content source identifier. In environments in which no BIT is used, the service ID 1024 may be used to verify the content source. In the case of terrestrial broadcasting, information such as a terrestrial broadcast provider ID or an affiliation ID may be used to verify the publisher information.

### (Method using Public Key Certificate of Server)

Another method of verifying content uses a public key certificate. When the reception device has obtained content through a communication route, the reception device can determine that it has obtained content from a reliable content server if the reception device can verify a public key certificate of the server, from which it has obtained the content, using service provider information such as a public key certificate stored in the reception device. Thus, the reception device may verify the content using holder information of the certificate of the content server from which it has obtained the content. Since the reception device can determine that it has obtained the content from a reliable source, the reception device may verify the content by confirming the content source, from which it has obtained the content, using content identification information or a content source written in a header of the content or in a file or resource of the content (when it is multipart content including a plurality of files or resources).

### (Method using CAS)

Another method of verifying content uses the CAS when the content has been received from an encrypted broadcast. In this method, information specifying the content may be verified by confirming a content source, from which the content has been obtained, using a content identifier or content provider identifier included in an ECM including a content key.

### (Method using DRM)

Another method of verifying content is to incorporate verification information into content and then to encrypt the content using a DRM system. In this method, source or identification information of content is written in a header of the content or in a file or resource of the content (when it is multipart content including a plurality of files or resources) or written in information embedded in the content using a digital watermark, and the content including the source or identification information is encrypted using the DRM system, so that the reception device can securely obtain the content. Thus, in this method, the reception device verifies the content by confirming the content source or identification information written in a header of the content or in a resource or file of the content (when it is multipart content).

### (Method using License)

Another method of verifying content is to verify encrypted content using license information including a content key for decrypting the content. Since the license is securely provided, it is possible to verify the content using content provider information included in the license. Also, when meta data access control information is included in license information including a content key, it is possible to verify that a publisher of the meta data access control information is the same as the source of the content and thus that the publisher of the meta data access control information is reliable, since the content key is provided by the source (or provider) of the content or a service provider authorized by the content source.

After verifying the content, the content verifier 43 notifies the meta data determinator 44 of the content source or the content identification information (S322). When the meta data determinator 44 has confirmed, based on the information received from the meta data verifier 41, the meta data access control information verifier 42, and the content verifier 43, the verification result that the publisher of the meta data access control information is identical to the publisher of the content and that the meta data access control information associates the content with the meta data so that the meta data is permitted to control the meta data, the meta data determinator 44 determines that the content can be controlled using the meta data (S341). Thus, the source of content can specify meta data, which is allowed to access the content, by issuing corresponding meta data access control information. When it is determined, using a public key certificate or the like authenticated by the content source, that the publisher of the meta data access control information is trusted by the content source, the meta data determinator 44 also determines that the meta data can be used to control the content (S341). In other cases, the meta data determinator 44 determines that the meta data cannot be used and then prevents the use of the meta data.

In the above description of this embodiment, the procedure for verifying the meta data, the procedure for verifying the meta data access control information, and the procedure for verifying the content are performed sequentially. However, the verification procedures may also be performed in other orders. Even after the content, the meta data, and the meta data access control information are all stored in the reception device 4, the reception device 4 can determine whether or not the meta data can be used in the same manner as described above.

Although this embodiment has been described of how the reception device 4 operates when the meta data access control information is distributed to the reception device 4, the meta data access control information may also be stored in a server. In this case, the reception device 4 queries the server, in which the meta data access control information is stored, about meta data publisher or identification information, thereby allowing the server to determine whether or not the meta data is permitted to access the content. Using a public key certificate, the reception device 4 also confirms that the server is trusted by the content source. In this manner, the reception device 4 can determine, through the server, whether or not the meta data is permitted to access the content. The reception device 4 may perform the same meta data verification, content verification, and meta data determination procedures as described above to determine whether or not the meta data is permitted to access the content, thereby achieving the same advantages.

### (Embodiment 2)

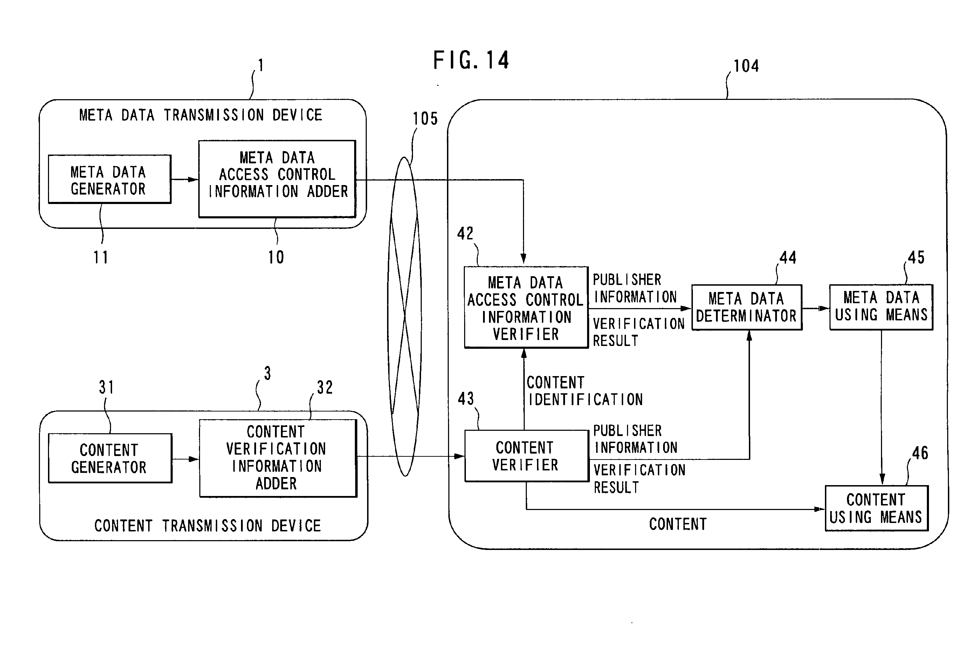

A second embodiment will now be described with reference to FIG. 14. FIG. 14 is a block diagram of a meta data access control system according to the second embodiment, which is constructed by adding a meta data access control information adder 10 to the meta data transmission device 1 in the meta data access control system shown in FIG. 4 and removing the meta data verification information adder 12, the meta data access control information transmission device 2, and the meta data verifier 41 from the meta data access control system of FIG. 4. In the meta data access control system in this embodiment, the meta data transmission device 1 adds meta data access control information to meta data created by the meta data generator 11 through the meta data access control information adder 10 and then transmits the meta data to the reception device 4.

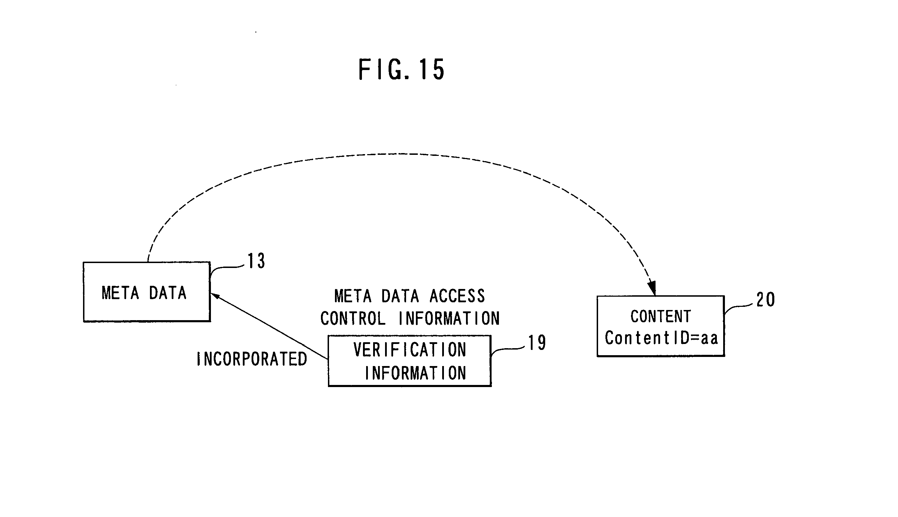

FIG. 15 schematically illustrates a data structure of meta data access control information in this embodiment. In this meta data access control information 19, there is no need to specify meta data 13 used to control access to content 20 since the meta data access control information 19 is incorporated into (or combined with) its target meta data 13. In addition, since the content 20 to be referred to is written in the meta data 13, the meta data access control information includes only verification information 19 used to verify its publisher. In one method of adding meta data access control information to meta data, the publisher of the meta data access control information applies a digital signature to the meta data. In another method, meta data access control information, in which publisher information of the meta data access control information is written using a digital watermark, is multiplexed (or incorporated) into the meta data.

The meta data access control information verifier 42 of the reception device 4 verifies the publisher of the meta data access control information. One method of verifying the publisher is to confirm the publisher using holder information of a public key certificate, which has been used when confirming the digital signature applied to the meta data, or using the meta data access control information multiplexed (or incorporated) into the meta data using a digital watermark. The meta data access control information verifier 42 transmits the confirmed publisher information of the meta data access control information and the meta data to the meta data determinator 44. The publisher of the content referring from the metal data is verified by the content verifier 43 to transmit the publisher of the content to the meta data determinator 44. The meta data determinator 44 checks whether or not the publisher of the meta data access control information is identical to the source of the content. If both are identical, the meta data determinator 44 determines that the meta data can be used for the content and permits the meta data to access the content.

As described above, this embodiment uses meta data access control information added to meta data and allows the reception device to determine, based on permission from the source of content, whether or not the meta data is permitted to control the content.

### (Embodiment 3)

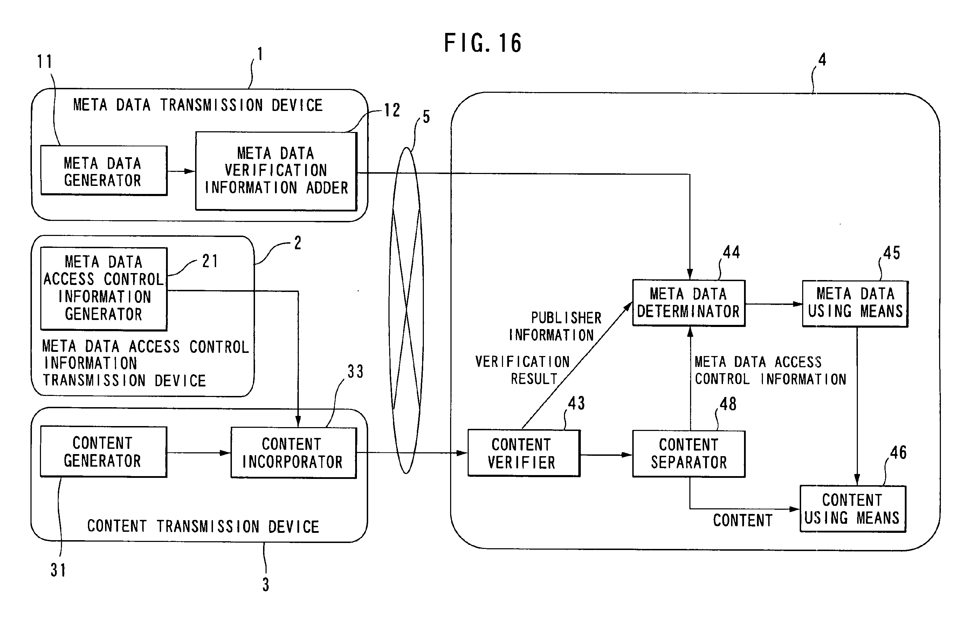

A third embodiment will now be described with reference to FIG. 16. FIG. 16 is a block diagram of a meta data access control system according to the third embodiment, which is constructed by adding a content incorporator (or combiner) 33 to the content transmission device 3 in the meta data access control system shown in FIG. 4, adding a content separator 48 to the reception device 4, and removing the meta data access control information verification information adder 22, the content verification information adder 32, the meta data verifier 41, and the meta data access control information verifier 42 from the meta data access control system of FIG. 4.

The following is the difference of the transmission device of the meta data access control system in this embodiment from that of the first embodiment. No meta data access control information verification information is added to meta data access control information created by the meta data access control information generator 21. No content verification information is added to content created by the content generator 31. Instead, the content incorporator 33 incorporates (or combines) the meta data access control information into (or with) the content and then transmits the content to the reception device.

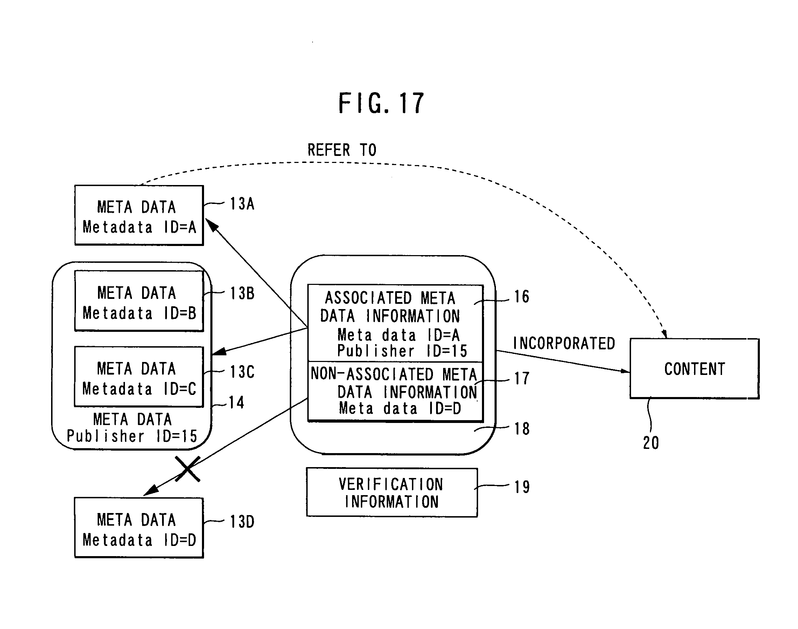

The difference of the reception device 4 in this embodiment from that of the first embodiment is that the content verifier 43 verifies a publisher of the meta data access control information and the content and the content separator 48 separates the meta data access control information from the content. Since the meta data access control information is incorporated into the content as shown in FIG. 17, the meta data access control information does not need to include the associated content information 18 which is included in the meta data access control information shown in FIG. 6. The other features are the same as that of the first embodiment.

A detailed example of this embodiment will now be described. The meta data transmission device 1 of this embodiment is similar to that of the first embodiment. The content incorporator 33 combines content generated by the content generator 31 with meta data access control information generated by the meta data access control information generator 21. One method of combining content with meta data access control information is to multiplex (or incorporate) the meta data access control information into the content using a digital watermark. Another method is to write the meta data access control information in a header of the content or write it in a file or resource of the content (when it is multipart content) to combine the content with the meta data access control information.

The content verifier 48 of the reception device 4 verifies that the meta data access control information is not separated from the content. In one method, the content verifier 48 performs the verification by confirming that the meta data access control information has been multiplexed into the content using a digital watermark. In another method, when meta data access control information is transmitted within a header of content or within a file or resource of multipart content, the reception device 4 performs the verification by confirming that it has obtained the content from a server of a service provider authenticated by service provider information such as a public key certificate stored in the reception device. In another method, the reception device 4 performs the verification by confirming that it has obtained the content from a reliable broadcast route and then specifying a content provider using a service provider ID, through which the content is broadcast, or specifying the source, from which it has obtained the content, using a corresponding content ID.

By verifying that the content is not separated from the meta data access control information, the content verifier 43 can determine that the source of the meta data access control information is identical to the source of the content. The content verifier 43 then transmits the verified source information of the meta data access control information to the meta data determinator 44. The content separator 48 separates the content and the meta data access control information from each other. The content separator 48 transmits the meta data access control information to the meta data determinator 44 and the content to the content using means 46. The meta data determinator 44 checks whether or not meta data to be used is present in associated meta data information of the meta data access control information. When the meta data to be used is listed in the associated meta data information, the meta data determinator 44 determines that the meta data is permitted to be used, otherwise it determines that the meta data is not permitted to be used. When associated meta data information specified by the meta data access control information corresponds to a public key certificate, the meta data determinator 44 determines that the meta data can be used to control the content if a digital signature of the meta data can be verified using the specified public key certificate.

As described above, this embodiment uses meta data access control information added to content and allows the reception device to determine, based on permission from the source of the content, whether or not the meta data is permitted to control the content.

### (Embodiment 4)

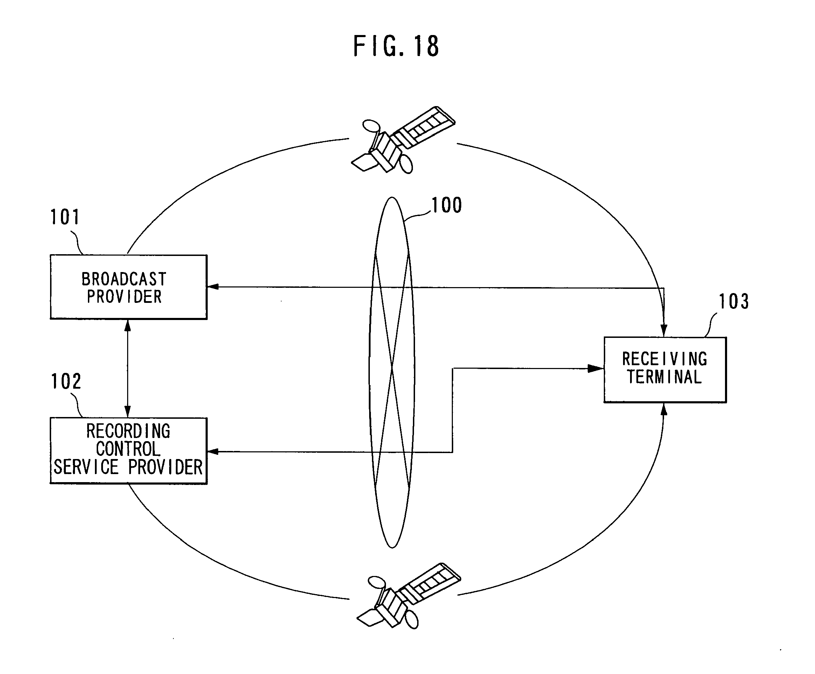

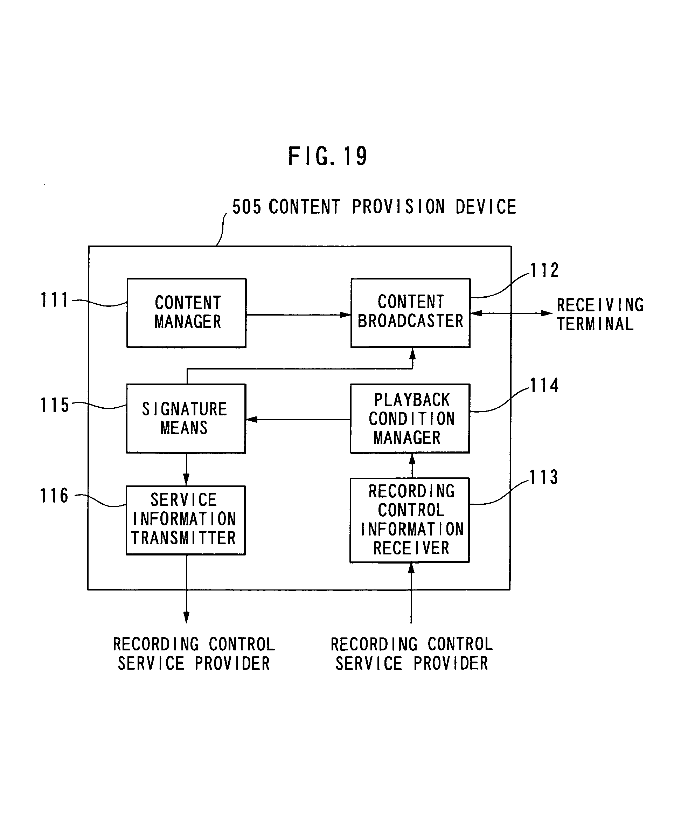

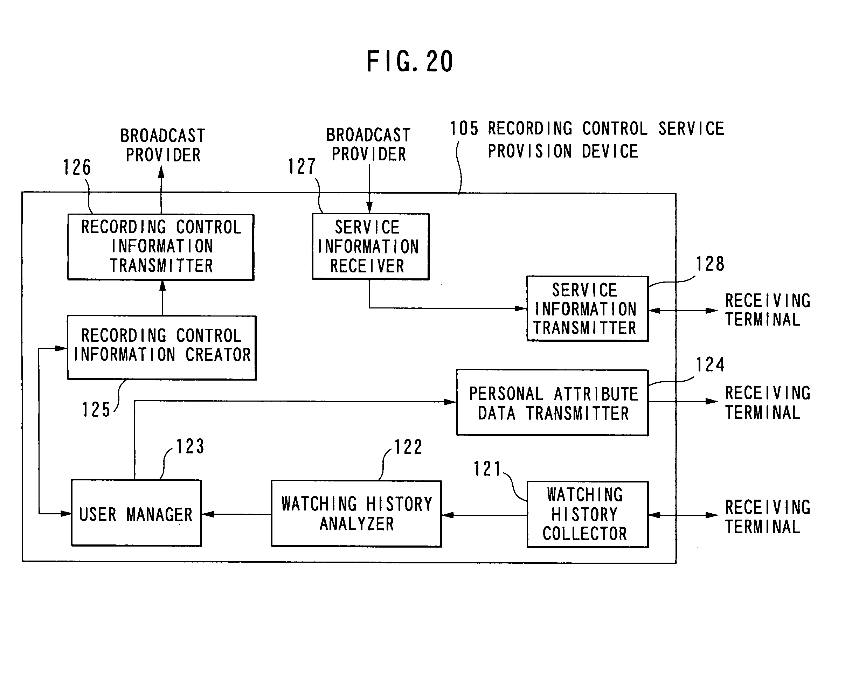

A fourth embodiment according to the present invention will now be described. In this embodiment, a detailed example of the meta data for storage control according to the present invention will be described with reference to a content recording control service system. FIG. 18 illustrates a schematic configuration of the content recording control service system to which the present invention is applied. This content recording control service system includes a broadcast provider 101 that provides content of broadcast programs, a recording control service provider 102 that is a storage control service provider connected to the broadcast provider 101, and a receiving terminal 103 that is a device for receiving content. The receiving terminal 103 is connected to the broadcast provider 101 and the recording control service provider 102 via a network 100. The network is a multicast network or a bidirectional network for broadcasts using radio waves or multicast broadcasts using an IP network. The broadcast provider 101 has a content provision device (denoted by "104" in FIG. 19) which distributes content to the receiving terminal 103. The recording control service provider 102 has a recording control service provision device (denoted by "105" in FIG. 20). The recording control service provision device 105 is a storage control service providing device for transmitting recording control information (for example, address control information) which is storage control information used to store content in the receiving terminal 103. The content provision device 104 is also connected to the recording control service provision device 105 and is designed to perform various processes for generating recording control service information which is storage control information.

The broadcast provider 101 can maintain content to be provided. An example of the content is digital data such as video or audio data. The term "broadcasts" used in this description refers to broadcasts based on radio waves such as broadcasts from a BS or CS 110 or terrestrial digital broadcasts or refers to IP broadcasts based on multicast communication over an IP network. Examples of the standard for broadcasts based on radio waves include ARIB STD-B10, B20, B21, B24, B31, and B32, and ARIB TR-B14 and B15.

This embodiment will be described below with reference to these broadcasts such as BS or CS 110 broadcasts or terrestrial digital broadcasts. However, application of this embodiment is not limited to these broadcasts. For example, this embodiment may be applied to a content distribution service that is provided according to a content distribution scheme over a bidirectional network, using meta data in a meta data format specified in specifications SP003 or SP004 of the TV Anytime Forum or a meta data format specified in MPEG7, or a content distribution service according to a server-based broadcast scheme specified in ARIB STD-B38.

The broadcast provider 101 can maintain playback conditions of the content to be provided. The playback conditions include watching restriction information regarding a restriction on watching content such as prohibition of skipping commercials when watching content, a restriction on the number of times content is watched, a restriction on the period of time in which watching is possible, and the like. One example of the restriction on the period of time in which watching is possible is that content is permitted to be played back except during a period of time between specific start and end times every day. The recording control service provider 102 can produce and maintain recording control information for storing content in the receiving terminal 103. The receiving terminal 103 is connected to the recording control service provider 102 via a multicast network or a bidirectional network for broadcasts using radio waves or multicast broadcasts using an IP network. The receiving terminal 103 can obtain and maintain playback conditions and recording control information from the recording control service provider 102. The receiving terminal 103 is also connected to the broadcast provider 101 via the multicast network or the bidirectional network. The receiving terminal 103 can obtain, store, and reproduce content from the broadcast provider 101.

FIG. 19 illustrates an internal configuration of the content provision device 104 included in the broadcast provider 101 in this embodiment. In FIG. 19, the content provision device 104 includes a content manager 111, a content broadcaster 112, a recording control information receiver (or acquirer) 113, a playback condition manager 114, a signature means 115, and a service information transmitter 116. The content manager 111 can maintain content to be provided. The content broadcaster 112 is connected to the receiving terminal 103 via the multicast network or the bidirectional network. The content broadcaster 112 can transmit content to the receiving terminal 103. The content broadcaster 112 can also obtain a certificate ID, indicating a signature used for a signature process, from the signature means 115. The content broadcaster 112 can also transmit information, which associates the certificate ID with a broadcast provider ID indicating a broadcast provider that has performed the signature process, to the receiving terminal 103 via the multicast network or the bidirectional network.

The recording control information receiver (or storage control information reception device) 113 can obtain recording control information, together with a recording control service provider ID, from the recording control service provider 102. Here, the recording control information is information, created by the recording control service provider 102, which allows the user to store content, and the recording control service provider ID is information identifying the recording control service provider 102. The playback condition manager 114 can obtain the recording condition information and the recording control service provider ID from the recording control information receiver 113. The playback condition manager 114 can also determine a playback condition based on the obtained service provider ID. The signature means 115 can obtain the playback condition and the recording control information from the playback condition manager 114 and perform a signature process. The service information transmitter 116 can obtain a certificate ID and the playback condition and the recording control information, which have been subjected to the signature process, from the signature means 115. The service information transmitter 116 can transfer the obtained playback condition, recording control information, certificate ID, and broadcast provider ID, as recording control service information, to the recording control service provider 102.

FIG. 20 illustrates an internal configuration of the recording control service provision device 105 included in the recording control service provider in this embodiment. In FIG. 20, the recording control service provision device 105 includes a watching history collector 121, a watching history analyzer 122, a user manager 123, a personal attribute data transmitter 124, a recording control information creator 125, a recording control information transmitter 126, a service information receiver 127, and a service information transmitter 128. The watching history collector 121 is connected to the receiving terminal 103 via the bidirectional network and can collect a content watching history of the user from the receiving terminal 103. The watching history analyzer 122 can obtain and analyze the content watching history from the watching history collector 121 to create personal attribute data that reflects preferences of the user. The user manager 123 can obtain the personal attribute data from the watching history analyzer 122 and maintain it in conjunction with a user ID. The personal attribute data transmitter 124 is connected to the receiving terminal 103 via the bidirectional network and can transmit the personal attribute data, maintained in the user manager 123, to the transmitting terminal 103.

The recording control information creator (or storage control information creator) 125 can operate in conjunction with the user manager 123 to create recording control information that allows the user to store content suited to their preferences. The recording control information creator 125 can also create recording control information, taking into consideration the intention of the recording control service provider. The recording control information transmitter (or storage control information transmission device) 126 can transmit the created recording control information and a recording control service provider ID indicating the recording control service provider ID to the content provision device 104. The service information receiver 127 can obtain recording control service information from the content provision device 104. The service information transmitter 128 is connected to the receiving terminal 103 via the multicast network or the bidirectional network and can transmit the recording control service information to the receiving terminal 103. When transmitting respective recording control service information of a plurality of broadcast providers to the receiving terminal 103, the service information transmitter 128 can divide and transmit their respective recording control service information to the service information transmitter 103.

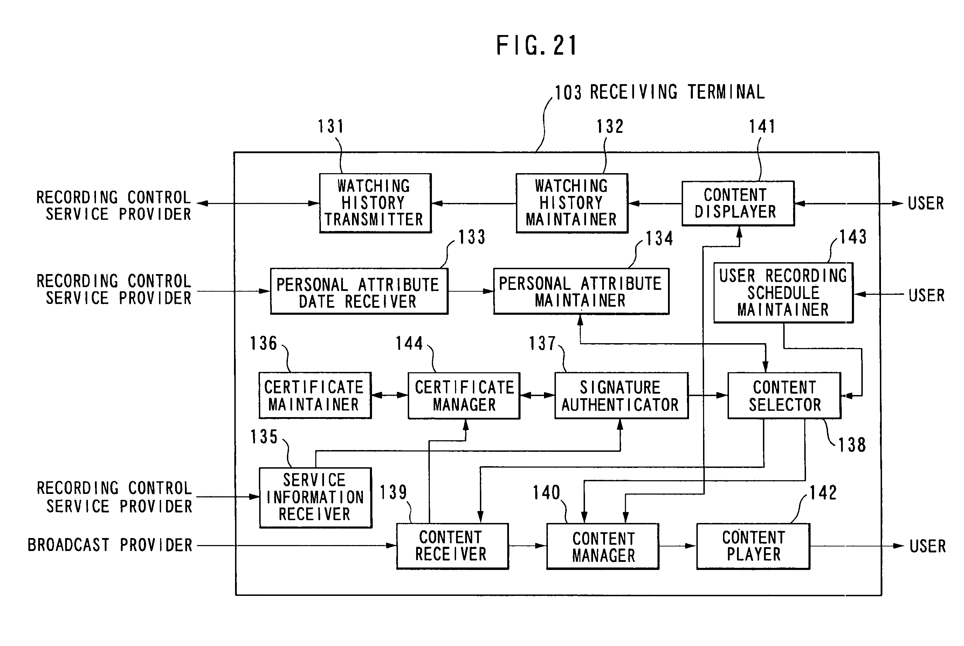

FIG. 21 illustrates an internal configuration of the receiving terminal 103 according to this embodiment. In FIG. 21, the receiving terminal 103 includes a watching history transmitter 131, a watching history maintainer (or storage) 132, a personal attribute data receiver 133, a personal attribute data maintainer 134, a service information receiver 135, a certificate maintainer 136, a signature authenticator 137, a content selector 138, a content receiver 139, a content manager 140, a content displayer 141, a content player 142, a user recording schedule maintainer 143, and a certificate manager 144. The watching history transmitter 131 is connected to the recording control service provision device 105 via the bidirectional network and can transmit a content watching history of the user, which is maintained (or stored) in the watching history maintainer 132, to the recording control service provision device 105. The watching history maintainer 132 can obtain and maintain information of content, which the user has watched, from the content displayer 141. The personal attribute data receiver 133 is connected to the recording control service provision device 105 via the multicast network or the bidirectional network and can obtain personal attribute data from the recording control service provision device 105. The personal attribute data maintainer 134 can obtain and maintain the personal attribute data from the personal attribute data receiver 133. The service information receiver 135 is connected to the recording control service provision device 105 via the multicast network or the bidirectional network and can obtain recording control service information from the recording control service provision device 105.

The certificate maintainer 136 can maintain a certificate for verifying a signature. The signature authenticator 137 can verify a signature of recording control information and a playback condition obtained from the recording control service provision device 105. Using the personal attribute data obtained from the personal attribute data maintainer 134, the content selector 138 can perform filtering on recording control information obtained from the signature authenticator 137 to select content to be stored. The content receiver 139 is connected to the content provision device 104 via the multicast network or the bidirectional network and can obtain the content selected by the content selector 138 from the content provision device 104.

The content receiver 139 can transfer information regarding association between a broadcast provider ID and a certificate ID to the certificate manager 144. The content manager 140 can obtain the content from the content receiver 139 and the playback condition of the content from the content selector 138 and then maintain the content and the playback condition together. The content displayer 141 can present information of the content to the user in response to a request from the user. The content player 142 can reproduce stored content according to the playback condition. The user recording schedule maintainer 143 can maintain information of the content that is timer programmed to record by a user. The certificate manager 144 can maintain the association information between the broadcast provider ID and the certifier ID obtained from the content receiver 139. When a single broadcast provider may have a plurality of certificates, the association information may associate the plurality of certificates with the single broadcast provider.

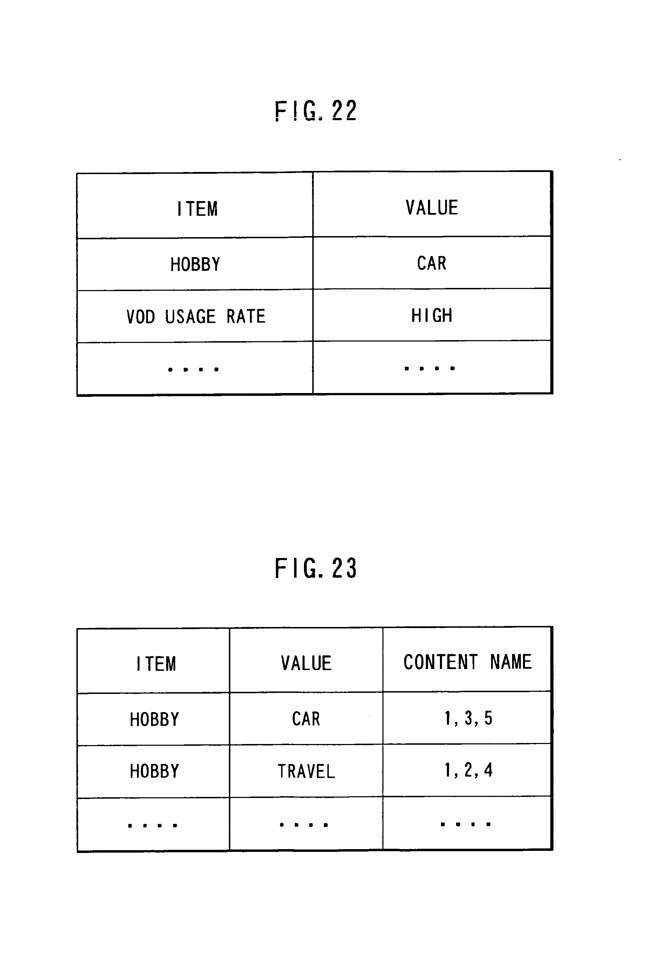

A description will now be given of how the recording control system in this embodiment operates. First, a method for creating personal attribute data is described. When the user joins the service or at regular intervals after the user joins the service, the watching history collector 121 in the recording control service provision device 105 obtains content watching history of the user from the watching history transmitter 131 via the bidirectional network. The watching history analyzer 122 analyzes the watching history obtained by the watching history collector 121 to create personal attribute data. FIG. 22 illustrates an example of the personal attribute data. As shown in FIG. 22, the personal attribute data is an association table in which attribute items are associated with respective values. The created personal attribute data is maintained (i.e., stored) in the user manager 123 in the recording control service provision device 105 and is also transmitted from the personal attribute data transmitter 124 to the personal attribute data receiver 133 in the receiving terminal 103 via the multicast network or the bidirectional network. The personal attribute data received by the personal attribute data receiver 133 in the receiving terminal 103 is maintained in the personal data maintainer 134.

The recording control information is created in the following manner. The recording control information creator 125 in the recording control service provision device 105 obtains items of the personal attribute data from the user manager 123 and creates recording control information that allows content suited to the preferences of the user to be stored in the receiving terminal 103. The recording control information creator 125 can also create recording control information that allows storage of not only the content suited to the preferences of the user but also content that the recording control service provider desires to store. FIG. 23 illustrates an example of the created recording control information. As shown in FIG. 23, the recording control information is an association table of items, values, and content. For example, when an item "hobby" has a value "car", content "1", "3", and "5" are stored in the receiving terminal 103.

The recording control service information is created in the following manner. The recording control information receiver 113 in the content provision device 104 obtains recording control information and a recording control service provider ID from the recording control service provision device 105. The recording control information receiver 113 transfers the obtained recording control information and recording control service provider ID to the playback condition manager 114. The playback condition manager 114 determines a playback condition corresponding to the obtained recording control service provider ID with reference to playback conditions of recording control service providers, which are predetermined based on contracts with the recording control service providers. The playback condition predetermined based on the contract differs for each recording control service provider and is applied to all content that the recording control service provider allows to be stored in the recording terminal 103.

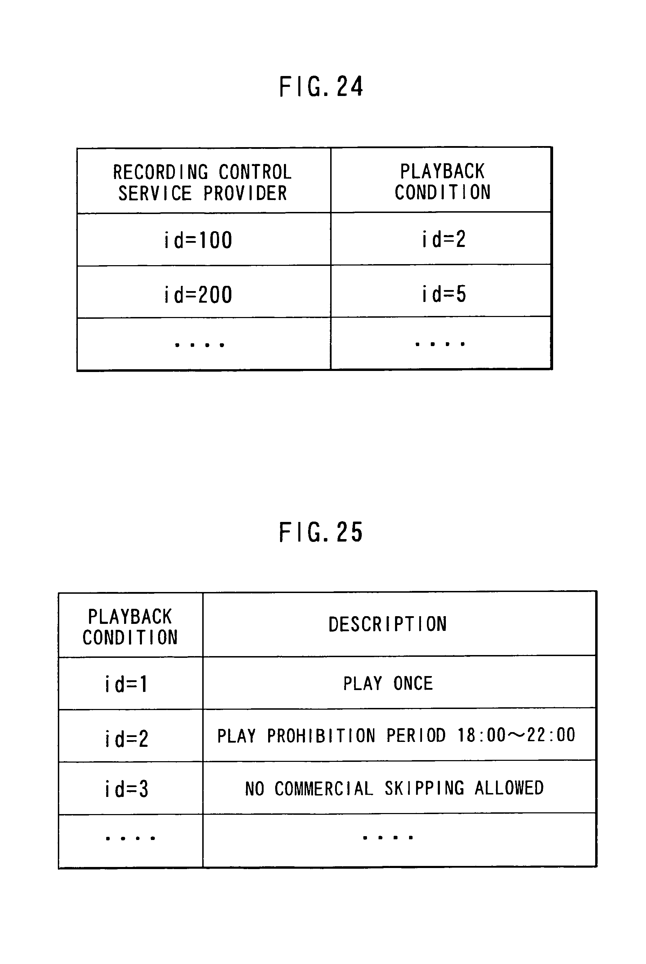

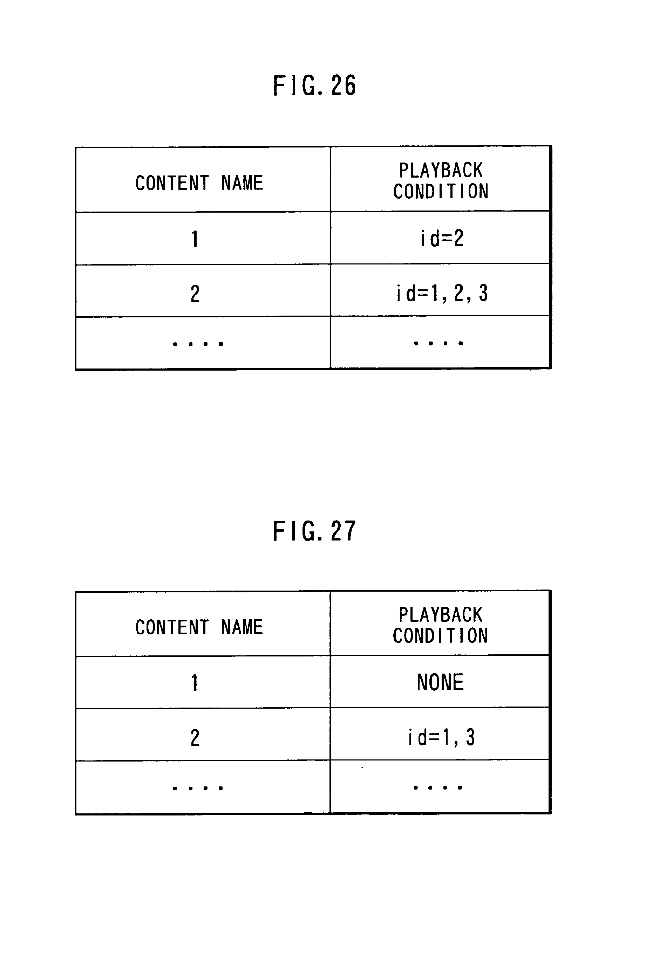

FIG. 24 illustrates an example of an association table in which recording control service provider IDs are associated with respective playback conditions. As shown in FIG. 24, for example, a recording control service provider "id=100" applies a playback condition "id=2" in a list of playback conditions to all content to be stored in the receiving terminal. FIG. 25 illustrates an example of the playback condition list. As shown in FIG. 25, for example, a playback condition "id=1" is a condition that the number of times playback is performed is 1. The playback condition manager 114 then determines a playback condition corresponding to the content written in the recording control information based on an association table in which content names are associated with respective playback conditions. FIG. 26 illustrates an example of the association table in which content names are associated with respective playback conditions. As shown in FIG. 26, for example, playback conditions "id=1,3" in the playback condition list are applied to a content name "2". The playback condition manager 114 creates a new association table of content names and playback conditions based on both the association table of recording control service provider IDs and playback conditions and the association table of content names and playback conditions.

FIG. 27 illustrates an example of the newly created association table. The association table of FIG. 27 is created from those of FIGS. 24 and 26. For example, no playback condition is assigned to the content name "1" in the association table of FIG. 26, whereas a playback condition "id=2" is added to that of FIG. 27. The playback condition manager 114 transfers both the playback condition list and the newly created association table, together with the recording control information, to the signature means 115. Here, both the playback condition list and the newly created association table are transferred as a playback condition to the signature means 115. The signature means 115 has maintained (or stored) therein pairs of secret and public keys that are associated with certificate IDs, and performs a signature process on the obtained playback condition and recording condition information using a corresponding secret key. The signature process may be performed using the ITU-T X. 509 standard or the like. The signature means 115 transfers the playback condition and the recording control information, which have been subjected to the signature process, together with a certificate ID corresponding to the secret key used for the signature process, to the information transmission device 116. The service information transmitter 116 in the content provision device 104 transfers the obtained playback condition, recording control information, and certificate ID and the broadcast provider ID, as recording control service information, to the recording control service provision device 105. The service information receiver 127 in the recording control service provision device 105 transfers the recording control service information obtained from the content provision device 104 to the service information transmitter 128, which then transmits the recording control service information to the receiving terminal 103 via the multicast network or the bidirectional network.

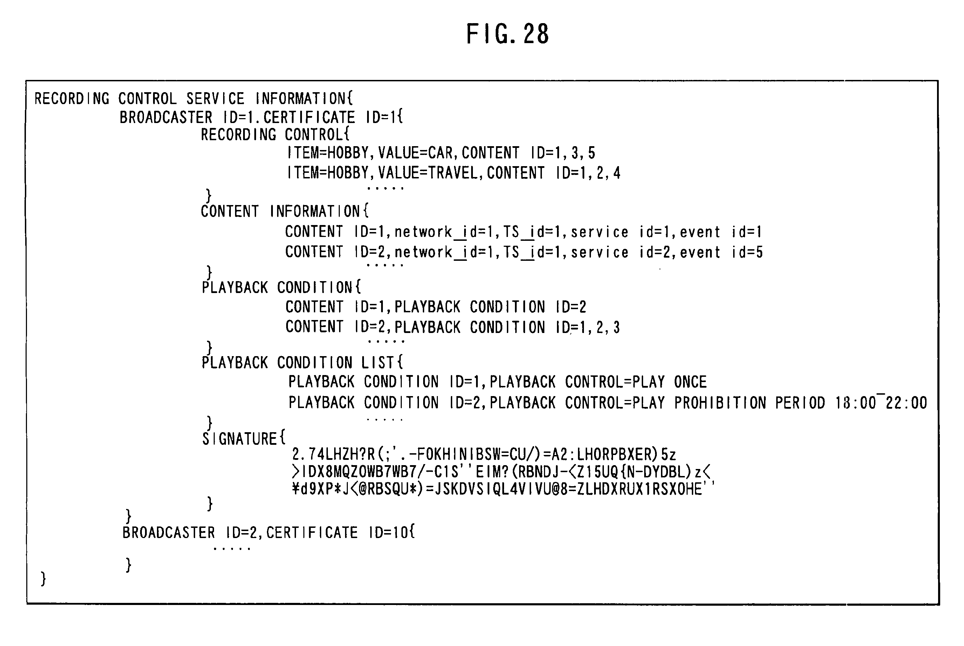

FIG. 28 illustrates an example data format of the recording control service information. As shown in FIG. 28, the recording control service information is divided into information elements corresponding respectively to broadcast provider IDs and a signature is applied to the information of each broadcast provider. Data of "recording control" and data of "content information" in FIG. 28 corresponds to the recording control information.

A description will now be given of how content is stored. The service information receiver 135 in the receiving terminal 103 transfers recording control service information obtained from the recording control service provision device 105 to the signature authenticator 137. The signature authenticator 137 in the receiving terminal 103 transfers a certificate ID and a broadcast provider ID written in the obtained recording control service information to the certificate manager 144. The certificate manager 144 verifies the obtained certificate and broadcast provider IDs based on maintained association information of certificate IDs and broadcast provider IDs. A plurality of certificate IDs may be associated with one broadcast provider 1D. in this case, a broadcast provider ID is searched for using the certificate ID obtained from the signature authenticator 137 and, if the found broadcast provider ID is identical to the broadcast ID obtained from the signature authenticator 137, it is determined that the certificate and broadcast IDs obtained from the signature authenticator 137 are valid.

When the certificate and broadcast IDs obtained from the signature authenticator 137 have been verified, the certificate manager 144 in the receiving terminal 103 transfers the certificate ID to the certificate maintainer 136. The certificate maintainer 136 searches therein for a maintained certificate based on the obtained certificate ID and transfers the found certificate to the signature authenticator 137 via the certificate manager 144. If no certificate corresponding to the specified certificate ID is maintained in the certificate maintainer 136, a certificate corresponding to the specified ID can be obtained from a reliable authority. An example of the reliable authority is a certificate issuer corresponding to a route certificate maintained in the certificate maintainer 136. The signature authenticator 137 verifies the signature of the recording control service information using the obtained certificate. The signature authenticator 137 transfers the verified recording control service information to the content selector 138.

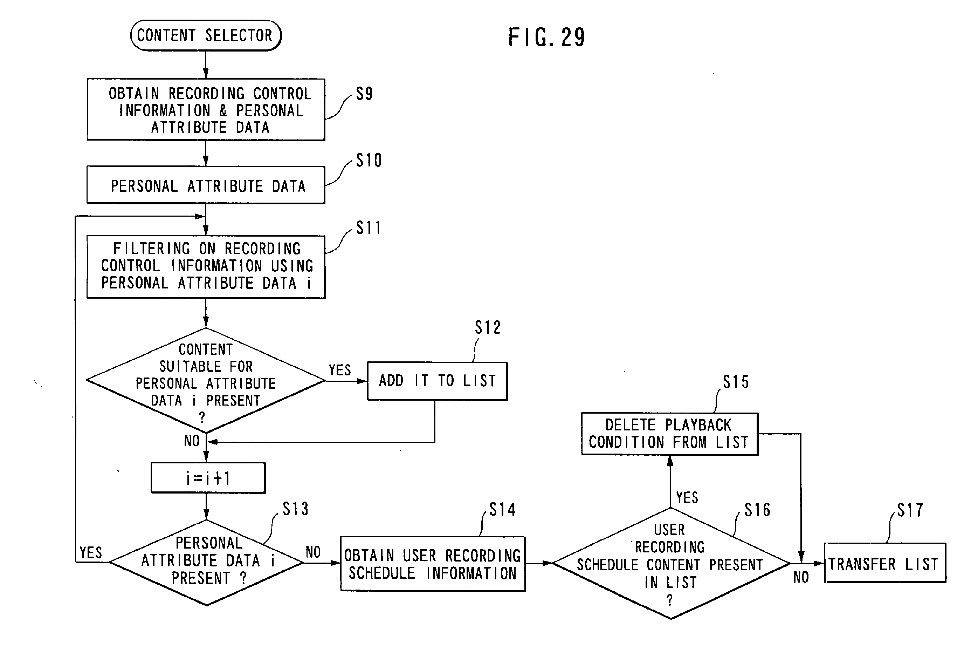

A description of how the content selector 138 in the receiving terminal 103 operates will now be given with reference to a flowchart of FIG. 29. The content selector 138 performs filtering on the elements of the recording control information (S9) obtained from the signature authenticator 137 one by one using personal attribute data (S10) obtained from the personal attribute data maintainer 134 (S11).

If it is determined through the filtering that suitable content is present, the content selector 138 selects the content and creates a recording schedule management list of the selected content (S12). The content selector 138 repeats the filtering until no personal attribute data is left (S13). After performing the filtering until no personal attribute data is left, the content selector 138 obtains information of content, for which the user has personally scheduled a recording, from the user recording schedule maintainer 143 (S14). The content selector 138 then determines whether or not the content, for which the user has personally scheduled a recording, is included in the recording schedule management list (S15). If the content is included in the recording schedule management list, the content selector 138 deletes the content from the recording schedule management list (S16).

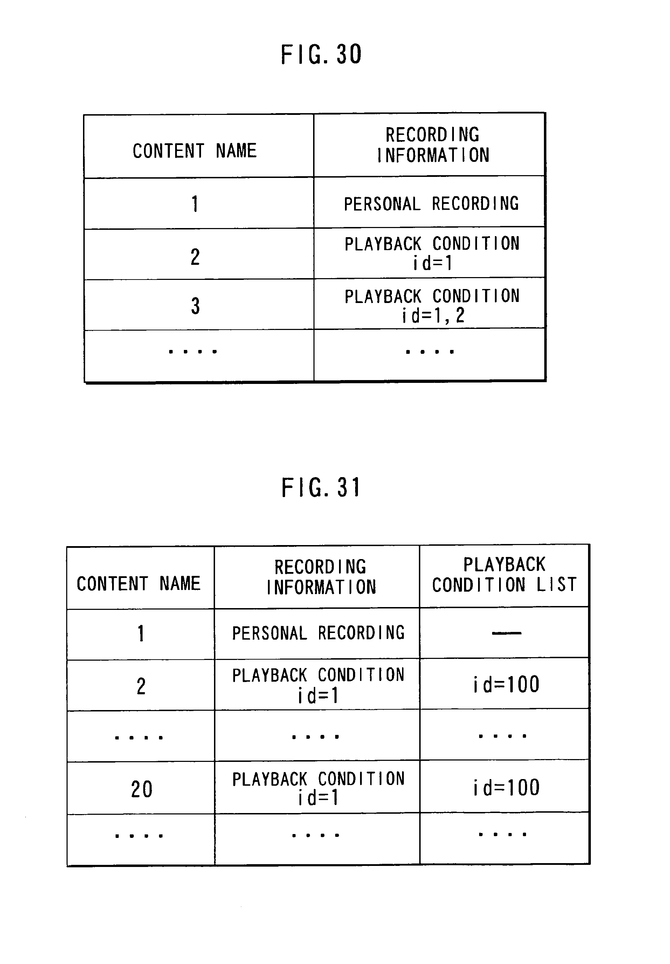

FIG. 30 illustrates an example of the finally created recording schedule management list. As shown in FIG. 30, for example, no playback condition is assigned to a content name "1" since the user has personally scheduled a recording thereof, whereas a playback condition "id=1" in the playback condition list is assigned to a content name "2" so that the playback condition "id=1" must be stored as a playback condition of the content name "2" so that it is applied when reproducing content of the content name "2". The content selector 138 transfers the recording schedule management list of the selected content and the broadcast provider ID to the content receiver 139 and also transfers the playback condition list to the content manager 140 (S17). Based on the association table of broadcast provider IDs and content obtained from the content provision device 104 via the multicast network or the bidirectional network, the content receiver 139 verifies the content of the recording schedule management list obtained from the content selector 138, i.e., checks whether or not it is content of the broadcast provider identified by the obtained broadcast provider ID.

The content receiver 139 in the receiving terminal 103 obtains the verified content from the content provision device 104 via the multicast network or the bidirectional network. The content receiver 139 transfers the obtained content to the content manager 140. The content manager 140 stores the content obtained from the content receiver 139 and the playback condition list obtained from the content selector 138 together. The content manager 140 creates a stored content management list to manage the stored content and playback conditions. FIG. 31 illustrates an example of the stored content management list. As shown in FIG. 31, the stored content management list is an association table in which content names are associated with respective playback conditions. For example, this association table indicates that a playback condition "id=1" in a playback condition list "id=100" must be applied when reproducing content of a content name "2". In the above description, the filtering is performed on the elements of the recording control information one by one using the personal attribute data. However, the filtering may also be performed on the elements of the recording control information at the same time using a plurality of personal attribute data.

A description will now be given of how content is reproduced. The content displayer 141 presents information of the content to the user in response to a request from the user. When the user has requested that content stored in the content manager 140 be viewed, the content manager 140 transfers the content, together with a corresponding playback condition if any, to the content player 142. The content player 142 reproduces the content according to a playback condition if the playback condition is present and reproduces the content according to the request of the user if no playback condition is present.

As described above, this embodiment stores content and a playback condition of the content together, thereby allowing the broadcast provider to specify the playback condition of the content, and does not apply the specified playback condition to the content when the user has personally scheduled a recording for the content, thereby maintaining the existing rights of the user.

In this embodiment, although the certificate for verifying the signature has been described above as being stored in the receiving terminal, the certificate may also be obtained from the broadcast provider or other reliable entities.

### (Embodiment 5)

A fifth embodiment of the present invention will now be described. In the fourth embodiment, the content recording control service is provided for free. However, there is a need to charge for the content recording control service, taking into consideration the costs for operation of the service. Thus, this embodiment further includes a dealer that performs a charging process to charge for the content recording control service.

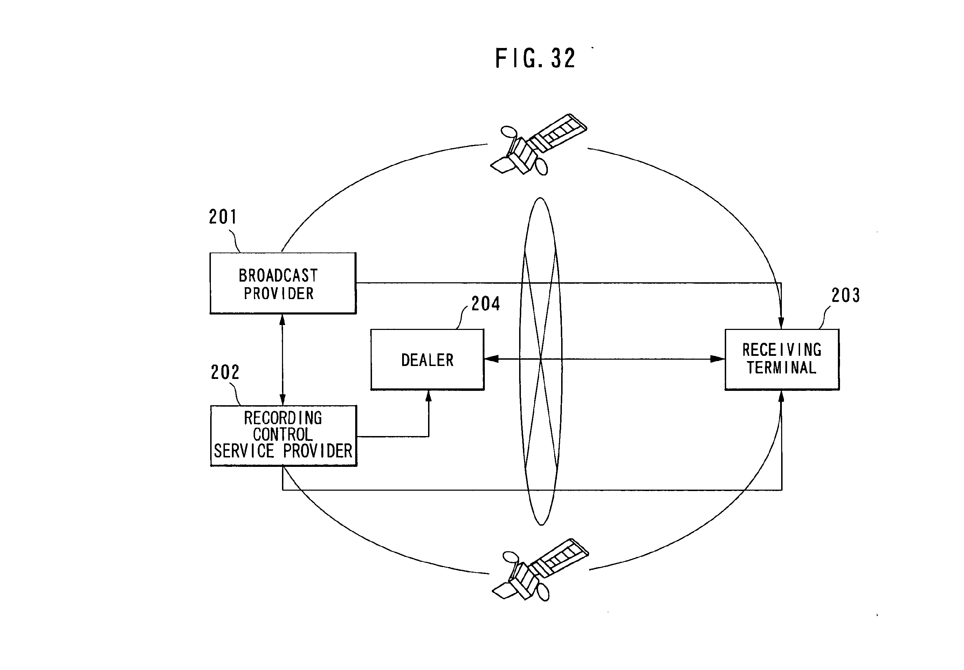

FIG. 32 illustrates an example of the configuration of a content recording control service system in this embodiment. This content recording control service system includes a broadcast provider 201, a recording control service provider 202, a receiving terminal 203, and a dealer 204. The broadcast provider 201 can maintain (or store) content to be provided. The broadcast provider 201 can also maintain playback conditions of the content to be provided. The recording control service provider 202 can create and maintain recording control information that allows the receiving terminal to store content. The receiving terminal 203 is connected to the recording control service provider 202 via a multicast network or a bidirectional network and can obtain and maintain playback conditions and recording control information from the recording control service provider 202. The receiving terminal 203 is also connected to the broadcast provider 201 via the multicast network or the bidirectional network and can obtain, store, and reproduce content from the broadcast provider 201. The dealer 204 can obtain and maintain a key, which has been used to encrypt the playback conditions and the recording control information, from the recording control service provider 202. The dealer 204 is connected to the receiving terminal 203 via the bidirectional network and can transmit the key obtained from the recording control service provider to the receiving terminal 203. The broadcast provider 201 has a content provision device 104 similar to that of the fourth embodiment.

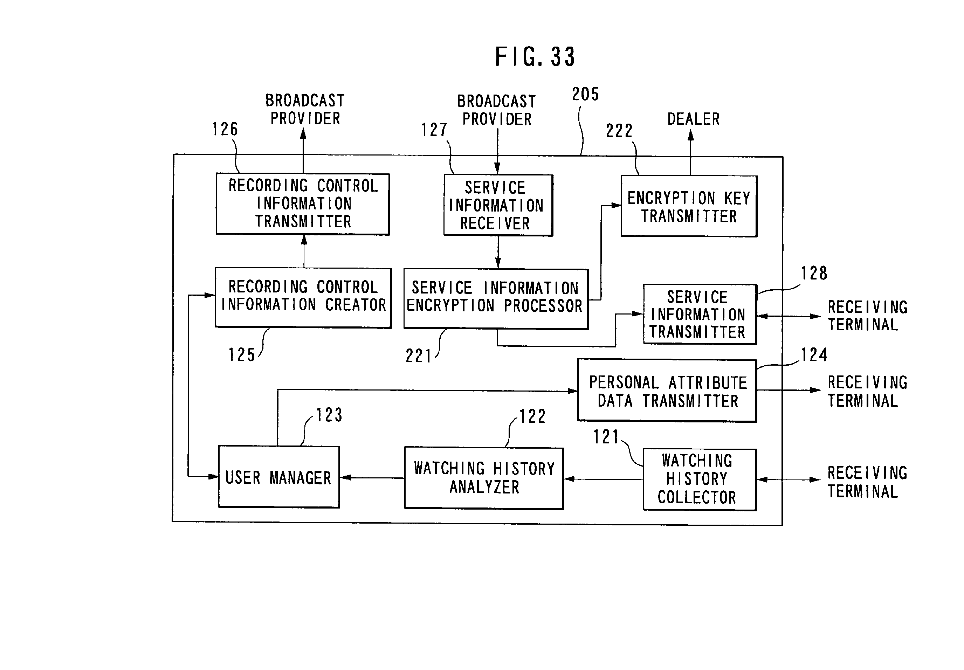

FIG. 33 illustrates an example internal configuration of a recording control service provision device 205, which is a storage control service providing device included in the recording control service provider 202 in this embodiment. In this recording control service provision device 205, a service information encryption processor 221 is provided to encrypt recording control service information, which the service information receiver 127 has obtained from the content provision device 104 of the broadcast provider and which has been subjected to a signature process. An encryption key transmission device 222 is also provided to transfer a key, which the service information encryption processor 221 has used to perform the encryption, to the dealer 204. The other elements of the recording control service provision device 205 are similar to those of FIG. 20.

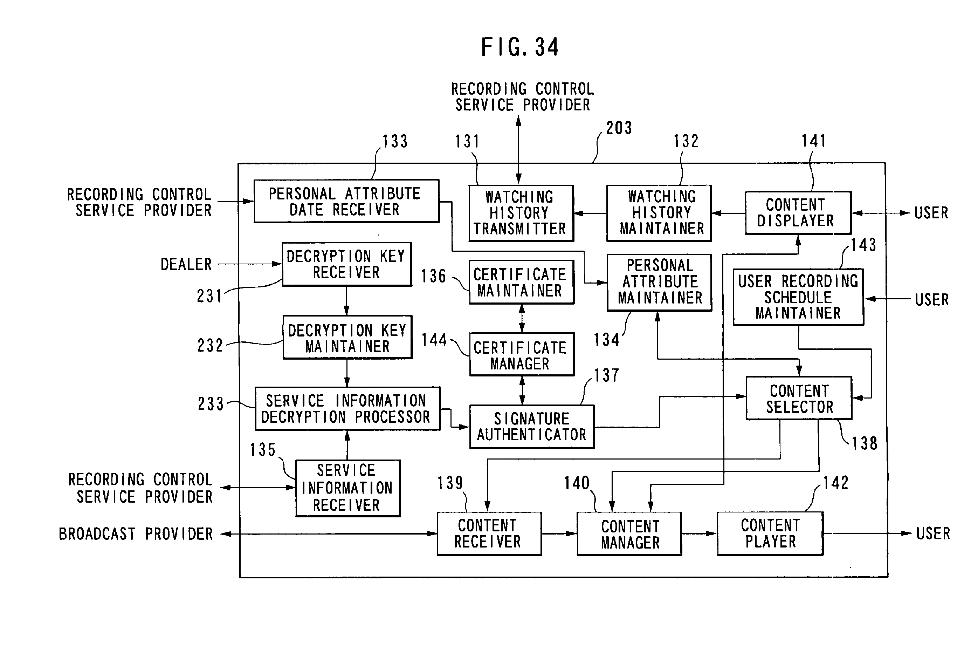

FIG. 34 illustrates an example internal configuration of the receiving terminal 203 in this embodiment. In this receiving terminal 203, a decryption key receiver (or acquirer) 231 is connected to the dealer 204 via the bidirectional network and can obtain a key for decrypting recording control service information from the dealer 204. A decryption key maintainer 232 can maintain the key that the decryption key receiver 231 has obtained from the dealer 204. A service information decryption processor 233 is also provided to decrypt the recording control service information, which the service information receiver 135 has obtained from the recording control service provision device 205, using the decryption key maintained in the decryption key maintainer 232. The other elements of the receiving terminal 203 are similar to those of FIG. 21.

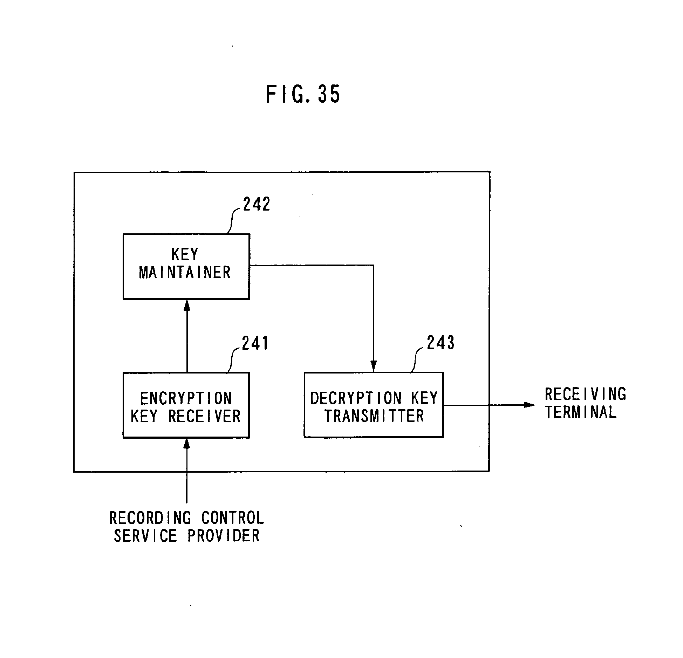

FIG. 35 illustrates an example internal configuration of the dealer 204 in this embodiment. The dealer 204 includes an encryption key receiver 241, a key maintainer 242, and an encryption key transmission device 243. The encryption key receiver 241 can obtain an encryption key, which has been used to encrypt recording control service information, from the recording control service provision device 205. The key maintainer 242 can maintain the encryption key obtained by the encryption key receiver 241. The decryption key transmitter 243 is connected to the receiving terminal 203 via the bidirectional network and can transmit a key for decrypting the recording control service information, maintained in the key maintainer 242, to the receiving terminal 203.

A description will now be given of how the content storage control service system in this embodiment operates. In this embodiment, personal attribute data is created in the same manner as that of the fourth embodiment. The created personal attribute data is maintained in the personal attribute data maintainer 134.

Recording control information is created in the same manner as that of the fourth embodiment. The created recording control information is transferred from the recording control information transmitter 126 to the content provision device 104 of the broadcast provider.

Recording control service information is created in the same manner as that of the fourth embodiment. The created recording control service information is encrypted by the service information encryption processor 221 and is transmitted from the service information transmitter 128 to the receiving terminal 203 via the multicast network or the bidirectional network. Examples of the method for encrypting the information include those described in Japanese Patent Application Publication Nos. 2001-142472 and 2001-142786.

The following is a description of how keys are sold. The encryption key transmission device 222 transfers a key, which the service information encryption processor 221 has used to perform the encryption, to the dealer 204. The encryption key receiver 241 receives the key from the encryption key transmission device 222 and transfers it to the key maintainer 242. The key maintainer 242 maintains the obtained key. The decryption key transmitter 243 transmits the key maintained in the key maintainer 242 to the receiving terminal 203 via the bidirectional network in response to a request from the user. The decryption key receiver 231 receives the key transmitted from the decryption key transmitter 243 and transfers it to the decryption key maintainer 232. The decryption key maintainer 232 maintains the obtained key.

A content is stored in the following manner. The service information receiver 135 transfers recording control service information obtained from the recording control service provider to the service information decryption processor 233. The service information decryption processor 233 decrypts the obtained recording control service information using the key maintained in the decryption key maintainer 232. The service information decryption processor 233 transfers the decrypted recording control service information to the signature authenticator 137. The subsequent operation until the content is stored is similar to that of the fourth embodiment.

A content is reproduced in the same manner as that of the first embodiment.

As described above, this embodiment further includes the dealer which allows the content recording control service to be provided for a fee, thereby maintaining the rights of the broadcast provider and the recording control service provider, in addition to achieving the advantages of the fourth embodiment.

### (Embodiment 6)

A sixth embodiment of the present invention will now be described. In the fourth embodiment, playback conditions, together with recording control information, are transmitted from the recording control service provider to the receiving terminal. This embodiment differs from the fourth embodiment in that playback conditions are transmitted from the broadcast provider to the receiving terminal.

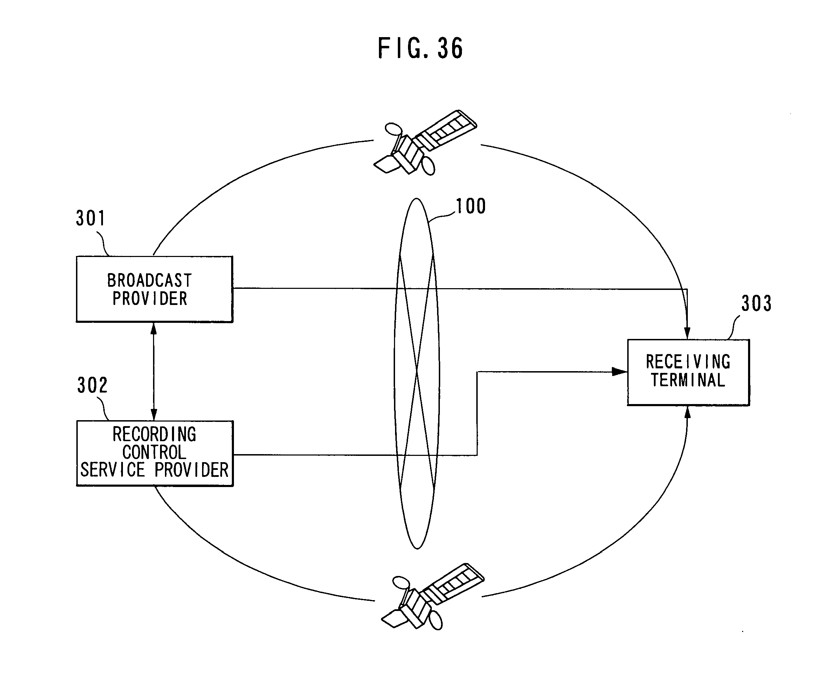

FIG. 36 illustrates an example configuration of a content recording control service system in this embodiment. This content recording control service system includes a broadcast provider 301, a recording control service provider 302, and a receiving terminal 303. The broadcast provider 301 can maintain (or store) playback conditions of the content maintained therein. The recording control service provider 302 can create and maintain recording control information that allows the receiving terminal 303 to store content. The receiving terminal 303 is connected to the recording control service provider 302 via the multicast network or the bidirectional network and can obtain and maintain the recording control information from the recording control service provider 302. The receiving terminal 303 is connected to the broadcast provider 301 via the multicast network or the bidirectional network and can obtain and store content and a playback condition from the broadcast provider 301 and can reproduce the content according to the playback condition.

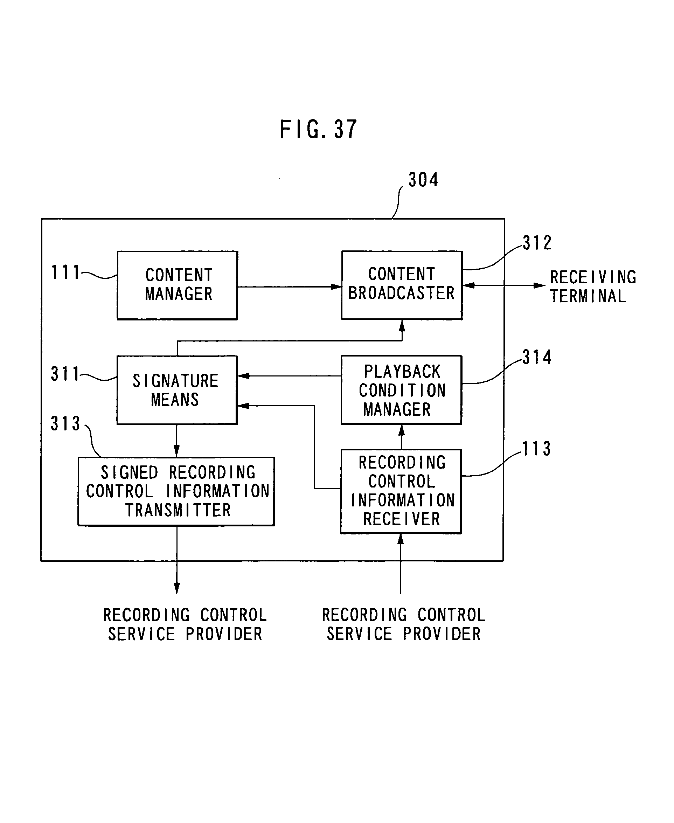

FIG. 37 illustrates an example internal configuration of a content provision device 304 included in the broadcast provider 301 in this embodiment. The content provision device 304 includes a content manager 111, a recording control information receiver (or acquirer) 113, a signature means 311, a content broadcaster 312, a signed recording control information transmitter 313, and a playback condition manager 314. The signature means 311 can perform a signature process on a playback condition managed in the content manager 111. The signature means 311 can also perform a signature process on recording control information that the recording control information receiver has obtained from the recording control service provider 302. In the following description, the information, on which the signature process has been performed, is also referred to as "signed information". The content broadcaster 312 is connected to the receiving terminal 303 via the multicast network or the bidirectional network and can transmit the content and the signed playback condition to the receiving terminal 303. The signed recording control information transmitter 313 can transmit the signed recording control information, on which the signature means 311 has performed the signature process, to the recording control service provider 302. The playback condition manager 314 can determine a playback condition based on the recording control information obtained from the recording control information receiver 113. The other elements of the content provision device 304 are similar to those of FIG. 19.

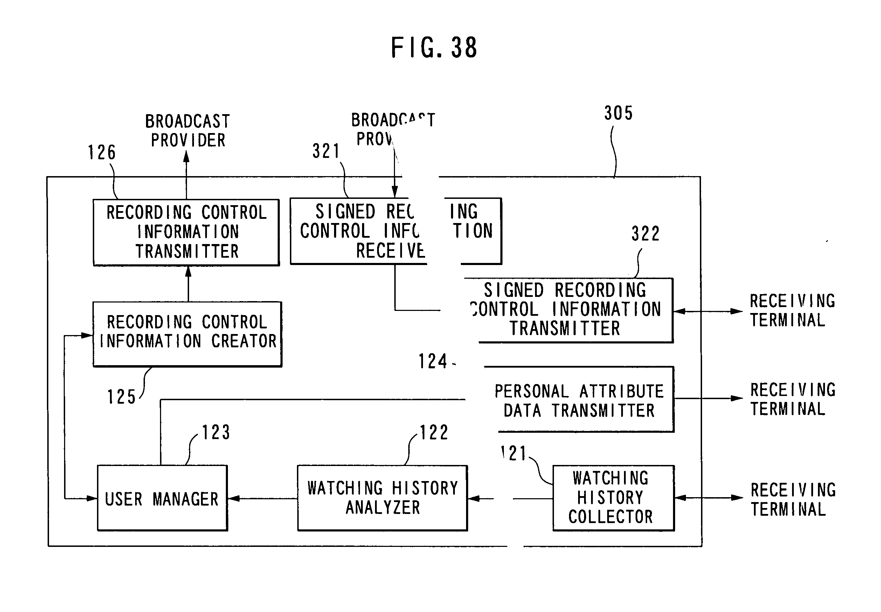

FIG. 38 illustrates an example internal configuration of a recording control service provision device 305 which is a storage control service providing device included in the recording control service provider 302 in this embodiment. In this recording control service provision device 305, a signed recording control information receiver 321 is provided to receive the signed recording control information from the content provision device 304. The signed recording control information transmitter 322 can transmit the signed recording control information to the receiving terminal 303 via the multicast network or the bidirectional network. The other elements of the recording control service provision device 305 are similar to those of FIG. 20.

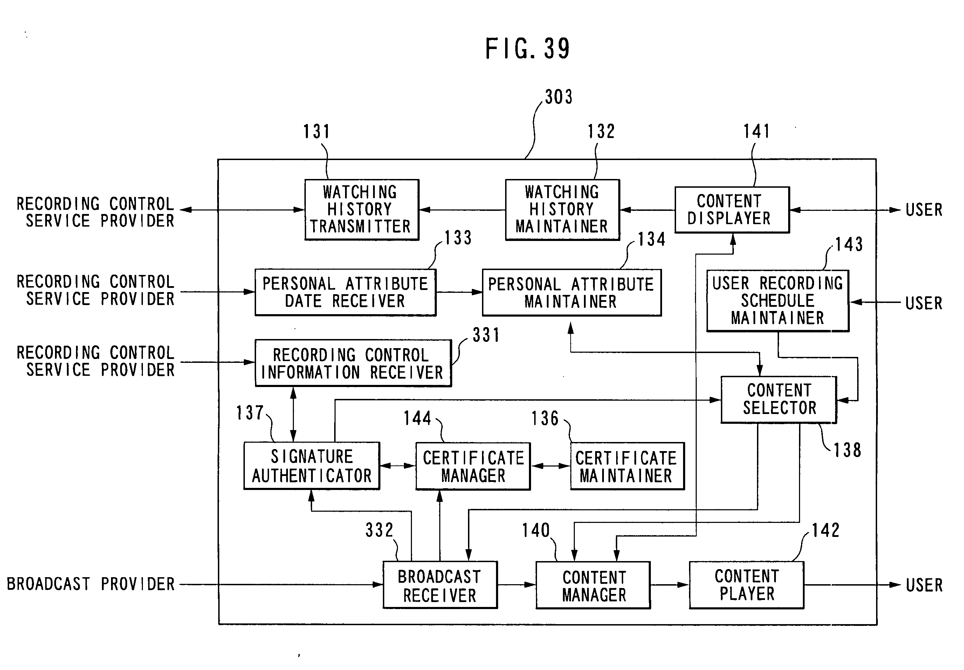

FIG. 39 illustrates an example internal configuration of the receiving terminal 303 in this embodiment. In the receiving terminal 303, a recording control information receiver 331 is connected to the recording control service provision device 305 via the multicast network or the bidirectional network and can receive recording control information from the recording control service provision device 305. A broadcast receiver 332 is connected to the content provision device 304 via the multicast network or the bidirectional network and can receive content and a playback condition from the content provision device 304. The other elements of the receiving terminal 303 are similar to those of FIG. 21.

A description will now be given of how the recording control service system in this embodiment operates. In this embodiment, personal attribute data is created in the same manner as that of the fourth embodiment. The created personal attribute data is maintained in the personal attribute data maintainer 134.

Recording control information is created in the same manner as that of the fourth embodiment. The created recording control information is transferred from the recording control information transmitter 126 to the recording control information receiver 113. The signature means 311 receives the recording control information from the recording control information receiver 113 and performs a signature process on it. The signed recording control information transmitter 313 transfers the signed recording control information and a certificate ID obtained from the signature means 311, together with a broadcast provider ID, to the signed recording control information receiver 321. The signed recording control information transmitter 322 receives the recording control information from the signed recording control information receiver 321 and transmits it to the receiving terminal 303 via the multicast network or the bidirectional network. FIG. 40 illustrates an example data format of the recording control information transmitted to the receiving terminal. As shown in FIG. 40, the recording control service information is divided into information elements corresponding respectively to broadcast provider IDs and a signature is applied to the information of each broadcast provider.

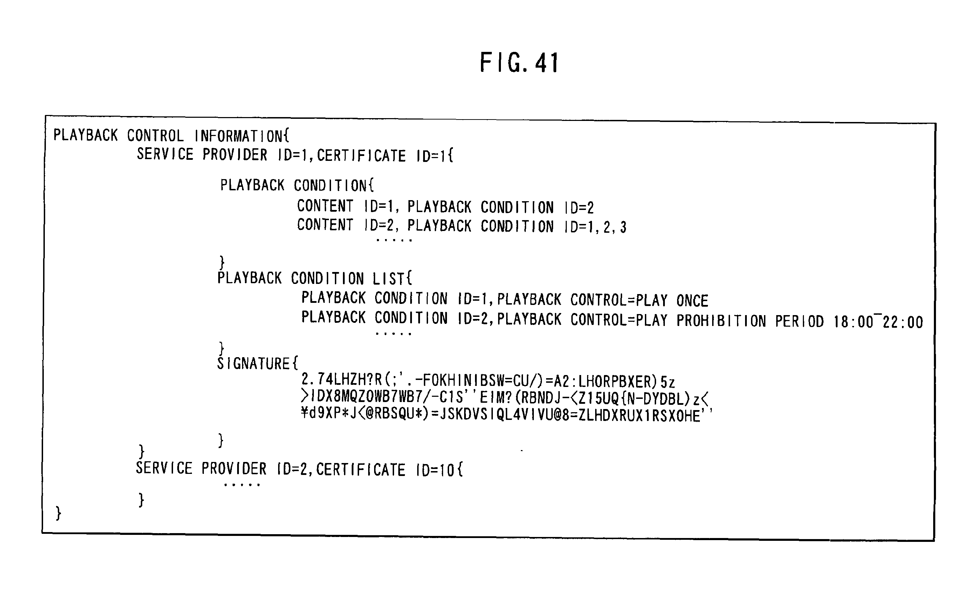

A playback condition is created in the following manner. The playback condition manager 314 receives recording control information from the recording control information receiver 113, which has received the recording control information from the recording control service provision device 305. The playback condition manager 314 determines a playback condition corresponding to content written in the recording control information based on an association table of content and playback conditions. The playback condition manager 314 transfers the determined playback condition to the signature means 311. The signature means 311 performs a signature process on the received playback condition and transfers the signed playback condition to the content broadcaster 312. The content broadcaster 312 transmits the received playback condition, together with the content, to the receiving terminal 303 via the multicast network or the bidirectional network. FIG. 41 illustrates an example data format of the playback condition information transmitted to the receiving terminal 303. As shown in FIG. 41, the playback condition information is divided into information elements corresponding respectively to recording control service provider IDs and a signature is applied to the information of each recording control service provider.

A content is stored in the following manner. The recording control information 331 transfers recording control information received from the recording control service provision device 305 to the signature authenticator 137. The broadcast receiver 332 transfers a playback condition received from the content provision device 304 to the signature authenticator 137. The signature authenticator 137 verifies a signature of each of the recording control information and the playback condition. The signature authenticator 137 performs the verification in the same manner as that of the fourth embodiment. The subsequent operation until the content is stored is similar to that of the fourth embodiment.

Content is reproduced in the same manner as that of the fourth embodiment.

As described above, in this embodiment, each broadcast provider, rather than each recording control service provider, transmits playback conditions to the receiving terminal so that the receiving terminal stores the playback conditions, thereby preventing data loss.

### (Embodiment 7)

A seventh embodiment of the present invention will now be described. In the fourth embodiment, the recording control service provider creates recording control information. However, in this embodiment, the receiving terminal creates recording control information.

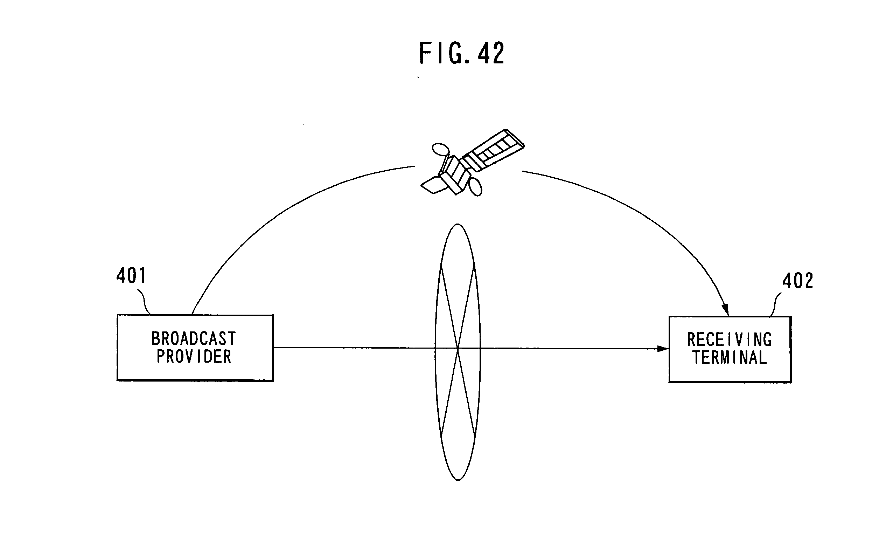

FIG. 42 illustrates an example configuration of a content storage control service system in this embodiment. This content storage control service system includes a broadcast provider 401 and a receiving terminal 402. The broadcast provider 401 can maintain a content to be provided. The broadcast provider 401 can maintain playback conditions of the content maintained therein. The receiving terminal 402 is connected to the broadcast provider via a multicast network or a bidirectional network and can obtain and store content and a playback condition from the broadcast provider 401 and can reproduce the content according to the playback condition.

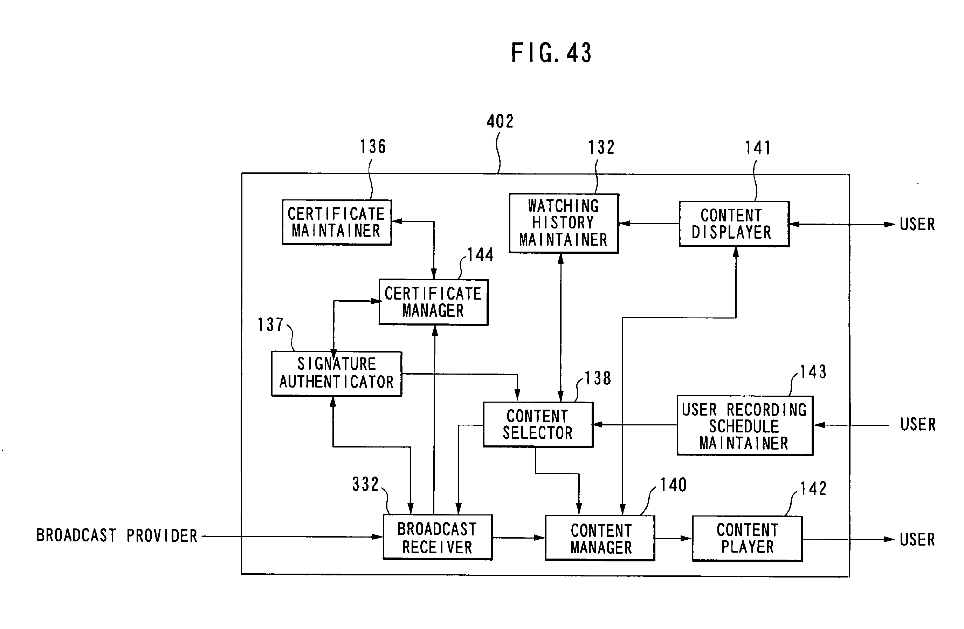

FIG. 43 illustrates an example internal configuration of the receiving terminal 402 in this embodiment. The receiving terminal 402 has the same elements as those of FIG. 39.

A description will now be given of how the recording control service system in this embodiment operates. A content is stored in the following manner. The content selector 138 selects content to be stored based on information maintained in the watching history maintainer 132 and creates a recording schedule management list. The content selector 138 receives information of content, for which the user has personally scheduled a recording, from the user recording schedule maintainer 143. The content selector 138 then determines whether or not the content, for which the user has personally scheduled a recording, is included in a recording schedule management list. If the content is included in the recording schedule management list, the content selector 138 deletes the content from the recording schedule management list. The content selector 138 transfers the recording schedule management list to the broadcast receiver 332. The subsequent operation until the content is stored is similar to that of the sixth embodiment.

A content is reproduced in the same manner as that of the fourth embodiment.

As described above, this embodiment allows the receiving terminal to select all content to be stored, thereby accomplishing a service in which preferences of the user are more fully reflected.

### (Embodiment 8)

An eighth embodiment of the present invention will now be described. In the fourth embodiment, the receiving terminal receives content that has not been encrypted. However, in this embodiment, the broadcast provider (or content provider) encrypts and transmits a content and the receiving terminal receives a key for decrypting the content from a license provider that is further provided to the system in this embodiment.

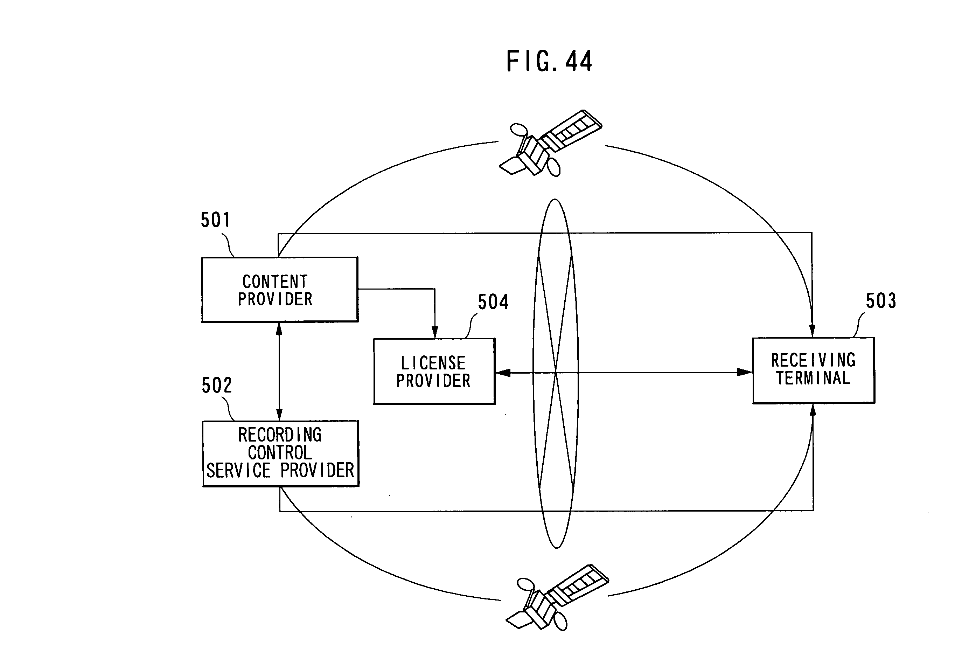

FIG. 44 illustrates an example configuration of a content recording control service system in this embodiment. This content recording control service system includes a content provider 501, a recording control service provider 502, a receiving terminal 503, and a license provider 504, The content provider 501 can maintain a content to be provided. The content provider 501 can also maintain playback conditions of the content to be provided. The recording control service provider 502 can create and maintain recording control information that allows the receiving terminal to store content. The receiving terminal 503 is connected to the recording control service provider 502 via a multicast network or a bidirectional network and can receive and maintain playback conditions and recording control information from the recording control service system 502. The receiving terminal 503 is connected to the content provider 501 via the multicast network or the bidirectional network and can obtain, store, and reproduce content from the content provider 501. The license provider 504 can receive and maintain a key, which has been used to encrypt the content, from the content provider 501. The license provider 504 is connected to the receiving terminal 503 via the bidirectional network and can transmit the key, received from the content provider 501, to the receiving terminal 503.

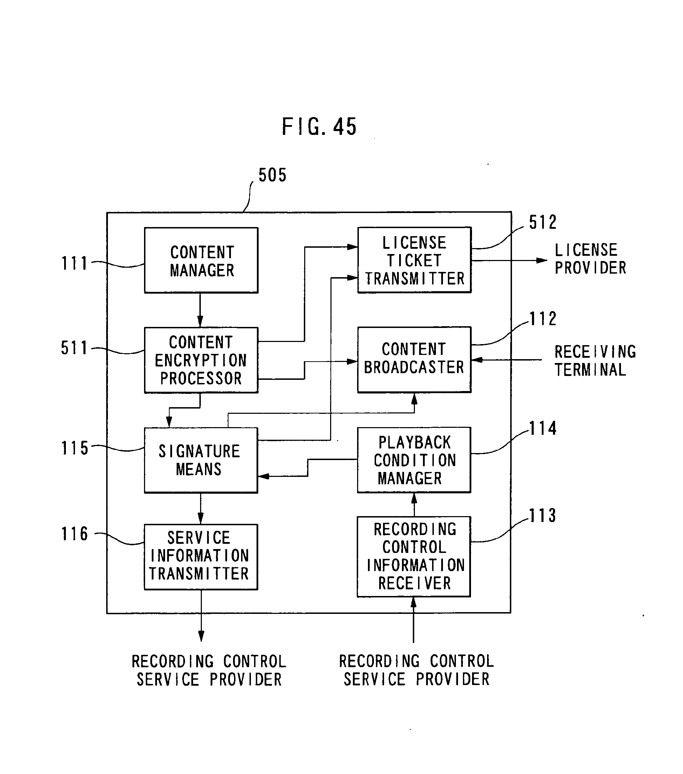

FIG. 45 illustrates an example internal configuration of a content provision device 505 which is included in the content provider 501 in this embodiment. In the content provision device 505, a content encryption processor 511 encrypts content maintained in a content manager 111. A license ticket transmitter 512 can transmit a license ticket, which is a combination of a content key which the content encryption processor 511 has used to perform the encryption and a certificate ID corresponding to a secret key which the signature means 115 has used to perform a signature process on recording control service information, to the license provider 504. The other elements of the content provision device 505 are similar to those of FIG. 19.

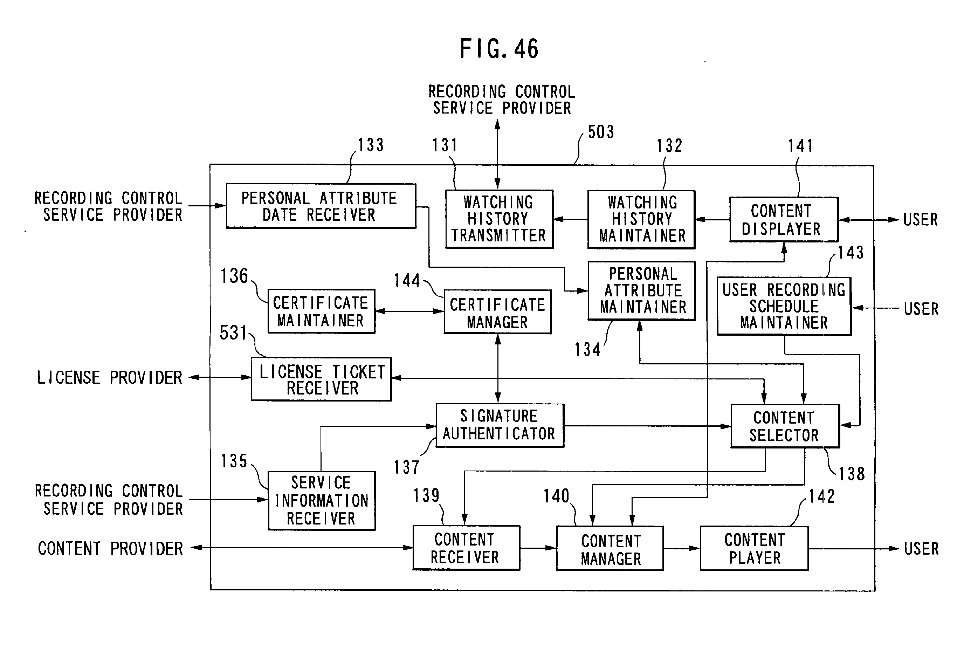

FIG. 46 illustrates an example internal configuration of the receiving terminal 503 in this embodiment. In the receiving terminal 503, a license ticket receiver 531 is connected to the license provider 504 via the bidirectional network and can receive a license ticket from the license provider 504. The other elements of the receiving terminal 503 are similar to those of FIG. 21.

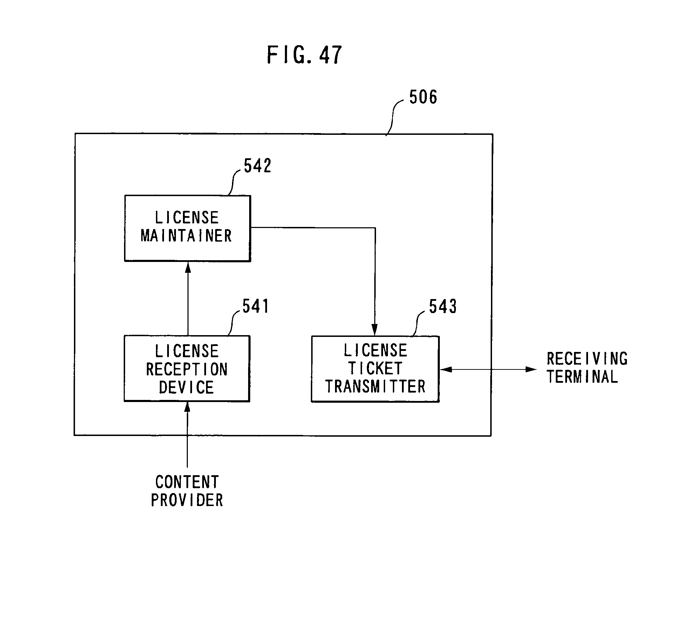

FIG. 47 illustrates an example internal configuration of a license issuing device 506 included in the license provider in this embodiment. The license issuing device 506 includes a license ticket receiver 541, a license ticket maintainer 542, and a license ticket transmitter 543. The license ticket receiver 541 can receive a license ticket from the content provision device 505. The license ticket maintainer 542 can maintain the license ticket received through the license ticket receiver 541. The license ticket transmitter 543 is connected to the receiving terminal 503 via the bidirectional network and can transmit the license ticket maintained in the license ticket maintainer 542 to the receiving terminal 503.

A description will now be given of how the content storage control service system in this embodiment operates. In this embodiment, personal attribute data is created in the same manner as that of the fourth embodiment. The created personal attribute data is maintained in the personal attribute data maintainer 134.

Recording control information is created in the same manner as that of the fourth embodiment. The created recording control information is transmitted from the recording control information transmitter 126 to the content provision device 505.

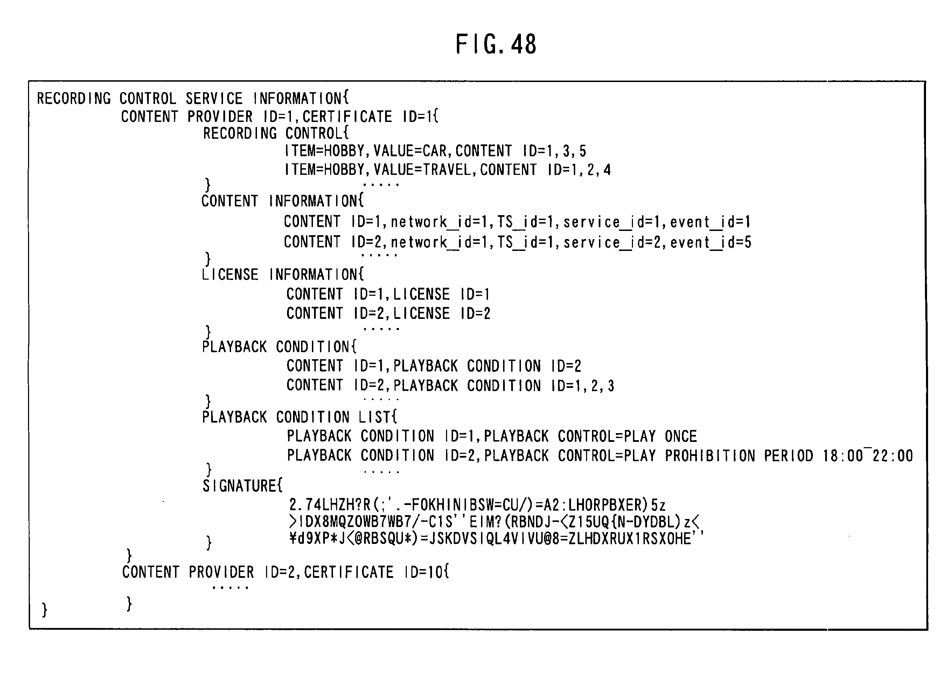

Recording control service information is created in the same manner as that of the fourth embodiment. Contrary to that of the fourth embodiment, the created recording control service information also includes a license ID that identifies a license including a content key that has been used by the content encryption processor 511. The created recording control service information is transmitted from the service information transmitter 128 to the receiving terminal 503 via the multicast network or the bidirectional network. FIG. 48 illustrates an example data format of the recording control service information transmitted to the receiving terminal. As shown in FIG. 48, the recording control service information is divided into information elements corresponding respectively to content provider IDs and a signature is applied to the information of each content provider.

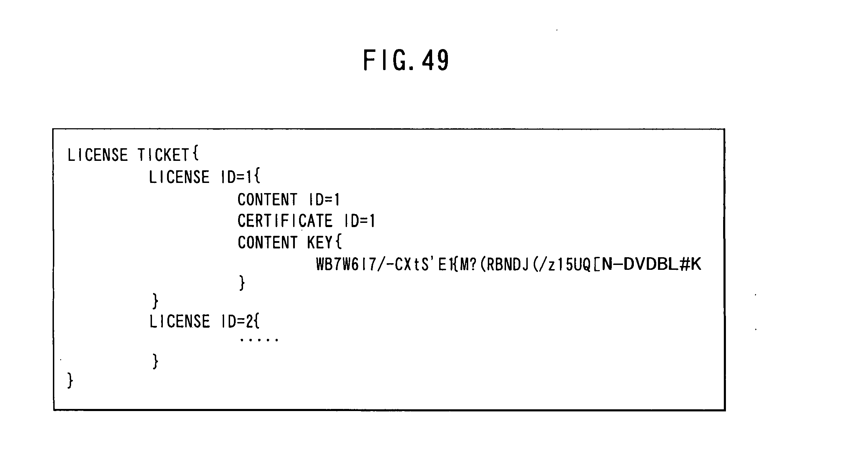

The following is a detailed description of the license ticket. The term "license ticket" refers to data that contains at least a content key and a certificate ID and also contains a license that is uniquely identified by a license ID. The license ticket transmitter 512 in the content provision device 505 receives a content key that has been used to encrypt content, a license ID, and a certificate ID that the signature means 115 has used to perform a signature process on recording control service information. The license ticket transmitter 512 transfers a license ticket, which is a combination of the received content key, license ID, and certificate ID, to the license issuing device 506. The license ticket receiver 541 in the license issuing device 506 receives the license ticket from the license ticket transmitter 512 and transfers it to the license ticket maintainer 542. The license ticket maintainer 542 maintains the license ticket received from the license ticket receiver 541. The license ticket transmitter 543 transmits the license ticket maintained in the license maintainer 542 to the receiving terminal 503 via the bidirectional network in response to a request from the user. FIG. 49 illustrates an example data format of the license ticket transmitted to the receiving terminal. As shown in FIG. 49, the license ticket is divided into elements corresponding respectively to license IDs.

A description will now be given of how content is stored. The operation until content to be stored is similar to that of the fourth embodiment. The content selector 138 receives a license ticket of content included in a recording schedule management list from the license ticket receiver 531. The license selector 138 checks whether or not a certificate ID of the license ticket is identical to a certificate ID of the recording control service information. If both the certificate IDs are identical, the content selector 138 transfers the recording schedule management list and a corresponding broadcast provider (or content provider) ID in the recording control service information to the content receiver 139 and also transfers a corresponding playback condition list therein and the license ticket to the content manager 140. The subsequent operation until the content is stored is similar to that of the fourth embodiment. However, since the content is encrypted and transmitted to the receiving terminal, contrary to the fourth embodiment, the content manager 140 receives a content key corresponding to the license from the content manager 139 and decrypts the encrypted content using the received content key to reproduce the content.

The content is reproduced in the same manner as that of the fourth embodiment.

As described above, this embodiment further includes the license provider for encrypting and transmitting content, thereby preventing unauthorized use of the content, in addition to achieving the advantages of the fourth embodiment.

### (Embodiment 9)

A detailed description will now be given of a "link information authentication system" according to a ninth embodiment of the present invention where link information is used as meta data. The ninth embodiment has the following features. A digital signature (hereinafter, referred to as a "signature" for short) is applied to link information to be displayed at the same time as when a content is reproduced only when a broadcast provider, which provides the content, has permitted the link information to be displayed at the same time as when the content is reproduced. Upon receiving content from the broadcast provider, a content receiver (hereinafter, referred to as a "reception device" for short) verifies a signature of link information, which is set to be displayed at the same time as when the content is reproduced, using a corresponding certificate previously received from the broadcast provider. The reception device then determines that the link information is valid only when the link information has been authenticated by verifying the signature, and displays the authenticated link information at the same time as when the content is reproduced.

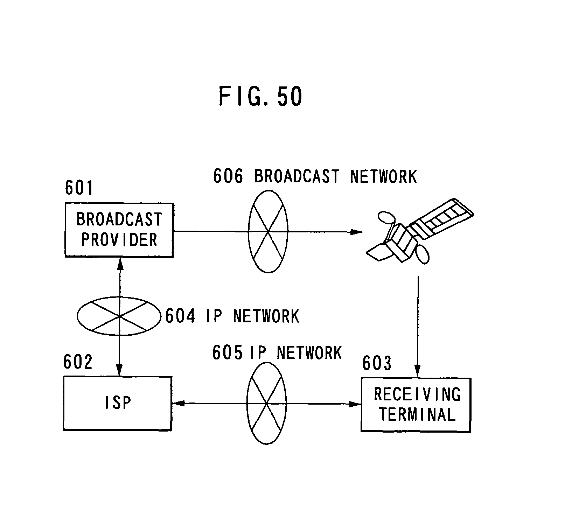

The ninth embodiment of the present invention will now be described in detail with reference to the drawings. First, a description will be given of the configuration of a link information authentication system in this embodiment. FIG. 50 is a block diagram of the link information authentication system in this embodiment. The link information authentication system shown in FIG. 50 includes a broadcast provider 601, an Internet Service Provider (ISP) 602, and a reception device 603. The broadcast provider 601 provides content to the reception device 603 via a broadcast network 606. The ISP 602 provides link information to be displayed at the same time as when content is reproduced. The reception device 603 reproduces content received from the broadcast network 606 and displays link information at the same time as when content is reproduced. The broadcast provider 601 and the ISP 602 are connected via an Internet Protocol (IP) network 604, the ISP 602 and the reception device 603 are connected via an IP network 605, and the broadcast provider 601 and the reception device 603 are connected via the broadcast network 606. Although the IP networks 604 and 605 are shown as separate IP networks, they may be the same IP network.

Although this embodiment is described with reference to an example where the ISP 602 provides link information to be displayed simultaneously with a content, the provider of the link information is not limited to the ISP 602. In addition, although FIG. 50 shows that only one ISP 602 provides link information, a plurality of ISPs 602 may be present and each of the ISPs 602 may individually provide link information to the broadcast provider 601.

The term "broadcast network" used in this description refers to a network for broadcasts based on radio waves such as broadcasts from a Broadcasting Satellite (BS) or Communications Satellite (CS) 110° or terrestrial digital broadcasts or refers to a network for IP broadcasts based on multicast communication over an IP network. Examples of the standard for broadcasts based on radio waves include Radio Industries and Businesses (ARIB) STD-B10, B20, B21, B24, B31, and B32, and ARIB TR-B14 and B15.

Although this embodiment is described with reference to an example where the present invention is applied to BS or CS110° broadcasts and terrestrial digital broadcasts, application of the present invention is not limited to these broadcasts. For example, the present invention may be applied to a content distribution service that is provided according to a content distribution scheme over a bidirectional network, using meta data in a meta data format specified in specifications SP003 or SP004 of the TV Anytime Forum (TVA) or a meta data format specified in MPEG7, or a content distribution service according to a server-based broadcast scheme specified in ARIB STD-B38.

The term "content" used in this description refers to digital data such as video or music data. The term "link information" refers to data that includes information (typically, a Uniform Resource Locator (URL)) required to access a specific service on the Internet and information required to display the link information at the same time as when content is reproduced. FIG. 57 illustrates an example of the link information. In this example, a link information name required to identify the link information, a link destination URL indicating the destination of the link information, a link destination genre indicating the genre (or category) of a web service of the destination, content specification information specifying the content with which the link information is to be displayed simultaneously, and display data required to display the link information are written in the link information. This link information of FIG. 57 allows the display data (for example, a link information button) having a link to the URL of the destination to be displayed when the content specified by the content specification information is reproduced. In the following description of this embodiment, reference will be made to an example where link information is set to be displayed at the same time a "broadcast" content is reproduced and content specification information "service_id" and "event_id" are used to specify the content.

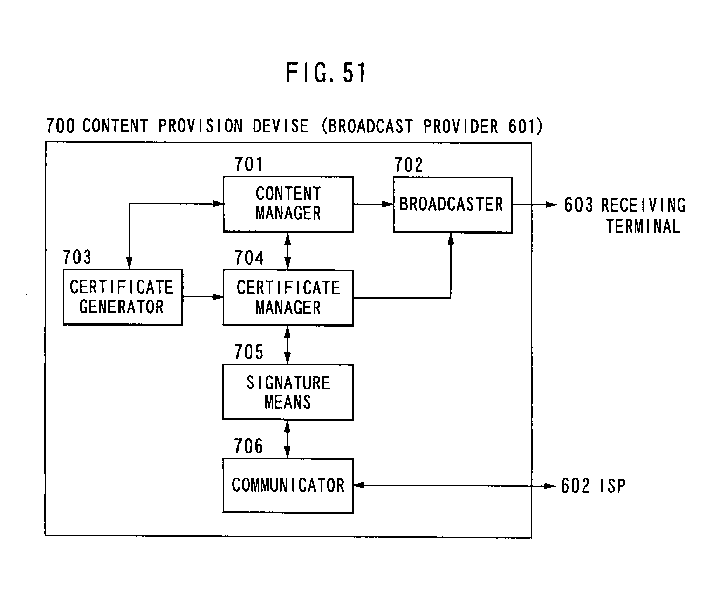

Reference will now be made to FIG. 51 which is a block diagram of a content provision device 700 included in the broadcast provider 601 in the link information authentication system in this embodiment shown in FIG. 50. The content provision device 700 shown in FIG. 51 is a device that issues a certificate for authenticating link information to be displayed at the same time as when content is reproduced, applies a signature to link information received from the ISP 602 using the certificate, and transmits the content to the reception device 603 via the broadcast network 606. The content provision device 700 includes a content manager 701, a broadcaster 702, a certificate generator 703, a certificate manager 704, a signature means 705, and a communicator 706.

The content manager 701 manages a content (for example, digital content) such as a moving image content or a music content. The content manager 701 includes a storage that stores content or alternatively can access the storage and read content therefrom. The broadcaster 702 transmits a content received from the content manager 701 and a certificate received from the certificate manager 704 to the reception device 603 via the broadcast network 606.

The certificate generator 703 generates a certificate for authenticating link information to be displayed simultaneously with content managed in the content manager 701 when the content is reproduced. In this embodiment, the certificate generator 703 generates public key certificates using a public key based digital signature scheme specified in X.509. Although a public key certificate can be associated with content, it can also be associated with, for example, a partial scene of the content, a broadcast provider, a date, a region, or the genre of the content.

The certificate manager 704 manages certificates generated by the certificate generator 703 by associating them with content items managed in the content manager 701. For link information received from the ISP 602, the signature means 705 receives a public key certificate corresponding to a content, with which the link information is to be displayed simultaneously, from the certificate manager 704 and applies a signature to the link information using the public key certificate. The communicator 706 communicates link information with the ISP 602 via the IP network 604. Specifically, the communicator 706 receives link information from the ISP 602 and transmits signed link information, to which a specific signature has been applied, to the ISP 602.

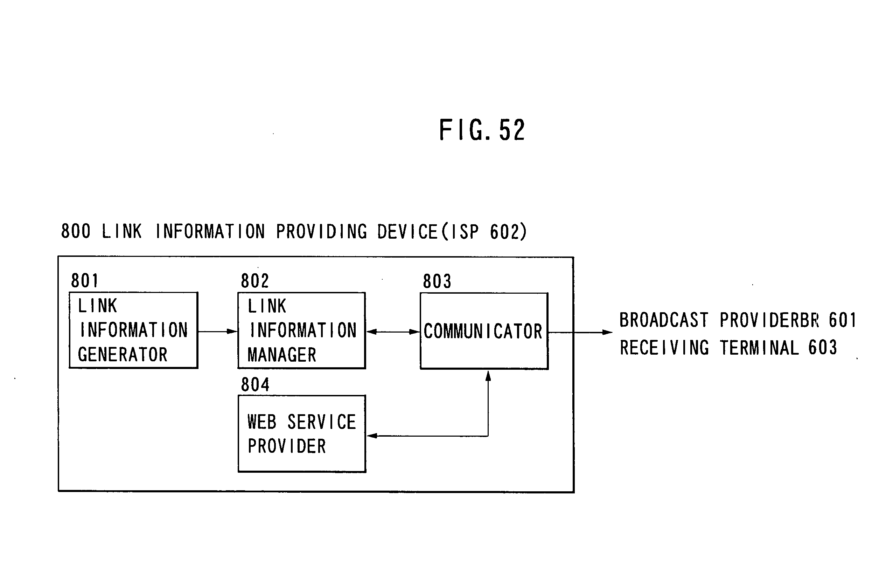

Reference will now be made to FIG. 52 which is a block diagram of a link information providing device 800 included in the ISP 602 in the link information authentication system in this embodiment shown in FIG. 50. The link information providing device 800 shown in FIG. 52 is a device that generates link information to be displayed at the same time as when a content is reproduced and transmits signed link information, to which a signature has been applied in the broadcast provider 601, to the reception device 603 and that provides a web service to the user of the reception device 603 in response to the reception device 603 accessing the link information providing device 800 using the signed link information. The link information providing device 800 includes a link information generator 801, a link information manager 802, a communicator 803, and a web service provider 804.

The link information generator 801 generates link information to be displayed at the same time as when content is reproduced. FIG. 57 illustrates an example of the link information generated by the link information generator 801. In this example, parameters other than a parameter specifying the content may also be written in a content specification item in the link information. Examples of the parameters include a parameter specifying a segment corresponding to a partial scene of the content using segment information specified in the TVA, a parameter specifying a broadcast provider using a service identifier "service_id" in Service Information (SI), a parameter specifying a date, a parameter specifying a region, and a parameter specifying a genre. Although the link information is shown in table format in FIG. 57, the link information may also be written in Extensible Markup Language (XML), Comma Separated Value (CSV), text, or binary format.

The link information manager 802 manages link information generated by the link information generator 801 and signed link information to which a signature has been applied in the broadcast provider 601. The communicator 803 transmits link information to the broadcast provider 601 via the IP network 604 and receives signed link information from the broadcast provider 601 and also transmits the signed link information to the reception device 603 via the IP network 605. The communicator 803 transmits web service data to the reception device 603 in response to the reception device 603 accessing the link information providing device 800 based on link information (including signed link information).

The web service provider 804 provides a web service to the reception device 603 based on the link information received through the communicator 803 in response the reception device accessing the link information providing device 800. The link information providing device 800 transmits data of the web service to the reception device 603 through the communicator 803. Here, the term "web service" refers to not only a service for providing or displaying a portal site of the ISP 602 but also any service provided over the Internet such as a service for downloading or selling content, a service for purchasing products, or a service for participating in a prize competition.

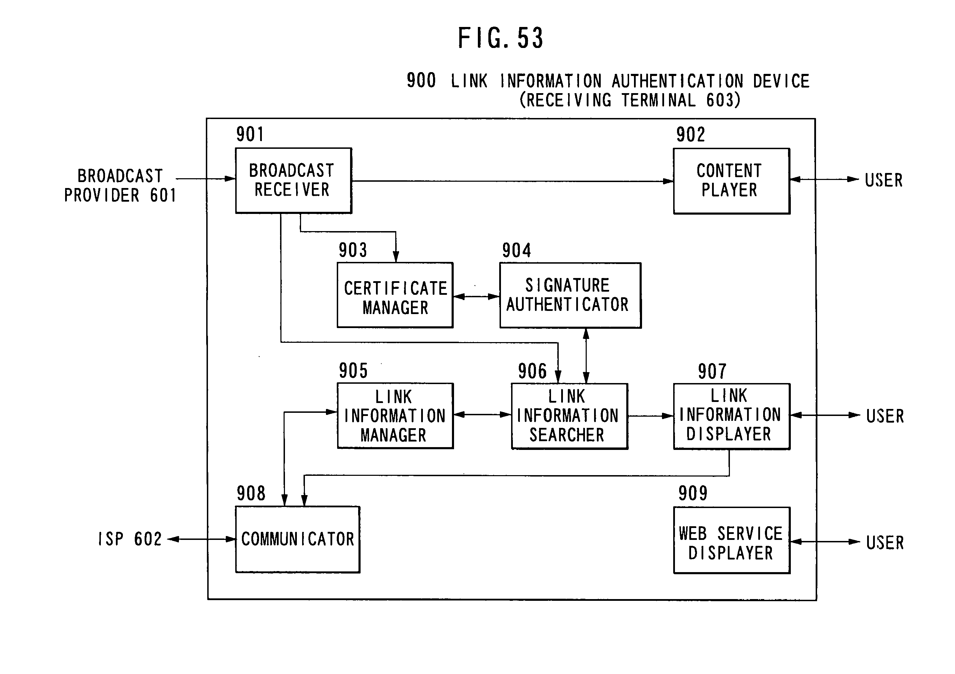

Reference will now be made to FIG. 53 which is a block diagram of a link information authentication device 900 included in the reception device 603 in the link information authentication system in this embodiment shown in FIG. 50. The link information authentication device 900 shown in FIG. 53 is a device that can receive a content and a public key certificate from the broadcast provider 601, search the link information received from the ISP 602 for link information that can be displayed at the same time as when content is reproduced, determine that the found link information is valid only when a signature of the found link information has been authenticated using the public key certificate, and display the valid link information at the same time as when the content is reproduced. The link information authentication device 900 includes a broadcast receiver 901, a content player 902, a certificate manager 903, a signature authenticator 904, a link information manager 905, a link information searcher 906, a link information displayer 907, a communicator 908, and a web service display 909.

The broadcast receiver 901 receives content, information regarding the content, and a public key certificate corresponding to the content from the broadcast provider via the broadcast network. For example, in the case of digital broadcasts, the content is a broadcast program and the information regarding the content is SI. It is necessary to receive the public key certificate corresponding to the content when or before the content is broadcast.

The content player 902 reproduces the content received through the broadcast receiver 901 and receives a content operation signal from the user through an operating unit (not shown). Through a monitor and/or speaker (not shown), a video and/or audio signal of the content generated by the content player 902 is provided to the user. The certificate manager 903 stores and manages the public key certificate received through the broadcast receiver 901 in a database. The signature authenticator 904 receives a public key certificate, corresponding to the link information found by the link information searcher 906, from the certificate manager 903, and verifies a signature that has been applied to the link information and determines that the link information is valid only when the signature has been authenticated.

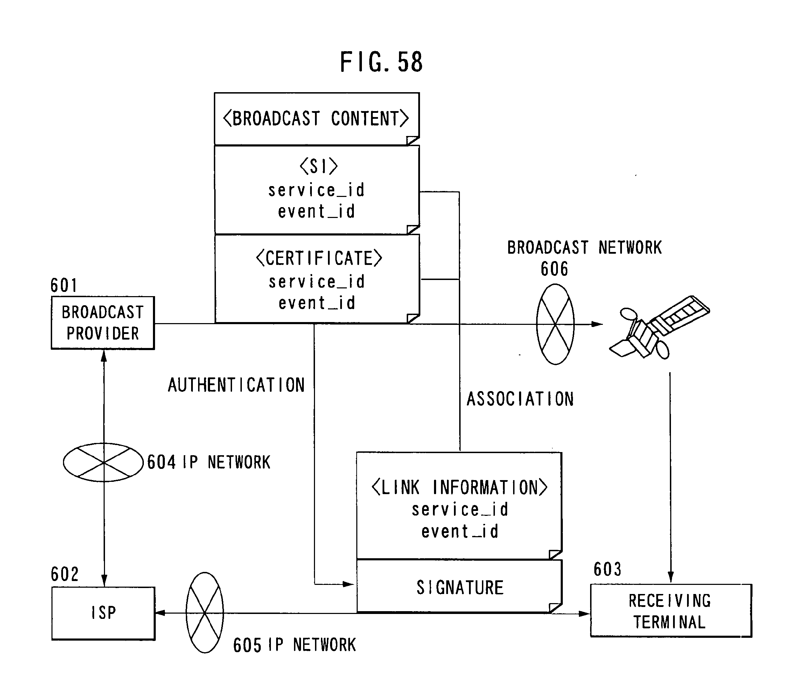

It is also necessary that the signature applied to the link information be verified using a suitable public key certificate (specifically, a certificate associated with the link information). FIG. 58 illustrates an example of the relationship between content, and SI, link information, and a public key certificate of the content in the link information authentication system in this embodiment. As shown in FIG. 58, SI, link information, and a public key certificate of broadcast content are associated with each other through parameters "service_id" and "event_id". Thus, it is possible to obtain a public key certificate corresponding to link information using parameters "service_id" and "event_id" as its identification information and then to verify a signature of the link information using the obtained public key certificate.

The link information manager 905 manages link information received through the communicator 908 in a database. The link information searcher 906 searches the link information manager 905 for link information corresponding to parameters "service_id" and "event_id" of the content received through the broadcast receiver 901, and requests that the signature authenticator 904 authenticate the found link information. The link information searcher 906 also transfers the link information authenticated by the signature authenticator 904 to the link information displayer 907 and requests that the link information displayer 907 display the authenticated link information. When the content has been changed through tuning or channel switching of the broadcast receiver 901, the link information searcher 906 detects a change in the value of "event_id" and searches for link information corresponding to the changed content.

The link information displayer 907 allows the monitor (not shown) connected to the reception device 603 to display the link information, which the link information searcher 906 has requested to be displayed, at the same time as when the content is reproduced. The link information displayer 907 receives a link operation signal from the user through the operating unit (not shown). Upon receiving an access request based on link information through the operating unit, the link information displayer 907 requests the communicator 908 to access the destination of a link corresponding to the link information. The communicator 908 receives link information from the ISP 602 via the IP network 605. The communicator 908 communicates data with the destination of the link via the ISP 602 in response to an access request from the link information displayer 907 or from the web service displayer 909. The web service displayer 909 allows the monitor (not shown) to display a screen regarding web service data received from the communicator 908 and also receives a web operation signal from the user through the operating unit (not shown).

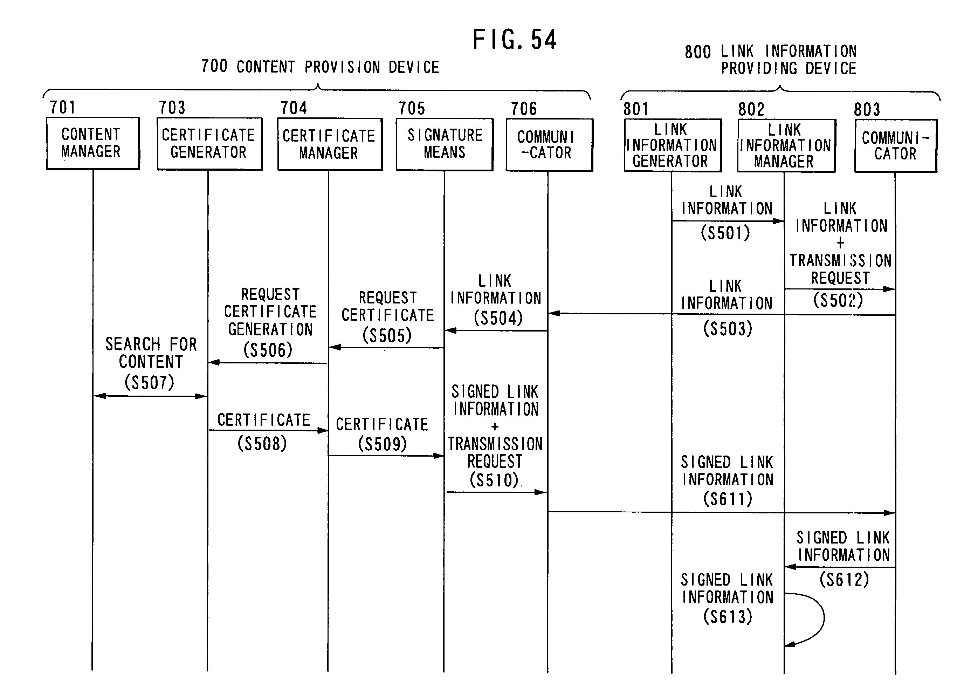

Reference will now be made to FIG. 54 which is a sequence diagram illustrating how the content provision device 700 and the link information providing device 800 in the link information authentication system in this embodiment shown in FIGS. 50 to 53 operate until the broadcast provider 601 applies a signature to link information generated by the ISP 602.

First, the link information generator 801 in the link information providing device 800 in the ISP 602 generates link information, which is to be displayed at the same time as when content is reproduced, and transfers the link information to the link information manager 802 (S501). An example of the generated link information is shown in FIG. 57. Then, in order to allow the broadcast provider 601 to apply a signature to the link information obtained at step S501, the link information manager 802 in the link information providing device 800 transfers the link information to the communicator 803 for transmitting it to the content provision device 700 and requests that the communicator 803 transmits the link information to the content provision device 700 in the broadcast provider 601 (S502). The communicator 803 in the link information providing device 800 transmits the link information, which has been requested to be transmitted at step S502, to the content provision device 700 (S503).

The communicator 706 in the content provision device 700 receives the link information, which has been transmitted from the link information providing device 800 at step S503, and transfers it to the signature means 705 (S504). The signature means 705 in the content provision device 700 determines whether or not the link information received from the communicator 706 at step S504 is suitable to be authorized by the broadcast provider 601. When it is determined that the link information is to be authorized, the signature means 705 requests a public key certificate corresponding to the link information from the certificate manager 704 (S505).

Although not shown in FIG. 54, it is preferable that, when it is determined that the link information is not to be authorized, the signature means 705 not apply a signature to the link information and notify the link information providing device 800 that the link information cannot be authorized. The signature means 705 may employ a variety of methods of deciding whether to authorize the received link information, which include a method of checking if the received link information is included in a table in which an authorized link information list is written, a method of checking if the received link information is not included in a table in which an unauthorized link information list is written, and a method of directly accessing and checking contents of the destination of a link corresponding to the received link information.

Upon receiving the request for the public key certificate corresponding to the link information from the signature means 705, the certificate manager 704 in the content provision device 700 searches for the public key certificate requested at step S505 and returns the public key certificate to the signature means 705 if the public key certificate is found. If the public key certificate is not found, the certificate manager 704 requests that the link information certificate generator 703 generate a public key certificate corresponding to the link information (S506). Although the flowchart of FIG. 54 shows a procedure where the public key certificate is not found, if the public key certificate is found, the signature means 705 applies a signature to the link information based on the found public key certificate, which will be described later at step S510.

The certificate generator 703 in the content provision device 700 searches the content manager 701 for content corresponding to the link information, for which it has been requested at step S506 that the corresponding public key certificate be generated, obtains identification information of the content, and generates a public key certificate corresponding to the content (specifically, a certificate including identification information of the content) (S507). The certificate generator 703 in the content provision device 700 transfers the public key certificate generated at step S507 to the certificate manager 704 (S508). The certificate manager 704 in the content provision device 700 stores and manages the public key certificate obtained at step S508 and also transfers the public key certificate to the signature means 705 (S509).

The signature means 705 in the content provision device 700 applies a signature to the link information using the public key certificate obtained at step S509 to generate signed link information, transfers the generated signed link information to the communicator 706, and requests that the communicator 706 transmit the signed link information to the link information providing device 800 (S510). The communicator 706 in the content provision device 700 transmits the signed link information, which has been requested to be transmitted at step S510, to the link information providing device 800 (S511).

The communicator 803 in the link information providing device 800 receives the signed link information, which has been transmitted from the content provision device 700 at step S511, and transfers the received signed link information to the link information manager 802 (S512). The link information manager 802 in the link information providing device 800 registers and stores the signed link information received at step S512 in a database (S513).

In the above series of processes shown in FIG. 54, the broadcast provider 601 determines whether or not the link information generated by the ISP 602 is suitable as link information to be displayed at the same time as when a content is reproduced, applies a signature to the link information to generate signed link information only when it is determined that the link information is suitable, and stores the signed link information in the link information providing device 800. This method allows the broadcast provider 601 to authorize link information to be displayed at the same time as when content is reproduced. It is possible to prevent link information unauthorized by the broadcast provider 601 from being displayed at the same time as when content is reproduced since the broadcast provider 601 applies a signature to authorized link information.

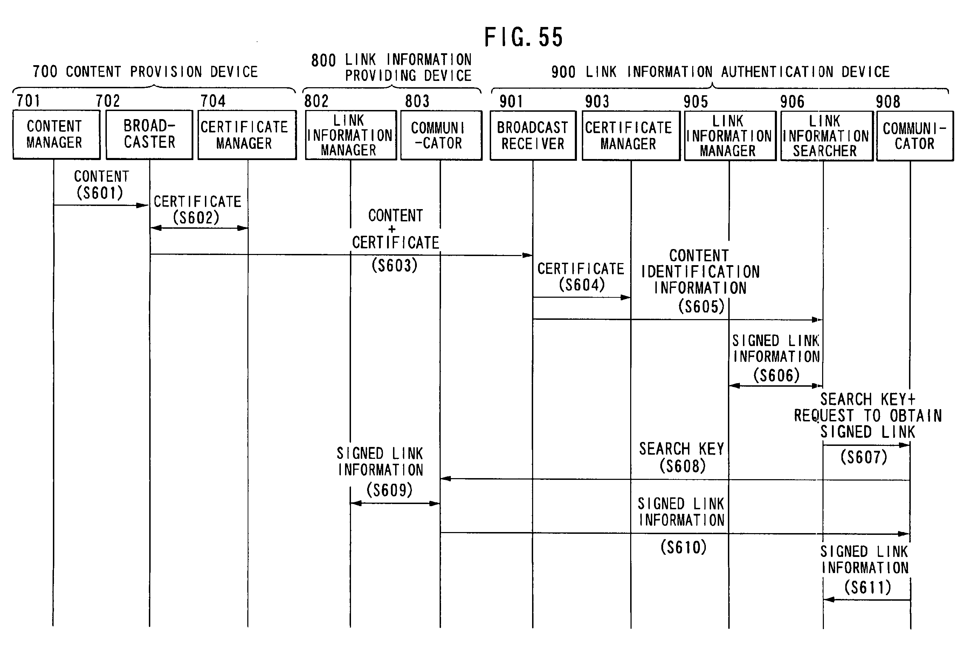

Reference will now be made to FIG. 55 which is a sequence diagram illustrating how the content provision device 700, the link information providing device 800, and the link information authentication device 900 in the link information authentication system in this embodiment shown in FIGS. 50 to 53 operate until the link information authentication device 900 searches for link information that can be displayed at the same time as when content is reproduced after the link information authentication device 900 receives the content and a public key certificate from the broadcast provider 601.

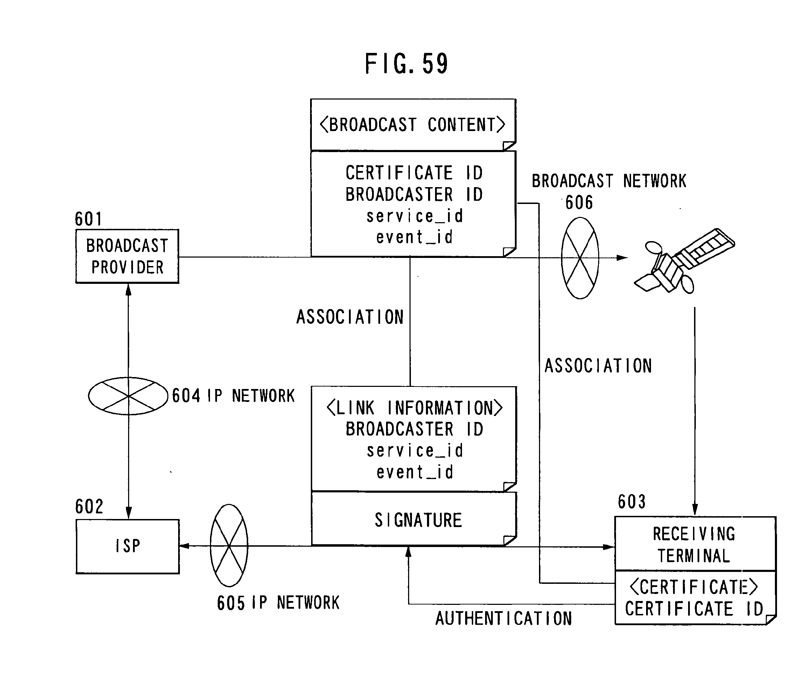

First, the broadcaster 702 in the content provision device 700 in the broadcast provider 601 receives content, which is to be broadcast to the reception device 603, from the content manager 701 (S601) and receives a public key certificate, corresponding to the content received at step S601, from the certificate manager 704 (S602). The broadcaster 702 in the content provision device 700 multiplexes the content and the public key certificate received at steps S601 and S602 and broadcasts the multiplexed data to the link information authentication device 900 (S603). As will be described with reference to FIG. 59, the transmission of the public key certificate from the content provision device 700 to the reception device 603 is not necessarily performed via the broadcast network 606. For example, the public key certificate may be transmitted via the IP networks 604 and 605. In this case, in the same manner as when the content and the public key certificate are multiplexed and transmitted, the public key certificate is transmitted from the content provision device 700 to the reception device 603 in the same time zone as that in which the corresponding content is broadcast, so that falsification or unauthorized use of the public key certificate is prevented, thereby increasing reliability of both the content to be reproduced and the link information to be displayed.

The broadcast receiver 901 in the link information authentication device 900 receives the public key certificate, which has been transmitted from the content provision device at step S603, and transfers the public key certificate to the certificate manager 903 and requests that the certificate manager 903 manages the public key certificate (S604). The broadcast receiver 901 also receives the content, which has been transmitted from the content provision device 700 at step S603, and transfers identification information (service_id and event_id) to the link information searcher 906 (S605).

The link information searcher 906 in the link information authentication device 900 searches the link information manager 905 for signed link information corresponding to the identification information (service_id and event_id) received from broadcast receiver 901, and obtains the signed link information if the signed link information is found (S606). If the link information searcher 906 has failed to find the signed link information, the link information searcher 906 of the link information authentication device 900 transfers the identification information (service_id and event_id), which has been received from the broadcast receiver 901 at step S605, to the communicator 908 and requests that the communicator 908 transmit the identification information (service_id and event_id) as a search key to obtain signed link information from the link information providing device 800 (S607). The procedure of steps S608 to S610, subsequent to step S608, in the sequence diagram of FIG. 55 is performed when no signed link information is found at step S606 and the request to obtain signed link information is made at step S607.

The communicator 908 in the link information authentication device 900 transmits the search key received at step S607 to the communicator 803 in the link information providing device 800 (S608). The communicator 803 in the link information providing device 800 receives the search key transmitted from the link information authentication device 900 at step S608 and transfers it to the link information manager 802 and then obtains signed link information, corresponding to the search key, from the link information manager 802 (S609). The communicator 803 in the link information providing device 800 transmits the signed link information obtained at step S609 to the link information authentication device 900 (S610). The communicator 908 in the reception device 603 receives the signed link information, transmitted from the link information providing device 800 at step S610, and transfers it to the link information searcher 906 (S611).

The above series of processes shown in FIG. 55 allow the link information authentication device 900 to receive content and a public key certificate corresponding to the content from the broadcast provider 601 and to obtain signed link information, which can be displayed at the same time as when the content is reproduced, from the ISP 602.

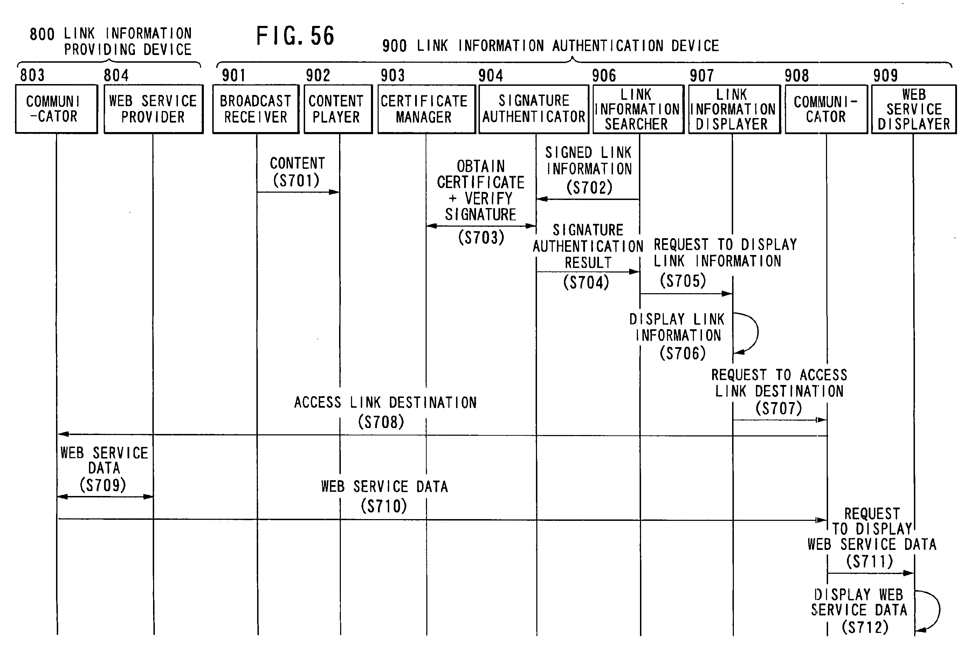

Reference will now be made to FIG. 56 which is a sequence diagram illustrating how the link information providing device 800 and the link information authentication device 900 in the link information authentication system in this embodiment shown in FIGS. 50 to 53 operate until the link information authentication device 900 displays link information authenticated by verifying a signature of the link information at the same time as when the content is reproduced and then accesses the destination of a link corresponding to the link information. The sequence diagram shown in FIG. 56 shows a procedure subsequent to the series of processes shown in FIG. 55. That is, the procedure of FIG. 56 is performed when the link information authentication device 900 has received content and a public key certificate corresponding to the content and has obtained link information that can be displayed at the same time as when the content is reproduced.

First, the broadcast receiver 901 in the link information authentication device 900 in the reception device 603 transfers content received from the content provision device 700 to the content player 902 and requests that the content player 902 reproduce the content (S701). Then, the link information searcher 906 in the link information authentication device 900 requests that the signature authenticator 904 authenticate a signature of link information that is to be displayed at the same time as when the content is reproduced (S702). Then, the signature authenticator 904 in the link information authentication device 900 obtains a public key certificate corresponding to the link information, for which it has been requested at step S702 that the signature be authenticated, from the certificate manager 903 and verifies the signature of the link information using the public key certificate (S703).

When the signature has been authenticated at step S703, the signature authenticator 904 in the link information authentication device 900 notifies the link information searcher 906 that the signature has been authenticated, otherwise the signature authenticator 904 notifies the link information searcher 906 that the signature cannot be authenticated (S704). The procedure of steps S705 to S712, subsequent to step S704, in the sequence diagram of FIG. 56 is performed when the signature has been authenticated at step S703 and thus the link information searcher 906 has been notified at step S704 that the signature has been authenticated. When the signature has not been authenticated at step S703, the link information is not provided to the link information displayer 907 so that the link information is not displayed.

The link information searcher 906 in the link information authentication device 900 transfers the link information authenticated at step S704 to the link information displayer 907 and requests that the link information displayer 907 display the authenticated link information (S705). The link information displayer 907 in the link information authentication device 900 displays the link information, which has been requested to be displayed at step S705, at the same time as when the content is reproduced (S706).

When the user of the link information authentication device 900 has instructed it to access the destination of a link corresponding to the link information using an operating unit (not shown), the link information displayer 907 requests the communicator 908 to access the destination written in the link information (S707). The communicator 908 in the link information authentication device 900 accesses the destination as requested at step S707 (5708). In the following description, it is assumed that the destination is located in the ISP 602 and thus the communicator 908 accesses the communicator 803 in the link information providing device 800 in the ISP 602.

In response to the request to access to the destination of the link received from the link information authentication device 900 at step S708, the communicator 803 in the link information providing device 800 obtains data of a web service corresponding to the destination from the web service provider 804 (S709) and transmits the obtained web service data obtained at step S709 to the link information authentication device 900 (S710).

The communicator 908 in the link information authentication device 900 receives the web service data, which has been transmitted from the link information providing device 800 at step S710, transfers the web service data to the web service displayer 909, and requests the web service displayer 909 to display the web service data (S711). Then, the web service displayer 909 in the link information authentication device 900 allows a monitor (not shown) to display a screen of the web service based on the web service data received at step S711 (S712).

In the above series of processes shown in FIG. 56, the reception device 603 can display link information associated with content at the same time as when the content is reproduced and the user can receive a web service corresponding to the destination of a link written in the link information by instructing the receiving terminal to access the destination of the link information. The reception device 603 displays only link information authenticated through a public key certificate of the broadcast provider 601 and does not display unauthorized link information, which is not authorized by the broadcast provider 601, thereby protecting the user from damage caused by the unauthorized link information.

In this embodiment, the reception device 603 may obtain a public key certificate and signed link information before or while content corresponding to the public key certificate and the signed link information is broadcast. The reception device 603 may also previously obtain and store the public key certificate and the signed link information.

There is no specific limitation on how, at the above step S706, the link information is displayed at the same time as when the content is reproduced. In one example, when the content is moving or still image data, the content and the link information are displayed simultaneously by overlapping image data of the link information and the content to be displayed. In another example, a link information display region and a content display region separated from each other are previously defined, and the link information is displayed on the link information display region as the content is displayed on the content display region.

In addition, any method can be used to display the web service data obtained at the above step S711. In one example, when the content is moving or still image data, a web service data display region is created while a content display region is reduced, thereby allowing the web service data and the content to be displayed at the same time. In another example, when displaying the web service data is started, recording the content is started, and, when the user has stopped viewing the web service data, chasing playback of the recorded content is performed from the moment when displaying the web service data is started.

A plurality of link information items may also be set for the same content. In this case, all the plurality of link information items may be displayed on the monitor (not shown) of the reception device 603 at the same time as when the content is reproduced. Link information items for display on the reception device 603 may be specified through filtering, for example, by restricting the number of link information items for display or by selecting link information items for display according to a variety of conditions.

In the above embodiments, link information is associated with content by inserting content identification information specifying the content into the link information. However, the link information may also be associated with, for example, a partial scene (or a specific segment) of the content, the broadcast provider 601, a date, a region, the genre of the content, or a combination thereof.

In one example, when link information is associated with a partial scene of the content, it is preferable that index information representing the scene be transmitted to the reception device 603 through communication or broadcasting and the index information be then associated with the link information. When the index information is transmitted to the reception device 603 through broadcasting, program index information of the ARIB B10 or segment information of the TVA may be used as the index information. Also when the index information is transmitted to the reception device 603 through communication, segment information of the TVA may be used as the index information.

In another example, link information may be associated with a broadcast provider 601 by inserting provider identification information, which identifies the broadcast provider 601, into the link information. In this case, the reception device 603 can specify a broadcast provider 601, from which currently reproduced content is broadcast, and can display link information corresponding to the specified broadcast provider 601.

In another example, link information may be associated with a date or region when or where the link information is permitted to be displayed by inserting date information indicating the date or region identification information indicating the region into the link information. When the link information is associated with a date, the reception device 603 determines whether or not the link information can be displayed with reference to a time indicated by an internal clock or to a time measured by receiving radio waves or the like. When the link information is associated with a region, a region where the reception device 603 is located can be determined with reference to region identification information received through the broadcast receiver 901 or using various other methods for detecting the region where the reception device 603 is provided. It is possible to determine whether or not the link information can be displayed by comparing the region detected in this manner with the region identified by the region identification information inserted in the link information. It is also possible to search for suitable link information to be displayed by determining a correlation between the region where the reception device 603 is provided and the region specified in the link information.

For example, the subject of a service of a destination indicated by the link information or the genre (or category) of content of the destination as denoted by "link destination genre" in FIG. 57 can also be used to search for the suitable link information. In this case, it is possible to determine a correlation between the link information and content received through the broadcast receiver 901 by comparing the genre of the received content with the subject of the service of the destination indicated by the link information or with the genre of the content of the destination.

In the above embodiments, SI is used as identification information to identify content corresponding to the link information. However, when content is transmitted to the reception device 603 through communication, identification information may be previously assigned as a search key to the content and the link information searcher 906 may search for link information corresponding to the search key (i.e., the identification information).

In the above embodiments, as shown in FIG. 58, parameters "service_id" and "event_id" are assigned to a public key certificate and both content and the public key certificate are transmitted simultaneously to the reception device 603 via the broadcast network 606. However, the public key certificate and the content may be separately transmitted. For example, as shown in FIG. 59, the reception device 603 may previously receive and store a public key certificate, to which a certificate ID has been assigned, and thereafter may receive, together with content, association information of "certificate ID - broadcaster ID - service_id - event_id" written in SI of the content. This allows the reception device 603 to search for and obtain link information corresponding to the broadcast ID, the service_id, or the event_id written in the SI and also to search for and obtain a public key certificate based on the certificate ID written in the SI and then to verify a signature of the link information using the obtained public key certificate.

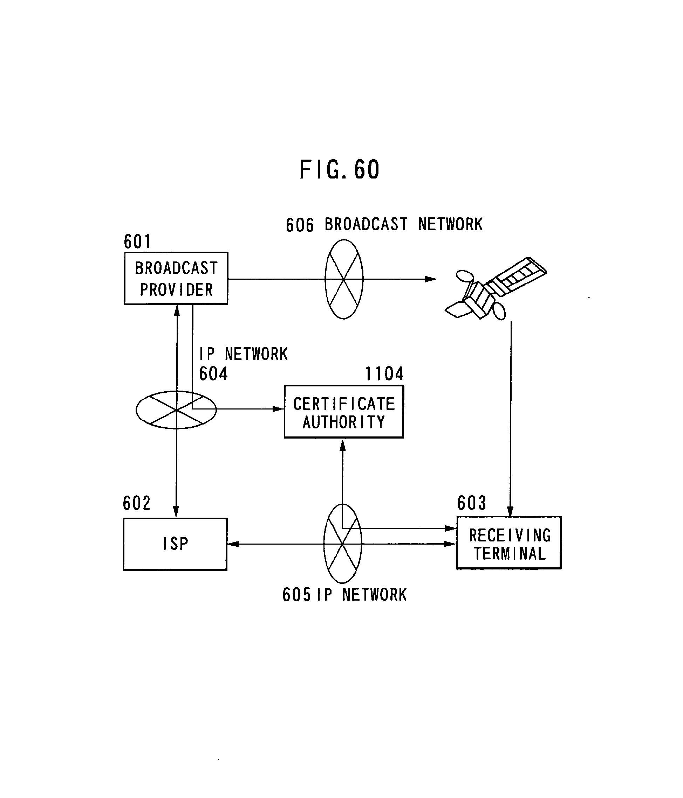

In the above embodiments, the public key certificate is transmitted to the reception device 603 via the broadcast network 606. However, as shown in FIG. 60, a certificate authority 1104 may be provided to distribute a public key certificate to the reception device 603 via the IP network 605. In this case, the broadcast provider 601 can register and store a public key certificate, to which a certificate ID has been previously assigned, in the certificate authority 1104 via the IP network 604 and the reception device 603 can obtain a public key certificate corresponding to a certificate ID from the certificate authority 1104 via the IP network 605.

In the above embodiments, display data of link information is used to display a link information button indicating the link information simultaneously with content. However, for example, when the user has pressed a specific button to set a link destination display mode in which the link destination is directly displayed, a web page of the destination of the link indicated by the link information may be directly displayed simultaneously with the content without displaying the link information button. The link destination display mode may also be automatically set to display the web page of the destination of the link simultaneously with the content.

A meta data access control system and method and a reception device and transmission device using the same according to the present invention are useful for a broadcast system or a content distribution system that uses meta data. The present invention can also be applied to a broadcast system or a content distribution system that uses access of structured document information, such as BML, HTML, or SMIL, to content.

As is apparent from the above description, the present invention provides a system and method which ensures that a method for the receiving device (or receiving terminal) to use content is controlled according to access control information in which a content use condition intended by the content provider is written. That is, the present invention ensures that content is used according to its use condition intended by the content provider, thereby maintaining the right of the content provider.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A content receiver comprising:
a meta data verifier that obtains and specifies meta data in which at least control information of a content is written;
a content verifier that obtains and specifies a content;
a meta data access control information verifier that securely obtains and specifies meta data access control information in which association of information specifying meta data with information specifying content is written;
a meta data determinator that determines whether or not the meta data is permitted to be used to control the content, using the information specifying the content and the information specifying the meta data and based on the meta data access control information; and
content using means that allows use of the content using the meta data according to the determination of the meta data determinator.

2. The content receiver according to claim 1, wherein, if the information specifying the content is provider information of the content, the information specifying the meta data access control information is provider information of the meta data access control information, and provider information of the content specified by the content verifier is identical to provider information of the meta data access control information specified by the meta data access control information verifier,
and if association between the information specifying the content to be controlled and the information specifying the meta data, in which control information of the content is written, is written in the meta data access control information,
the meta data determinator determines whether or not the meta data is permitted to be used to control the content.

3. The content receiver according to claim 1, wherein the meta data verifier obtains meta data transmitted via a broadcast route or an encrypted broadcast route.

4. The content receiver according to claim 3, wherein the meta data verifier specifies the meta data using information written in the meta data.

5. The content receiver according to claim 3, wherein the meta data verifier specifies the meta data using information that is combined with the meta data through a digital watermark.

6. The content receiver according to claim 3, wherein the meta data verifier specifies the meta data using information in which a transmission route attribute is written and which is transmitted separately from the meta data via the broadcast route.

7. The content receiver according to claim 1, wherein the meta data verifier obtains the meta data transmitted through encrypted bidirectional communication and specifies the meta data using information written in the meta data.

8. The content receiver according to claim 1, wherein the meta data verifier obtains the meta data transmitted through encrypted bidirectional communication and specifies the meta data using a server certificate, which has been used for the encrypted bidirectional communication, or using information written in the server certificate.

9. The content receiver according to claim 1, wherein the meta data verifier obtains encrypted meta data and decrypts the encrypted meta data using a decryption key included in license information that can be decrypted only by a key unique to a receiver, and specifies the meta data using information written in the decrypted meta data.

10. The content receiver according to claim 2, wherein the meta data verifier specifies meta data using meta data provider information or a unique meta data identifier.

11. The content receiver according to claim 1, wherein the meta data verifier specifies meta data using a certificate that can verify a signature applied to the meta data or using information written in the certificate.

12. The content receiver according to claim 11, wherein the information written in the certificate is a unique certificate identifier, a unique holder identifier, or a unique holder name.

13. The content receiver according to claim 1, wherein the content verifier obtains a content transmitted via a broadcast route and specifies the content using information which specifies the content and which is transmitted separately from the content via the broadcast route.

14. The content receiver according to claim 13, wherein the information specifying the content is a unique content identifier or content provider information.

15. The content receiver according to claim 1, wherein the content verifier obtains the content transmitted via an encrypted broadcast route and specifies the content using information included in license information which can be decrypted only by a key unique to the reception device, the license information including a key for decrypting the content.

16. The content receiver according to claim 15, wherein the information specifying the content is a unique content identifier, content provider information, or a content key for decrypting the content.

17. The content receiver according to claim 1, wherein the content verifier specifies a content using information that is combined with the content.

18. The content receiver according to claim 17, wherein, when the content is a multipart content which integrates a plurality of parts, the information combined with the content is information that is included in one of the plurality of parts of the content.

19. The content receiver according to claim 17, wherein the information combined with the content is information that is embedded into the content through a digital watermark.

20. The content receiver according to claim 17, wherein the information combined with the content is information that is written in a content data header of the content.

21. The content receiver according to claim 17, wherein the information specifying the content is a unique content identifier or content provider information.

22. The content receiver according to claim 1, wherein the content verifier obtains a content transmitted through encrypted bidirectional communication and specifies the content using a server certificate, which has been used for the encrypted bidirectional communication, or using information written in the server certificate.

23. The content receiver according to claim 1, wherein the content verifier obtains an encrypted content and decrypts the encrypted content using a decryption key included in license information which can be decrypted only by a key unique to a receiver, and specifies the content using information written in the license information.

24. The content receiver according to claim 23, wherein the content verifier specifies a content using content provider information, a unique content identifier, or the decryption key.

25. The content receiver according to claim 1, wherein the content verifier specifies a content using a certificate that can verify a signature applied to the content or using information written in the certificate.

26. The content receiver according to claim 25, wherein the information written in the certificate is a unique certificate identifier, a unique holder identifier, or a unique holder name.

27. The content receiver according to claim 1, wherein the meta data access control information verifier obtains meta data access control information transmitted via a broadcast route or an encrypted broadcast route and specifies provider information of the meta data access control information using information transmitted via the same transmission route as the broadcast route of the meta data access control information.

28. The content receiver according to claim 27, wherein the meta data access control information verifier specifies the provider information of the meta data access control information using information written in the meta data access control information.

29. The content receiver according to claim 27, wherein the meta data access control information verifier specifies the provider information of the meta data access control information using information in which a transmission route attribute is written and which is transmitted separately from the meta data access control information via the broadcast route.

30. The content receiver according to claim 1, wherein the meta data access control information verifier obtains meta data access control information transmitted via an encrypted broadcast route and specifies provider information of the meta data access control information using information included in license information which can be decrypted by a key unique to a receiver, the license information including a key for decrypting the meta data access control information.

31. The content receiver according to claim 1, wherein the content verifier obtains the content transmitted via an encrypted broadcast route and the meta data access control information verifier specifies provider information of the meta data access control information using information included in license information which can be decrypted by a key unique to a receiver, the license information including a key for decrypting the content.

32. The content receiver according to claim 1, wherein the content verifier obtains the content transmitted via an encrypted broadcast route and the meta data access control information verifier obtains meta data access control information written in information included in license information which can be decrypted by a key unique to a receiver, the license information including a key for decrypting the content.

33. The content receiver according to claim 1, wherein the meta data access control information verifier obtains the meta data access control information transmitted through encrypted bidirectional communication with a provider specified by provider information that is maintained as trusted provider information in a receiver, and specifies provider information of the meta data access control information using the provider information maintained in the receiver.

34. The content receiver according to claim 1, wherein the content verifier obtains an encrypted content, and the meta data access control information verifier obtains meta data access control information written in information included in license information which can be decrypted only by a key unique to a receiver, the license information including a description key of the content.

35. The content receiver according to claim 34, wherein the meta data access control information includes association between information specifying the meta data and the decryption key of the content.

36. The content receiver according to claim 1, wherein the meta data access control information verifier obtains meta data access control information combined with the content.

37. The content receiver according to claim 36, wherein, when the content is a multipart content which integrates a plurality of parts, the information combined with the content is information that is included in one of the plurality of parts of the content.

38. The content receiver according to claim 36, wherein the information combined with the content is information that is embedded into the content through a digital watermark.

39. The content receiver according to claim 1, wherein the meta data access control information verifier associates a content with meta data by obtaining and using meta data access control information transmitted in a time zone, in which the content is transmitted, via the same transmission route as that of the content.

40. The content receiver according to claim 39, wherein the meta data access control information is a certificate which specifies meta data or information which specifies meta data and is written in the certificate.

41. The content receiver according to claim 40, wherein the information written in the certificate is a unique certificate identifier, a unique holder identifier, or a unique holder name.

42. The content receiver according to claim 1, wherein the meta data includes at least playback control information of content and the use of the content is playback of the a content according to the playback control information written in the meta data.

43. The content receiver according to claim 42, wherein the playback control information is segment meta data and segment group meta data, and the use of the content is playback control of the content according to the segment meta data and the segment group meta data.

44. The content receiver according to claim 1, wherein the meta data includes at least storage control information of a content and the use of the content is storage of the content according to the storage control information.

45. The content receiver according to claim 1, wherein the meta data includes at least storage control information of a content and playback control information of the content that has been subjected to storage control, and the use of the content is storage of the content according to the storage control information and playback control thereof when the content is played back.

46. The content receiver according to claim 45, wherein the playback control information is information that allows playback of the content except during a period of time between specific start and end times every day.

47. The content receiver according to claim 45, wherein the playback control information is information that allows playback that prohibits skipping of commercials included in the content during playback of the content.

48. The content receiver according to claim 45, wherein the playback control information is information that allows playback of the content only for a specific period of time after the content is obtained.

49. The content receiver according to claim 1, wherein the meta data includes at least link information, which allows screen change to different information when the content is played back, and the use of the content is screen change to the different information when the content is played back, according to the link information.

50. The content receiver according to claim 1, wherein the meta data includes at least link information, which allows screen change to different information when the content is played back, and the use of the content is display of the link information when the content is played back, according to the link information.

51. The content receiver according to claim 50, wherein the display of the link information includes at least display of data referred to by information written in the link information.

52. The content receiver according to claim 50, wherein the link information is information of the content.

53. The content receiver according to claim 50, wherein the link information is transmitted via a different transmission route from that of the content.

54. The content receiver according to claim 50, wherein the link information has still or moving image data that is used to display the link information.

55. A meta data access control method comprising:
verifying received meta data in which at least control information of a content is written;
verifying a content;
verifying meta data access control information which defines a relationship between a source of a content and a publisher of meta data and controls access of the meta data to the content; and
determining whether or not the meta data is permitted to control the content, based on a result of the verification of the meta data, a result of the verification of the meta data access control information, a result of the verification of the content, and contents of the meta data access control information.

56. The meta data access control method according to claim 55, wherein determining whether or not the meta data is permitted to control the content includes determining that the meta data has been authorized by the source of the content if it is confirmed that the source of the content is identical to a publisher of the meta data access control information and it is determined based on the meta data access control information that the meta data is permitted to control the content.

57. The meta data access control method according to claim 55, wherein determining whether or not the meta data is permitted to control the content includes determining that the meta data has been authorized by the source of the content if it is confirmed that a publisher of the meta data access control information is trusted by the source of the content.

58. A meta data access control system comprising:
a meta data transmission device including a meta data generator and a meta data verification information adder, the meta data generator generating meta data in which at least control information of a content is written, the meta data verification information adder adding verification information to the meta data, the verification information allowing reception devices to verify a publisher of the meta data or identification information of the meta data;
a meta data access control information transmission device including a meta data access control information generator and a meta data access control information verification information adder, the meta data access control information generator generating meta data access control information that defines a relationship between a content and meta data to describe whether or not the meta data is permitted to control the content, the meta data access control information verification information adder adding verification information to the meta data access control information, the verification information allowing reception devices to verify at least one of identification information of the meta data access control information, publisher information thereof, and information of a source from which the meta data access control information has been obtained;
a content transmission device including a content generator that generates a content and a content verification information adder that adds verification information to the content, the verification information allowing reception devices to verify at least one of identification information of the content, publisher information thereof, and information of a source from which the content has been obtained; and
a content receiver including a meta data verifier that verifies the meta data, a meta data access control information verifier that verifies the meta data access control information, a content verifier that verifies the content, and a meta data determinator that determines whether or not the meta data can be used, based on a result of the verification of the meta data, a result of the verification of the content, and the meta data access control information.

59. The meta data access control system according to claim 58, wherein, when it is confirmed that a source of the content is identical to a publisher of the meta data access control information and it is also determined, based on the meta data access control information, that the meta data is permitted to access the content, the meta data determinator of the content receiver determines that the meta data has been authorized by the source of the content.

60. The meta data access control system according to claim 58, wherein, when it is confirmed that a publisher of the meta data access control information is trusted by a source of the content and it is also determined, based on the meta data access control information, that the meta data is permitted to access the content, the meta data determinator of the content receiver determines that the meta data has been authorized by the source of the content.

61. A meta data access control system comprising:
a meta data transmission device including a meta data generator that generates meta data and a meta data access control information verification information adder that adds verification information to the meta data, the verification information allowing reception devices to verify meta data access control information that defines a relationship between a source of a content and a publisher of meta data to describe whether or not the meta data is permitted to control the content;
a content transmission device including a content generator that generates a content and a content verification information adder that adds verification information to the content, the verification information allowing reception devices to verify a content; and
a content receiver including a meta data access control information verifier that verifies the meta data access control information, a content verifier that verifies the content, and a meta data determinator that determines whether or not the meta data can be used, based on a result of the verification of the meta data access control information, a result of the verification of the content, and the meta data access control information.

62. A meta data access control system comprising:
a meta data transmission device including a meta data generator that generates meta data and a meta data verification information adder that adds verification information to the meta data, the verification information allowing reception devices to verify meta data;
a content transmission device including a content generator that generates a content, a meta data access control information generator that generates meta data access control information that defines a relationship between a source of a content and a publisher of meta data to control access of the meta data to the content, and a meta data access control information verification information adder that incorporates the meta data access control information into the content; and
a content receiver including a content verifier that verifies a content and a meta data determinator that determines whether or not the meta data is allowed to control the content, based on a result of the verification of the meta data, a result of verification of content, and the meta data access control information.
